# EUROPÄISCHE PATENTANMELDUNG

(11) **EP 3 240 088 A1**
(43) Veröffentlichungstag der Anmeldung: **01.11.2017**
(21) Anmeldenummer: 17167516.8
(22) Anmeldetag: 21.04.2017
(51) Int. Cl.: H01M 10/0525, H01M 10/0565

(54) **VERFAHREN ZUR HERSTELLUNG EINES EINZELIONENLEITENDEN LITHIUM-POLYELEKTROLYTEN**

(30) Priorität: 26.04.2016 DE 102016207081
(71) Anmelder: Robert Bosch GmbH, 70442 Stuttgart (DE)
(72) Erfinder: Thielen, Joerg, 70195 Stuttgart (DE); Wiemhoefer, Hans-Dieter, 48161 Münster (DE); Gruenebaum, Mariano, 59394 Nordkirchen (DE); Joost, Mario, 71229 Leonberg (DE); Guenther, Christina, 48149 Münster (DE)

(57) **Zusammenfassung**

Die vorliegende Erfindung betrifft ein Verfahren zur Herstellung eines Polymerelektrolyten, beispielsweise für eine Lithium-Zelle. Um eine Vielzahl von Polymerelektrolyten, insbesondere einzelionenleitenden Lithium-Polyelektrolyten, auf schnelle, einfache und kostengünstige Weise zur Verfügung zu stellen, wird in dem Verfahren ein lithüertes Polymer zumindest teilweise mit mindestens einer elektrophilen Verbindung umgesetzt. Darüber hinaus betrifft die Erfindung entsprechende Polymerelektrolyte, insbesondere einzelionenleitende Lithium-Polyelektrolyte, eine entsprechende Lithium-Zelle, Kathode, Anode und Schutzschicht sowie einen entsprechenden Separator.

## Beschreibung

Die vorliegende Erfindung betrifft ein Verfahren zur Herstellung eines Polymerelektrolyten, insbesondere eines einzelionenleitenden Lithium-Polyelektrolyten, sowie entsprechende Polymerelektrolyte, insbesondere einzelionenleitende Lithium-Polyelektrolyte, eine entsprechende Lithium-Zelle, Kathode, Anode und Schutzschicht sowie einen entsprechenden Separator.

### Stand der Technik

Lithium-Zellen umfassen eine Kathode, eine Anode und einen Separator. Die Kathode und die Anode sind dabei, insbesondere über Stromkollektoren zur Ab-und Zuleitung von elektrischem Strom über einen externen Stromkreis elektrisch leitend miteinander verbindbar. In der Zelle, insbesondere zwischen der Kathode und der Anode, wird der Stromkreis über mindestens einen Elektrolyten geschlossen. Meistens werden Flüssigelektrolyte aus einem flüssigen Lösungsmittel, in dem ein Leitsalz gelöst ist, eingesetzt.

Manche Batteriezellen weisen anstatt eines Flüssigelektrolyten einen Polymerelektrolyten auf der Basis eines Polymers mit einem darin gelösten Leitsalz auf. Um die Leitfähigkeit zu erhöhen, kann Polymerelektrolyten ein flüssiges Lösungsmittel zugemischt werden, wodurch ein Polymer-Gel-Elektrolyt gebildet werden kann.

### Offenbarung der Erfindung

Gegenstand der Erfindung ist ein Verfahren zur Herstellung eines Polymerelektrolyten, insbesondere eines einzelionenleitenden Lithium-Polyelektrolyten. Das Verfahren kann insbesondere zur Herstellung eines Polymerelektrolyten, insbesondere eines einzelionenleitenden Lithium-Polyelektrolyten, für eine Lithium-Zelle, beispielsweise für eine Lithium-Ionen-Zelle und/oder Lithium-Metall-Zelle und/oder Lithium-Schwefel-Zelle, ausgelegt sein. Beispielsweise kann das Verfahren zur Herstellung eines Polymerelektrolyten, insbesondere eines einzelionenleitenden Lithium-Polyelektrolyten, für eine Feststoffzelle, insbesondere eine Lithium-Feststoffzelle, ausgelegt sein.

In dem Verfahren wird insbesondere ein lithiiertes Polymer zumindest teilweise mit mindestens einer elektrophilen Verbindung umgesetzt.

Unter einer lithiierten Verbindung, beispielsweise einem lithiierten Polymer, kann insbesondere eine Verbindung, beispielsweise ein Polymer, verstanden werden, welche/s Lithium umfasst. Insbesondere kann das lithiierte Polymer mindestens ein zumindest überwiegend kovalent angebundenes Lithiumatom umfassen.

Unter einer elektrophilen Verbindung kann insbesondere eine Verbindung verstanden werden, welche mindestens ein elektrophiles, insbesondere partiell positiv geladenes, Atom, zum Beispiel ein Boratom oder ein Carbonylkohlenstoffatom oder ein elektrophiles, insbesondere partiell positiv geladenes, Kohlenstoffatom eines lithiumionenleitfähigen Substituenten mit einer nukleofugen Abgangsgruppe, umfasst.

Zum Beispiel kann die mindestens eine elektrophile Verbindung eine elektrophile Verbindung mit mindestens einem reduzierbaren, elektrophilen, insbesondere partiell positiv geladenen, Atom, zum Beispiel ein Bortrihalogenid, wie Bortrifluorid, und/oder eine Carbonylverbindung, wie Aceton, und/oder ein lithiumionenleitfähiger Substituent, insbesondere mit einem elektrophilen, beispielsweise partiell positiv geladenen, Kohlenstoffatom, mit einer nukleofugen Abgangsgruppe, wie methylterminiertes Polyethylenglycol-Tosylat (Ts-PEG), umfassen oder sein.

Unter einer nukleofugen Abgangsgruppe kann insbesondere eine Abgangsgruppe verstanden werden, welche bei einer Abspaltung das bindende Elektronenpaar mitnimmt. Eine nukleofuge Abgangsgruppe kann zum Beispiel eine Tosylat-Gruppe sein.

Unter einem lithiumionenleitfähigen Stoff, zum Beispiel einem lithiumionenleitfähigen Substituenten beziehungsweise einem lithiumionenleitfähigen Polymer beziehungsweise einer lithiumionenleitfähigen Wiederholungseinheit, kann insbesondere ein Stoff verstanden werden, welcher selbst frei von den zu leitenden Lithiumionen sein kann, jedoch dazu ausgelegt ist, die zu leitenden Lithiumionen zu koordinieren und/oder solvatisieren und/oder Gegenionen der zu leitenden Lithiumionen, zum Beispiel Lithium-Leitsalz-Anionen, zu koordinieren und beispielsweise in Gegenwart beziehungsweise unter Zugabe der zu leitenden Lithiumionen, zum Beispiel in Form eines einzelionenleitenden Lithium-Polyelektrolyten und/oder eines Lithium-Leitsalzes, lithiumionenleitend wird.

Unter einem einzelionenleitenden Lithium-Polyelektrolyten kann insbesondere ein Polymer verstanden werden, welches kovalent an den Polymerrücken des Polymers angebundene Anionen und, insbesondere mobile, Lithiumionen aufweist. Derartige Polymere können auch als Lithium-Einzelionenleiter, insbesondere polymere Lithium-Einzelionenleiter beziehungsweise Lithium-Einzelionenleiter auf Polymerbasis, bezeichnet werden.

Insofern die mindestens eine elektrophile Verbindung mindestens ein reduzierbares, elektrophiles, insbesondere partiell positiv geladenes, Atom umfasst, kann insbesondere das elektrophile Atom kovalent an das Polymer, insbesondere an ein vormals mit einem Lithiumatom lithiiertes Atom des Polymers, angebunden werden, wobei die mindestens eine elektrophile Verbindung reduziert wird und eine negative Ladung (Anion) annimmt. So kann vorteilhafterweise ein einzelionenleitender Lithium-Polyelektrolyt hergestellt werden, welcher kovalent an den Polymerrücken des Polymers angebundene Anionen und, insbesondere mobile, Lithiumionen aufweist. Einzelionenleitende Lithium-Polyelektrolyte können vorteilhafterweise bereits als solche - insbesondere ohne Zugabe eines Lithium-Leitsalzes - als Polymerelektrolyte, insbesondere für Lithium-Zellen, eingesetzt werden.

Insofern die mindestens eine elektrophile Verbindung ein elektrophiles, insbesondere partiell positiv geladenes, Kohlenstoffatom eines lithiumionenleitfähigen Substituenten mit einer nukleofugen Abgangsgruppe umfasst, kann insbesondere das elektrophile Kohlenstoffatom des lithiumionenleitfähigen Substituenten kovalent an das Polymer, insbesondere an ein vormals mit einem Lithiumatom lithiiertes Atom des Polymers, angebunden werden. Das Lithiumatom kann dabei mit der Abgangsgruppe kombinieren und dadurch gegebenenfalls entzogen werden. So kann zumindest ein Polymer hergestellt werden, welches einen kovalent an den Polymerrücken des Polymers angebundenen lithiumionenleitfähige Substituenten aufweist. Derartige Polymere können in Kombination mit einem einzelionenleitenden Lithium-Polyelektrolyten und/oder einem Lithium-Leitsalz als Polymerelektrolyte, insbesondere für Lithium-Zellen, eingesetzt werden.

Zum Beispiel kann durch Umsetzung eines lithiierten Polymers, dessen Polymerrücken aus einem Polystyrol beziehungsweise einem lithiierten phenyl-substituierten Polyethylenoxid ausgebildet ist, mit Bortrifluorid ein einzelionenleitender Lithium-Polyelektrolyt der Formel: 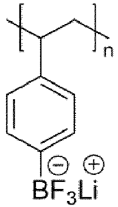 beziehungsweise 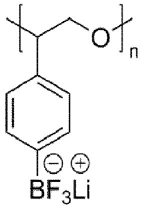 ausgebildet werden. Dabei wird das Lithium-Trifluorborat-Anion insbesondere direkt an den Phenylring angebunden.

Zum Beispiel kann dadurch, dass ein lithiiertes Polymer, dessen Polymerrücken aus einem Polystyrol beziehungsweise einem lithiierten phenyl-substituierten Polyethylenoxid ausgebildet ist, zunächst mit Aceton und dann mit Bortrifluorid umgesetzt wird, ein einzelionenleitender Lithium-Polyelektrolyt der Formel: 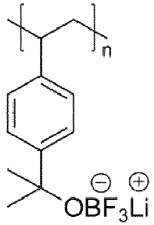 beziehungsweise 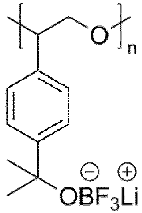 ausgebildet werden. Dabei wird das Lithium-Trifluorborat-Anion insbesondere über eine Alkylenoxidgruppe, insbesondere Methylenoxidgruppe, an den Phenylring angebunden.

Unter einer Methylenoxidgruppe kann insbesondere eine verbrückende Gruppe mit einer verbrückenden Kette verstanden werden, deren verbrückende Kette ein einziges Kohlenstoffatom (-CR1R2-) und ein Sauerstoffatom (-O-) umfasst beziehungsweise daraus ausgebildet wird. Insbesondere kann eine Methylenoxidgruppe die allgemeine chemische Formel: -CR1R2-O- aufweisen. Das Kohlenstoffatom (-CR1R2-) der verbrückenden Kette der Methylenoxidgruppe kann dabei sowohl unsubstituiert (R1,R2 = H) als auch insbesondere substituiert, beispielsweise mit einer oder zwei Alkylgruppe/n, zum Beispiel Methylgruppe/n, (R1 und/oder R2 = Alkyl, zum Beispiel Methyl), sein.

Durch das Verfahren kann vorteilhafterweise eine Vielzahl von Polymerelektrolyten, insbesondere für Lithium-Zellen, über eine kurze und sichere Syntheseroute, insbesondere mit wenigen Syntheseschritten, - und insbesondere aus preiswerten und kommerziell gut verfügbaren Edukten - hergestellt werden. Dabei kann zudem vorteilhafterweise auf aufwendige Aufreinigungsschritte verzichtet werden.

Das Verfahren hat insbesondere den Vorteil, dass dieses mittels eines - im Folgenden erläuterten Baukastenprinzips, insbesondere auf Basis von polymeranalogen Umsetzungen, das heißt Modifizierungen am Polymerrückgrat selbst, - eine Vielzahl von Strukturierungs- beziehungsweise Modifizierungsmöglichkeit bietet und es insbesondere erlaubt in kurzer Zeit eine Reihe von verschiedenen Polymeren zugänglich zu machen. Wie im Folgenden erläutert können in dem Verfahren - zum Beispiel durch eine simple Variation von Reihenfolge und Verhältnissen gleicher Reaktionskomponenten - physikalische Eigenschaften, wie Viskosität, ionische Leitfähigkeit, mechanische Stabilität und/oder technische Verarbeitbarkeit, sowie insbesondere auch der Gehalt an Lithiumionen innerhalb eines Polyelektrolyten auf schnelle und einfache Weise eingestellt werden.

Besonders vorteilhaft ist dabei zudem, dass das Verfahren - auch bei mehreren Syntheseschritten - in einem Reaktionsbehälter durchgeführt werden kann (One-Pot-Reaktion).

Insgesamt kann daher durch das Verfahren vorteilhafterweise eine Vielzahl von Polymerelektrolyten, insbesondere für Lithium-Zellen, beispielsweise auf Festelektrolyt-Basis, auf schnelle, einfache und kostengünstige Weise zur Verfügung gestellt werde.

Durch die Verwendung von Polymerelektrolyten in Lithium-Zellen kann vorteilhafterweise eine erhöhte thermische Stabilität und damit eine erhöhte Lebensdauer und/oder eine erhöhte Sicherheit der Zellen erzielt werden.

Besonders vorteilhaft ist, dass durch das Verfahren insbesondere eine Vielzahl von einzelionenleitenden Lithium-Polyelektrolyten hergestellt werden kann.

Durch einzelionenleitende Lithium-Polyelektrolyte können vorteilhafterweise - insbesondere da die Anionen kovalent an das Polymer angebunden sind - extreme Konzentrationsgefälle, welche bei einer Applikation von hohen Stromdichten über längere Zeiträume bei klassischen Flüssigelektrolyten auftreten und zu hohen, die erreichbare Stromdichte begrenzenden Überspannungen führen können, zumindest minimiert oder vermieden werden. Durch eine Minimierung beziehungsweise Vermeidung von extremen Konzentrationsgefällen kann insbesondere zum einen vermieden werden, dass Bereiche an Leitsalz verarmen, was zu einer starken Verminderung der elektrochemischen Kinetik und damit zu einer Erhöhung der kinetischen Überspannungen sowie zu einer Bevorzugung unerwünschter elektrochemischer Nebenreaktionen und gegebenenfalls sogar zur Zellschädigung führen könnte. Zum anderen kann so insbesondere vermieden werden, dass in Bereichen sehr hoher Salzkonzentration Leitsalz ausfällt, was zu einer Blockierung von Poren und gegebenenfalls sogar zu einer Reduzierung der lokale Leitfähigkeit um mehrere Größenordnungen führen könnte. So können vorteilhafterweise hohe Stromdichten auch über lange Zeiten beziehungsweise große Δ-SOC-Bereiche, insbesondere für eine Konstant-Hochstrombelastung, zum Beispiel von 3C oder höher, in Lade- und Entladerichtung, aufrechterhalten und insbesondere auch ein schnelles Laden der Zelle realisiert werden.

Zudem könne einzelionenleitende Lithium-Polyelektrolyte - verglichen mit den üblicherweise verwendeten Polymerelektrolyten, beispielsweise auf Basis von Polyethylenoxid/Salzmischungen, welche eine elektrochemische Stabilität deutlich unter 4 V gegenüber Lithium-Metall aufweisen - vorteilhafterweise eine höhere elektrochemische Stabilität aufweisen. Dies kann insbesondere für deren Einsatz als Elektrolyt in der Kathode (Katholyt) relevant sein, insbesondere wenn deren gesamte Kapazität genutzt werden soll, da viele bekannte Interkalationsverbindungen, wie Nickel-Cobalt-Aluminium-Oxid (NCA), Nickel-Cobalt-Mangan-Oxid (NCM), Hochenergie-Nickel-Cobalt-Mangan-Oxid (HE-NCM), Lithium-Mangan-Oxid (LMO) und/oder Hochvoltspinelle (HV-LMO), die als Kathodenmaterial Verwendung finden und aufgrund ihrer Eigenschaften für Zellen mit hohen Energiedichten prädestiniert sind beziehungsweise aufgrund der im Vergleich zu Lithium-Schwefel-basierten Zellen einen für das Batteriemanagementsystem vorteilhaftere vergleichsweise höhere mittlere Lade/Entladespannung aufweisen, im delithiierten Zustand Potentiale > 4 V aufweisen.

Insgesamt können daher durch einzelionenleitende Lithium-Polyelektrolyte vorteilhafterweise Lithium-Zellen, insbesondere auf Festelektrolyt-Basis, bereitgestellt werden, welche hochratenfähig und/oder hochvoltstabil sind und insbesondere auch in Elektrofahrzeugen eingesetzt werden können.

Die mindestens eine elektrophile Verbindung kann insbesondere mindestens ein Bortrihalogenid und/oder mindestens eine Carbonylverbindung und/oder mindestens einen lithiumionenleitfähigen Substituenten, insbesondere mit einem elektrophilen, beispielsweise partiell positiv geladenen, Kohlenstoffatom, mit einer nukleofugen Abgangsgruppe, insbesondere an dem elektrophilen Kohlenstoffatom, umfassen.

Im Rahmen einer Ausführungsform wird in dem Verfahren ein lithiiertes Polymer beziehungsweise das lithiierte Polymer zumindest teilweise, beispielsweise teilweise oder vollständig, mit mindestens einem Bortrihalogenid und/oder zumindest teilweise, beispielsweise teilweise oder vollständig, mit mindestens einer Carbonylverbindung und/oder zumindest teilweise, beispielsweise teilweise oder vollständig, mit mindestens einem lithiumionenleitfähigen Substituenten, insbesondere mit einem elektrophilen, beispielsweise partiell positiv geladenen, Kohlenstoffatom, mit einer nukleofugen Abgangsgruppe, insbesondere an dem elektrophilen Kohlenstoffatom, umgesetzt. Insbesondere kann das lithiierte Polymer zumindest teilweise, beispielsweise teilweise oder vollständig, mit mindestens einem Bortrihalogenid, insbesondere Bortrifluorid, umgesetzt werden.

Im Rahmen einer Ausgestaltung umfasst oder ist das mindestens eine Bortrihalogenid Bortrifluorid.

Im Rahmen einer weiteren Ausgestaltung umfasst oder ist die mindestens eine Carbonylverbindung ein Keton und/oder Aldehyd, insbesondere ein Keton. Insbesondere kann die mindestens eine Carbonylverbindung ein Keton, insbesondere Aceton, umfassen oder sein.

Im Rahmen einer weiteren Ausgestaltung umfasst oder ist der mindestens eine lithiumionenleitfähige Substituent mit einer nukleofugen Abgangsgruppe, insbesondere als lithiumionenleitfähige Komponente, mindestens eine, beispielsweise eingebundene oder endständige, Carbonsäureestergruppe, zum Beispiel eine acyclische oder cyclische Carbonatgruppe und/oder Estergruppe und/oder Lactongruppe, insbesondere eine acyclische oder cyclische Carbonatgruppe, und/oder mindestens eine Alkylenoxidgruppe, beispielsweise eine Ethylenoxidgruppe, insbesondere eine Oligo- oder Polyalkylenoxidgruppe, beispielsweise eine Oligo- oder Polyethylenoxidgruppe, und/oder mindestens eine Polysiloxangruppe. So kann vorteilhafterweise die Lithiumionenmobilität und dadurch die Lithiumionenleitfähigkeit verbessert werden.

Carbonsäureestergruppen, wie acyclische oder cyclische Carbonatgruppen und/oder Estergruppen und/oder Lactongruppen, können vorteilhafterweise kathodisch stabiler als Alkylenoxidgruppen, wie Ethylenoxid, sein. EthylenoxidEinheiten können sich beispielsweise schon bei Spannungen unter 4,0 V zersetzen, wohingegen Carbonatgruppen bis über 4,2 V stabil sein können. Daher kann durch mindestens eine Carbonsäureestergruppe, zum Beispiel eine acyclische oder cyclische Carbonatgruppe und/oder Estergruppe und/oder Lactongruppe, vorteilhafterweise eine höhere Hochvoltstabilität, insbesondere hin zu höheren Spannungen, des gesamten Polymers erzielt werden als durch mindestens eine Alkylenoxidgruppe, zum Beispiel Polyetherseitenkette. Dies kann insbesondere im Fall einer Anwendung als Katholyt mit Kathodenaktivmaterialien, wie Nickel-Cobalt-Aluminium-Oxid (NCA), vorteilhaft sein. Der mindestens eine lithiumionenleitfähige Substituent mit einer nukleofugen Abgangsgruppe kann daher insbesondere mindestens eine, beispielsweise eingebundene oder endständige, Carbonsäureestergruppe, zum Beispiel eine acyclische oder cyclische Carbonatgruppe und/oder Estergruppe und/oder Lactongruppe, insbesondere eine acyclische oder cyclische Carbonatgruppe, umfassen. Gegebenenfalls kann der mindestens eine lithiumionenleitfähige Substituent mit einer nukleofugen Abgangsgruppe mindestens eine oder auch mehrere derartige Gruppen umfassen, und zum Beispiel ein Mono-, Oligo- oder Polycarbonat sein.

Der mindestens eine lithiumionenleitfähige Substituent mit einer nukleofugen Abgangsgruppe kann jedoch beispielsweise auch mindestens eine Carbonsäureestergruppe, zum Beispiel eine acyclische oder cyclische Carbonatgruppe und/oder Estergruppe und/oder Lactongruppe, insbesondere eine acyclische oder cyclische Carbonatgruppe, und mindestens eine Alkylenoxidgruppe, beispielsweise eine Ethylenoxidgruppe, insbesondere eine Oligo- oder Polyalkylenoxidgruppe, beispielsweise eine Oligo- oder Polyethylenoxidgruppe, umfassen. Dabei kann die mindestens eine Carbonsäureestergruppe insbesondere eine endständige cyclische Carbonatgruppe und/oder Lactongruppe und/oder eine eingebundene acyclische Carbonatgruppe und/oder Estergruppe umfassen oder sein.

Weiterhin kann der mindestens eine lithiumionenleitfähige Substituent mit einer nukleofugen Abgangsgruppe gegebenenfalls mindestens eine Alkylengruppe, beispielsweise eine Methylengruppe und/oder Ethylengruppe und/oder Propylengruppe, und/oder beispielsweise mindestens eine, beispielsweise endständige, Alkylgruppe, zum Beispiel Methylgruppe, umfassen.

Zum Beispiel kann der mindestens eine lithiumionenleitfähige Substituent mit einer nukleofugen Abgangsgruppe ein, insbesondere alkylterminiertes, beispielsweise methylterminiertes, Poly(alkylencarbonat), beispielsweise der allgemeinen chemischen Formel: -(O-C=O-O-CH₂-CH₂-CH₂)ₚ-CH₃, und/oder ein, insbesondere alkylterminiertes, beispielsweise methylterminiertes, Oligo- oder Polyethylenoxid, insbesondere Polyethylenglycol, beispielsweise der Formel - (CH₂-CH₂-O)ₚ-CH₃, umfassen.

Die nukleofuge Abgangsgruppe kann zum Beispiel eine Tosylatgruppe umfassen oder sein. Eine Tosylatgruppe hat sich als Abgangsgruppe als besonders vorteilhaft erwiesen.

Zum Beispiel kann der mindestens eine lithiumionenleitfähige Substituent mit einer nukleofugen Abgangsgruppe ein Poly(alkylencarbonat)-Tosylat und/oder ein Oligo- oder Polyalkylenoxid-Tosylat, insbesondere ein Oligo- oder Polyethylenoxid-Tosylat, beispielsweise ein Polyethylenglycol-Tosylat, zum Beispiel ein alkylterminiertes, beispielsweise methylterminiertes, Poly(alkylencarbonat)-Tosylat, zum Beispiel der allgemeinen chemischen Formel: C₇H₄-SO₂-(O-C=O-O-CH₂-CH₂-CH₂)ₚ-CH₃, und/oder ein alkylterminiertes, beispielsweise methylterminiertes, Polyethylenglycol-Tosylat, zum Beispiel der allgemeinen Formel: C₇H₄-SO₂-O-(CH₂-CH₂-O)ₚ-CH₃, wie methylterminiertes Polyethylenglycol-Tosylat (Ts-PEG) der chemischen Formel: 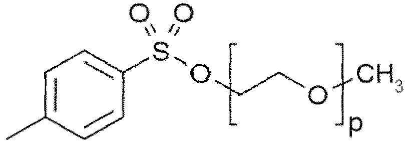 umfassen oder sein.

Durch eine polymeranaloge Umsetzung mit mindestens einem Bortrihalogenid, insbesondere Bortrifluorid, beziehungsweise durch eine dadurch erzielte Modifizierung des Polymerrückrats (selbst) mit einer Lithium-Trihalogenboratgruppe (-BY₃⁻Li⁺), insbesondere Lithium-Trifluorboratgruppe (-BF₃⁻Li⁺) kann vorteilhafterweise die Lithiumionenleitfähigkeit, insbesondere durch eine Bereitstellung von mobilen Lithiumionen (Li⁺) und insbesondere eine Erhöhung der Lithiumionendichte, beeinflusst und lithiumeinzelionenleitende Eigenschaften bereitgestellt werden. So kann durch eine Umsetzung des lithiierten Polymers mit mindestens einem Bortrihalogenid, insbesondere Bortrifluorid, insbesondere ein einzelionenleitender Lithium-Polyelektrolyt mit mindestens einer Lithium-Trihalogenboratgruppe, insbesondere mit mindestens einer Lithium-Trifluorboratgruppe, ausgebildet werden. Dabei kann bei der Umsetzung des lithiierten Polymers mit mindestens einem Bortrihalogenid, insbesondere Bortrifluorid, insbesondere das Boratom kovalent an das Polymer, insbesondere an ein vormals mit einem Lithiumatom lithiiertes Atom des Polymers, angebunden werden und so eine Lithium-Trihalogenboratgruppe, insbesondere Lithium-Trifluorboratgruppe, ausgebildet werden. So kann vorteilhafterweise ein einzelionenleitender Lithium-Polyelektrolyt hergestellt werden, welcher kovalent an den Polymerrücken des Polymers angebundene Trihalogenborat-Anionen, insbesondere Trifluorborat-Anionen, und, insbesondere mobile, Lithiumionen aufweist. Einzelionenleitende Lithium-Polyelektrolyte können vorteilhafterweise bereits als solche - insbesondere ohne Zugabe eines Lithium-Leitsalzes - als Polymerelektrolyte, insbesondere für Lithium-Zellen, eingesetzt werden. So können vorteilhafterweise - aus preiswerten und kommerziell gut verfügbaren Edukten über eine kurze und sichere Syntheseroute und insbesondere ohne aufwendige Aufreinigungsschritte - einzelionenleitende Lithium-Polyelektrolyte hergestellt werden, welche mindestens eine Lithium-Trihalogenboratgruppe, insbesondere Lithium-Trifluorboratgruppe, umfassen. Derartig modifizierte Polymere beziehungsweise Polyelektrolyte können vorteilhafterweise thermisch und elektrochemisch stabil sowie hydrolyseunempfindlich sein. So kann zum Beispiel unter Anderem auch eine Korrosion von Aluminiumstromkollektoren vermieden werden.

Durch eine Umsetzung des lithiierten Polymers mit mindestens einer Carbonylverbindung kann insbesondere ein einzelionenleitender Lithium-Polyelektrolyt oder ein Polymerelektrolyt mit mindestens einer Alkylenoxidgruppe, insbesondere Methylenoxidgruppe, ausgebildet werden. Dabei kann insbesondere der partiell positiv geladene Carbonylkohlenstoff der Carbonylverbindung kovalent an das Polymer, insbesondere an ein vormals mit einem Lithiumatom lithiiertes Atom des Polymers, angebunden werden, wobei die Carbonylverbindung zu einer negativ geladenen Alkylenoxidgruppe, insbesondere Methylenoxidgruppe, reduziert wird und so eine Lithium-Alkanolatgruppe beziehungsweise eine, insbesondere substituierte oder unsubstituierte, Lithium-Methanolatgruppe (-CR1 R2-O-Li⁺) ausgebildet wird. Unter einer Lithium-Methanolatgruppe kann insbesondere eine Lithium-Alkanolatgruppe mit einer Anbindungsstelle sowie einem Sauerstoffion (-O⁻) und einem Lithiumion (Li⁺) verstanden werden, welche zwischen der Anbindungsstelle und dem Sauerstoffion (-O⁻) lediglich ein einziges Kohlenstoffatom (-CR1R2-) aufweist. Insbesondere kann eine Lithium-Methanolatgruppe die allgemeine chemische Formel: -CR1R2-O⁻Li⁺ aufweisen. Das zwischen der Anbindungsstelle und dem Sauerstoffion (-O⁻) angeordnete Kohlenstoffatom (-CR1R2-) der Lithium-Methanolatgruppe kann dabei sowohl unsubstituiert (R1,R2 = H) als auch insbesondere substituiert, beispielsweise mit einer oder zwei Alkylgruppe/n, zum Beispiel Methylgruppe/n, (R1 und/oder R2 = Alkyl, zum Beispiel Methyl) sein.

Beim Einsatz eines Ketons kann die Lithium-Alkanolatgruppe, insbesondere Lithium-Methanolatgruppe, insbesondere zweifach alkylsubstituiert sein. Beim Einsatz von Aceton kann die Lithium-Alkanolatgruppe, insbesondere Lithium-Methanolatgruppe, zum Beispiel zweifach methylsubstituiert sein.

Die Lithium-Alkanolatgruppe beziehungsweise die Lithium-Methanolatgruppe (-CR1R2-O⁻Li⁺) kann bereits selbst einzelionenleitende Eigenschaften zur Ausbildung eines einzelionenleitenden Polyelektrolyten aufweisen.

Zudem kann die Lithium-Alkanolatgruppe beziehungsweise die Lithium-Methanolatgruppe (-CR1 R2-O⁻Li⁺) insbesondere in einem weiteren Verfahrensschritt mit einer weiteren elektrophilen Verbindung, beispielsweise einem Bortrihalogenid, wie Bortrifluorid, und/oder einem lithiumionenleitfähigen Substituenten mit einer nukleofugen Abgangsgruppe, beispielsweise zu einer Lithium-Trihalogenborat-Alkylenoxidgruppe, insbesondere Lithium-Trihalogenborat-Methylenoxidgruppe (-CR1R2-O-BY₃⁻Li⁺), zum Beispiel zu einer Lithium-Trifluorborat-Alkylenoxidgruppe, insbesondere Lithium-Trifluorborat-Methylenoxidgruppe (-CR1 R2-O-BF₃⁻Li⁺), und/oder einer, mit einem lithiumionenleitfähigen Substituenten substituierten Alkylenoxidgruppe, insbesondere Methylenoxidgruppe (-CR1R2-O-R3), umgesetzt werden. Dabei kann die Lithium-Alkanolatgruppe, beispielsweise Lithium-Methanolatgruppe, insbesondere in eine, insbesondere verbrückende, Alkylenoxidgruppe, beispielsweise Methylenoxidgruppe, umgewandelt werden.

Durch eine polymeranaloge Umsetzung mit mindestens einer Carbonylverbindung beziehungsweise durch eine dadurch erzielte Modifizierung des Polymerrückrats (selbst) mit einer Lithium-Alkanolatgruppe beziehungsweise einer, insbesondere substituierten oder unsubstituierten, Lithium-Methanolatgruppe beziehungsweise einer Alkylenoxidgruppe, insbesondere Methylenoxidgruppe, zum Beispiel welche mit mindestens einer Lithium-Trihalogenboratgruppe und/oder mit mindestens einem lithiumionenleitfähigen Substituenten substituiert ist, kann vorteilhafterweise die Lithiumionenleitfähigkeit, insbesondere durch eine Bereitstellung von mobilen Lithiumionen (Li⁺) und insbesondere eine Erhöhung der Lithiumionendichte, beeinflusst und lithiumeinzelionenleitende Eigenschaften bereitgestellt und/oder die Lithiumionenmobilität verbessert und/oder auch die chemische und/oder elektrochemische Stabilität und/oder die mechanische Eigenschaften, wie Viskosität und/oder Elastizität positiv beeinflusst werden.

Durch eine Umsetzung des lithiierten Polymers mit mindestens einem lithiumionenleitfähigen Substituenten mit einer nukleofugen Abgangsgruppe kann insbesondere ein Polymerelektrolyt mit mindestens einem lithiumionenleitfähigen Substituenten ausgebildet werden. Dabei kann beispielsweise das elektrophile Kohlenstoffatom des lithiumionenleitfähigen Substituenten kovalent an das Polymer, insbesondere an ein vormals mit einem Lithiumatom lithiiertes Atom des Polymers, angebunden werden und so ein Polymerelektrolyt mit mindestens einem lithiumionenleitfähigen Substituenten (-R3) ausgebildet werden. Das Lithiumatom kann dabei mit der Abgangsgruppe kombinieren und dadurch gegebenenfalls entzogen werden. Insofern lediglich eine teilweise Umsetzung mit mindestens einem lithiumionenleitfähigen Substituenten mit einer nukleofugen Abgangsgruppe erfolgt und das Polymer im Übrigen, beispielsweise mittels mindestens einer Lithium-Trihalogenboratgruppe, insbesondere Lithium-Trifluorboratgruppe, und/oder Lithium-Alkanolatgruppe beziehungsweise, insbesondere substituierten oder unsubstituierten, Lithium-Methanolatgruppe und/oder Lithium-Trihalogenborat-Alkylenoxidgruppe, insbesondere Lithium-Trihalogenborat-Methylenoxidgruppe, zum Beispiel Lithium-Trifluorborat-Alkylenoxidgruppe, insbesondere Lithium-Trifluorborat-Methylenoxidgruppe, Lithiumionen koordiniert, kann auch dabei ein einzelionenleitender Polyelektrolyt ausgebildet werden.

So können vorteilhafterweise - aus preiswerten und kommerziell gut verfügbaren Edukten über eine kurze und sichere Syntheseroute und insbesondere ohne aufwendige Aufreinigungsschritte - zumindest Polymerelektrolyte, insbesondere jedoch auch einzelionenleitende Lithium-Polyelektrolyte, hergestellt werden, welche mindestens einen lithiumionenleitfähigen Substituenten umfassen.

Durch eine polymeranaloge Umsetzung mit mindestens einem lithiumionenleitfähigen Substituenten mit einer nukleofugen Abgangsgruppe beziehungsweise durch eine dadurch erzielte Modifizierung des Polymerrückrats (selbst) mit einem lithiumionenleitfähigen Substituenten kann vorteilhafterweise die Lithiumionenmobilität und dadurch die ionische Leitfähigkeit verbessert und/oder die chemische und/oder elektrochemische Stabilität und/oder die mechanische Eigenschaften, wie Viskosität und/oder Elastizität, positiv beeinflusst werden.

Eine polymeranaloge Umsetzung mit mindestens einem lithiumionenleitfähigen Substituenten kann sich zudem insbesondere bei einzelionenleitenden Lithium-Polyelektrolyten vorteilhaft auf die Zellfertigung auswirken, da durch eine auf diese Weise erzielte Modifizierung des Polymerrückrats im Vergleich zu reinen einzelionenleitenden Polyelektrolyten, welche insbesondere aufgrund ihrer hohen Raumladung lediglich eine geringe Löslichkeit in hochpolaren Lösungsmitteln aufweisen können, eine höhere Löslichkeit, insbesondere auch in weniger polaren oder unpolaren Lösungsmitteln, erzielt werden kann.

Im Rahmen einer weiteren Ausführungsform wird daher das lithiierte Polymer (zunächst) zumindest teilweise, beispielsweise teilweise oder vollständig, mit der mindestens einen Carbonylverbindung und dann zumindest teilweise, beispielsweise teilweise oder vollständig, mit, beispielsweise einer äquivalenten Menge an, dem mindestens einen Bortrihalogenid, insbesondere Bortrifluorid, und/oder dem mindestens einen lithiumionenleitfähigen Substituenten mit einer nukleofugen Abgangsgruppe umgesetzt.

Im Fall einer weiteren Umsetzung mit einem Bortrihalogenid, wie Bortrifluorid, kann dabei ein einzelionenleitender Polyelektrolyt mit mindestens einer Lithium-Trihalogenborat-Alkylenoxidgruppe, insbesondere Lithium-Trihalogenborat-Methylenoxidgruppe, zum Beispiel Lithium-Trifluorborat-Alkylenoxidgruppe, insbesondere Lithium-Trifluorborat-Methylenoxidgruppe, ausgebildet werden.

Im Fall einer weiteren Umsetzung mit einem lithiumionenleitfähigen Substituenten mit einer nukleofugen Abgangsgruppe kann dabei zumindest ein Polymerelektrolyt mit mindestens einer, mit einem lithiumionenleitfähigen Substituenten substituierten Alkylenoxidgruppe, insbesondere Methylenoxidgruppe, ausgebildet werden.

Insofern lediglich eine teilweise Umsetzung mit mindestens einem lithiumionenleitfähigen Substituenten mit einer nukleofugen Abgangsgruppe erfolgt und das Polymer im Übrigen, beispielsweise mittels mindestens einer Lithium-Trihalogenboratgruppe, insbesondere Lithium-Trifluorboratgruppe und/oder Lithium-Alkanolatgruppe beziehungsweise, insbesondere substituierten oder unsubstituierten, Lithium-Methanolatgruppe und/oder Lithium-Trihalogenborat-Alkylenoxidgruppe, insbesondere Lithium-Trihalogenborat-Methylenoxidgruppe, zum Beispiel Lithium-Trifluorborat-Alkylenoxidgruppe, insbesondere Lithium-Trifluorborat-Methylenoxidgruppe, Lithiumionen koordiniert, kann auch dabei ein einzelionenleitender Polyelektrolyt ausgebildet werden. So können vorteilhafterweise - aus preiswerten und kommerziell gut verfügbaren Edukten über eine kurze und sichere Syntheseroute und insbesondere ohne aufwendige Aufreinigungsschritte - einzelionenleitende Lithium-Polyelektrolyte beziehungsweise Polymerelektrolyte hergestellt werden, welche mindestens eine Alkylenoxidgruppe, insbesondere Methylenoxidgruppe, umfassen.

Wie aus den vorstehenden Erläuterungen bereits ersichtlich, kann in dem Verfahren das zumindest teilweise Umsetzen des lithiierten Polymers mit mindestens einer elektrophilen Verbindung insbesondere in mindestens einem, beispielsweise jedoch auch in mehreren Verfahrensschritten, insbesondere a), erfolgen.

Im Rahmen einer einfachen Ausführungsform kann das Verfahren lediglich einen Verfahrensschritt a), in dem das lithiierte Polymer zumindest teilweise, beispielsweise teilweise oder vollständig, mit einer elektrophilen Verbindung, beispielsweise mit einem Bortrihalogenid, insbesondere Bortrifluorid, umgesetzt wird, umfassen.

Im Rahmen einer bevorzugten Ausführungsform des Verfahrens - insbesondere welche eine Baukastenprinzip-Synthese ermöglicht - umfasst das Verfahren jedoch zwei oder mehr Verfahrensschritte, insbesondere Verfahrensschritte a), beispielsweise einen Verfahrensschritt a₁) und a₂), zum Beispiel die Verfahrensschritte a₁), a₂) und a₃), gegebenenfalls die Verfahrensschritte a₁), a₂), a₃) bis aₙ), in denen das lithiierte Polymer zumindest teilweise mit mindestens zwei oder mehr elektrophilen Verbindungen umgesetzt wird. Bei Verfahrensschritt aₙ) steht insbesondere n für die Zahl des letzten der Verfahrensschritte a).

Zum Beispiel kann das Verfahren auch vier oder mehr Verfahrensschritte a), beispielsweise die Verfahrensschritte a₁), a₂), a₃) und a₄), gegebenenfalls die Verfahrensschritte a₁), a₂), a₃), a₄) bis aₙ) umfassen, in denen das lithiierte Polymer zumindest teilweise mit mindestens zwei, beispielsweise mindestens drei, elektrophilen Verbindungen umgesetzt werden. Dabei können sich die Verfahrensschritte a), beispielsweise die Verfahrensschritte a₁), a₂), a₃), a₄) bis aₙ), nicht nur durch mindestens zwei oder drei unterschiedliche elektrophile Verbindungen, sondern auch durch die Umsetzungsreihenfolge von mindestens zwei oder drei unterschiedlichen elektrophilen Verbindungen voneinander unterscheiden. Vorteilhafterweise können derartige Verfahrensschritte a₁) bis aₙ) in einem Reaktionsbehälter durchgeführt werden, so dass die Verfahrenschritte a₁) bis an) als One-Pot-Reaktion durchgeführt werden können.

Im Rahmen einer weiteren Ausführungsform wird das lithiierte Polymer in einem Verfahrensschritt a₁) zumindest teilweise, beispielsweise teilweise oder vollständig, mit mindestens einer ersten elektrophilen Verbindung, zum Beispiel mit mindestens einer Carbonylverbindung, wie Aceton, oder mit mindestens einem Bortrihalogenid, wie Bortrifluorid, oder mit mindestens einem lithiumionenleitenden Substituenten mit einer nukleofugen Abgangsgruppe, wie methylterminiertem Polyethylenglycol-Tosylat, umgesetzt und in einem Verfahrensschritt a₂) zumindest teilweise, beispielsweise teilweise oder vollständig, mit mindestens einer zweiten elektrophilen Verbindung, zum Beispiel mit mindestens einem Bortrihalogenid, wie Bortrifluorid, beziehungsweise mit mindestens einem lithiumionenleitenden Substituenten mit einer nukleofugen Abgangsgruppe, wie methylterminiertes Polyethylenglycol-Tosylat, beziehungsweise mit mindestens einer Carbonylverbindung, wie Aceton, umgesetzt.

Im Fall einer teilweisen oder vollständigen Umsetzung des lithiierten Polymers mit mindestens einer Carbonylverbindung, wie Aceton, als elektrophile Verbindung können insbesondere die bereits mit der mindestens einen Carbonylverbindung umgesetzten Positionen des Polymers weiterhin teilweise oder vollständig mit mindestens einer weiteren elektrophilen Verbindung, beispielsweise mit mindestens einem Bortrihalogenid, wie Bortrifluorid, und/oder mit mindestens einem lithiumionenleitenden Substituenten mit einer nukleofugen Abgangsgruppe, umgesetzt werden.

Zum Beispiel kann das lithiierte Polymer in einem Verfahrensschritt a₁) vollständig mit mindestens einer ersten elektrophilen Verbindung, zum Beispiel mit mindestens einer Carbonylverbindung, wie Aceton, umgesetzt werden und in einem Verfahrensschritt a₂) vollständig mit mindestens einer zweiten elektrophilen Verbindung, zum Beispiel mit mindestens einem Bortrihalogenid, wie Bortrifluorid, beziehungsweise mit mindestens einem lithiumionenleitenden Substituenten mit einer nukleofugen Abgangsgruppe, wie methylterminiertem Polyethylenglycol-Tosylat, umgesetzt werden oder in einem Verfahrensschritt a₂) teilweise mit mindestens einer zweiten elektrophilen Verbindung, zum Beispiel teilweise mit mindestens einem Bortrihalogenid, wie Bortrifluorid, oder mit mindestens einem lithiumionenleitenden Substituenten mit einer nukleofugen Abgangsgruppe, wie methylterminiertes Polyethylenglycol-Tosylat, und in einem Verfahrensschritt a₃) teilweise mit mindestens einer dritten elektrophilen Verbindung, zum Beispiel teilweise mit mindestens einem lithiumionenleitenden Substituenten mit einer nukleofugen Abgangsgruppe, wie methylterminiertem Polyethylenglycol-Tosylat, beziehungsweise mit mindestens einem Bortrihalogenid, wie Bortrifluorid, umgesetzt werden.

Das lithiierte Polymer kann jedoch auch zum Beispiel in einem Verfahrensschritt a₁) teilweise mit mindestens einer ersten elektrophilen Verbindung, zum Beispiel mit mindestens einer Carbonylverbindung, wie Aceton, oder mit mindestens einem Bortrihalogenid, wie Bortrifluorid, oder mit mindestens einem lithiumionenleitenden Substituenten mit einer nukleofugen Abgangsgruppe, wie methylterminiertem Polyethylenglycol-Tosylat, umgesetzt werden.

Dabei kann im Fall einer Carbonylverbindung, wie Aceton, als mindestens eine erste elektrophile Verbindung in Verfahrensschritt a₁) das lithiierte Polymer in einem Verfahrensschritt a₂) vollständig mit mindestens einer zweiten elektrophilen Verbindung, zum Beispiel mit mindestens einem Bortrihalogenid, wie Bortrifluorid, oder mit mindestens einem lithiumionenleitenden Substituenten mit einer nukleofugen Abgangsgruppe, wie methylterminiertem Polyethylenglycol-Tosylat, umgesetzt werden oder in einem Verfahrensschritt a₂) teilweise mit mindestens einer zweiten elektrophilen Verbindung, zum Beispiel mit mindestens einem Bortrihalogenid, wie Bortrifluorid, oder mit mindestens einem lithiumionenleitenden Substituenten mit einer nukleofugen Abgangsgruppe, wie methylterminiertem Polyethylenglycol-Tosylat, und in einem Verfahrensschritt a₃) teilweise mit mindestens einer dritten elektrophilen Verbindung, zum Beispiel mit mindestens einem lithiumionenleitenden Substituenten mit einer nukleofugen Abgangsgruppe, wie methylterminiertem Polyethylenglycol-Tosylat, beziehungsweise mit mindestens einem Bortrihalogenid, wie Bortrifluorid, umgesetzt werden.

Dabei kann im Fall mindestens eines Bortrihalogenids, wie Bortrifluorid, oder mindestens eines lithiumionenleitenden Substituenten mit einer nukleofugen Abgangsgruppe, wie methylterminiertem Polyethylenglycol-Tosylat, als mindestens eine erste elektrophile Verbindung in Verfahrensschritt a₁) das lithiierte Polymer in einem Verfahrensschritt a₂) teilweise mit mindestens einer zweiten elektrophilen Verbindung, zum Beispiel mit mindestens einer Carbonylverbindung, wie Aceton, umgesetzt werden.

In einem Verfahrensschritt a₃) können dann die bereits mit der mindestens einen zweiten elektrophilen Verbindung, insbesondere die mit der mindestens einen Carbonylverbindung, wie Aceton, umgesetzten Positionen des Polymers weiter zumindest teilweise, beispielsweise teilweise oder vollständig, mit mindestens einer weiteren elektrophilen Verbindung, zum Beispiel mit mindestens einem Bortrihalogenid, wie Bortrifluorid, oder mit mindestens einem lithiumionenleitenden Substituenten mit einer nukleofugen Abgangsgruppe, wie methylterminiertes Polyethylenglycol-Tosylat, umgesetzt werden. Dabei kann die mindestens eine weitere elektrophile Verbindung eine dritte elektrophile Verbindung oder wieder die mindestens eine erste elektrophile Verbindung sein. Insofern in Verfahrensschritt a₃) die bereits mit der mindestens zweiten elektrophilen Verbindung, insbesondere die mit der mindestens einen Carbonylverbindung, wie Aceton, umgesetzten Positionen des Polymers lediglich teilweise mit der mindestens einen weiteren elektrophilen Verbindung umgesetzt werden, können die mit der mindestens einen Carbonylverbindung, wie Aceton, umgesetzten Positionen des Polymers weiter teilweise mit mindestens einer weiteren elektrophilen Verbindung, zum Beispiel mit mindestens einem lithiumionenleitenden Substituenten mit einer nukleofugen Abgangsgruppe, wie methylterminiertes Polyethylenglycol-Tosylat, beziehungsweise mit mindestens einem Bortrihalogenid, wie Bortrifluorid, umgesetzt werden. Dabei kann die mindestens eine weitere elektrophile Verbindung wieder die mindestens eine erste elektrophile Verbindung beziehungsweise eine dritte oder gar vierte elektrophile Verbindung sein.

Im Rahmen einer weiteren Ausführungsform wird das mindestens eine Bortrihalogenid, insbesondere Bortrifluorid, als Etherat eingesetzt. Beispielsweise kann das Bortrifluorid als Bortrifluorid-Etherat, zum Beispiel als Bortrifluorid-Diethyletherat, eingesetzt werden. Als Etherat können vorteilhafterweise Bortrihalogenide, wie Bortrifluorid, auf kostengünstige und sichere Weise eingesetzt werden.

Der Lithiierung des lithiierten Polymers kann vorteilhafterweise direkt an einem Polymer, insbesondere durch einen Halogen-Lithium-Austausch, erfolgen.

Im Rahmen einer weiteren Ausführungsform wird das lithiierte Polymer, beispielsweise in einem, insbesondere vor Verfahrensschritt a) beziehungsweise vor den Verfahrensschritten a₁) bis aₙ) durchgeführten, Verfahrensschritt x), durch Umsetzung eines Polymers mit mindestens einer Halogengruppe, beispielsweise Bromgruppe, und/oder Hydroxygruppe mit einem Alkyllithium hergestellt. Das Alkyllithium kann dabei beispielsweise Butyllithium, zum Beispiel *n*-Butyllithium, umfassen oder sein. Vorteilhafterweise kann eine derartige Lithiierung, insbesondere Verfahrensschritt x), im gleichen Reaktionsbehälter wie die eingangs beschriebene Umsetzung mit der mindestens einen elektrophilen Verbindung, insbesondere Verfahrensschritt a) beziehungsweise a₁) bis aₙ), erfolgen, so dass auch die Kombination dieser Verfahrenschritte als One-Pot-Reaktion durchgeführt werden kann.

Somit kann in dem Verfahren insbesondere ein Polymer mit mindestens einer Halogengruppe, insbesondere Bromgruppe, und/oder Hydroxygruppe mit einem Alkyllithium zu einem lithiierten Polymer umgesetzt werden und (dann) das lithiierte Polymer zumindest teilweise mit mindestens einer elektrophilen Verbindung, insbesondere mit mindestens einem Bortrihalogenid und/oder mit mindestens einer Carbonylverbindung und/oder mit mindestens einem lithiumleitfähigen Substituenten mit einer nukleofugen Abgangsgruppe, umgesetzt werden.

Das Polymer mit mindestens einer Halogengruppe und/oder Hydroxygruppe und/oder das lithiierte Polymer kann insbesondere durch Polymerisation von Monomeren mit mindestens einer Doppelbindung, insbesondere Vinylgruppe, und/oder Monomeren mit mindestens einer Epoxidgruppe hergestellt werden beziehungsweise sein.

Im Rahmen einer weiteren Ausführungsform ist das Polymer mit mindestens einer Halogengruppe und/oder Hydroxygruppe und/oder das lithiierte Polymer ein Polystyrol und/oder ein Phenyl-substituiertes Polyalkylenoxid, insbesondere Polyethylenoxid, und/oder ein Polyvinylalkohol.

Das Polymer mit mindestens einer Halogengruppe und/oder Hydroxygruppe kann zum Beispiel ein Polyhalogenstryrol, beispielsweise Polybromstyrol oder Polyiodstyrol oder Polychlorstyrol, und/oder ein Halogenphenyl-substituiertes Polyalkylenoxid, insbesondere Polyethylenoxid, insbesondere Brom- oder Iod-oder Chlorphenyl-substituiertes Polyalkylenoxid, insbesondere Polyethylenoxid, und/oder ein Polyhydroxystryrol und/oder ein Hydroxyphenyl-substituiertes Polyalkylenoxid, insbesondere Polyethylenoxid, und/oder ein Polyvinylalkohol sein.

Im Rahmen einer Ausgestaltung dieser Ausführungsform ist das Polymer mit mindestens einer Halogengruppe und/oder Hydroxygruppe ein Polybromstyrol, beispielsweise Poly(p-bromstyrol), und/oder ein Bromphenyl-substituiertes Polyalkylenoxid, insbesondere Polyethylenoxid, beispielsweise p-Bromphenyl-substituiertes Polyethylenoxid, und/oder ein Polyhydroxystryrol, beispielsweise Poly(p-hydroxystyrol), und/oder ein Hydroxyphenyl-substituiertes Polyalkylenoxid, insbesondere Polyethylenoxid, beispielsweise p-Hydroxyphenyl-substituiertes Polyethylenoxid, und/oder ein Polyvinylalkohol.

Im Rahmen einer speziellen Ausgestaltung des Verfahrens wird zunächst durch Umsetzung von Polybromstyrol mit Butyllithium lithiiertes Polystyrol und dann aus dem lithiierten Polystyrol durch Umsetzung mit Bortrifluorid-Etherat ein Polystyrol mit mindestens einer Lithium-Trifluorborat-Gruppe, beispielsweise gemäß der folgenden Reaktionsgleichung, hergestellt:

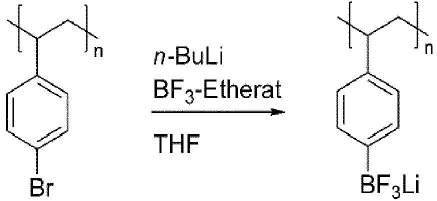

Im Rahmen einer anderen speziellen Ausgestaltung des Verfahrens wird zunächst durch Umsetzung von Polyhydroxystyrol mit Butyllithium Polystyrol mit einer Lithium-Oxidgruppe und dann aus dem Polystyrol mit der Lithium-Oxidgruppe durch Umsetzung mit Bortrifluorid-Etherat ein Polystyrol mit mindestens einer Lithium-Trifluorborat-Gruppe, insbesondere Lithium-Trifluorborat-Oxid-Gruppe, beispielsweise gemäß der folgenden Reaktionsgleichung, hergestellt:

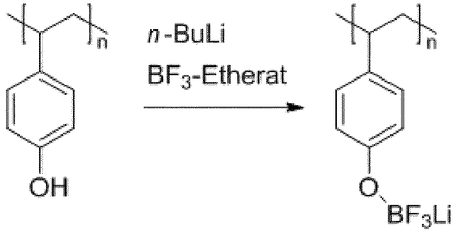

Zum Beispiel kann dabei das Polystyrol mit einer Lithium-Oxidgruppe direkt durch Polymerisation von Hyroxystyrol in Gegenwart von Butyllithium, beispielsweise gemäß der folgenden Reaktionsgleichung, hergestellt werden: 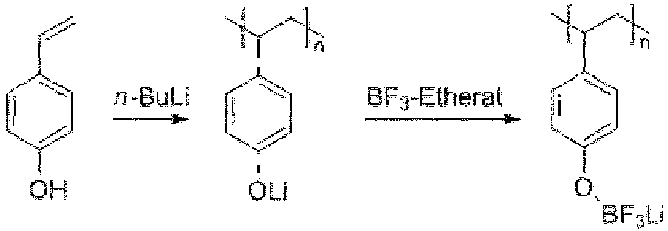 Im Rahmen einer weiteren speziellen Ausgestaltung des Verfahrens wird zunächst durch Umsetzung von Bromphenyl-substituiertem Polyethylenoxid mit Butyllithium lithiiertes, phenyl-substituiertes Polyethylenoxid und dann aus dem lithiierten, phenyl-substituierten Polyethylenoxid durch Umsetzung mit Bortrifluorid-Etherat ein Polyethylenoxid mit mindestens einer Lithium-Trifluorborat-Gruppe, beispielsweise gemäß der folgenden Reaktionsgleichung, hergestellt:

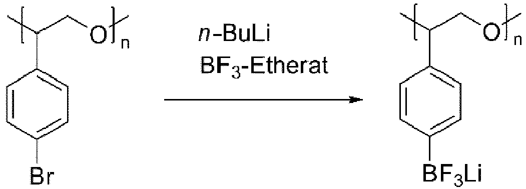

Im Rahmen einer weiteren speziellen Ausgestaltung des Verfahrens wird zunächst durch Umsetzung von Polyvinylalkohol beziehungsweise einem Polyvinylalkohol-(Block-)Copolymer mit Butyllithium ein lithiiertes, Vinylalkohol-basiertes Polymer beziehungsweise (Block-)Copolymer und dann aus dem lithiierten, Vinylalkohol-basierten Polymer beziehungsweise (Block-)Copolymer durch Umsetzung mit Bortrifluorid-Etherat ein Vinylalkohol-basiertes Polymer beziehungsweise (Block-)Copolymer mit mindestens einer Lithium-Trifluorboratgruppe, beispielsweise gemäß den folgenden Reaktionsgleichungen, hergestellt:

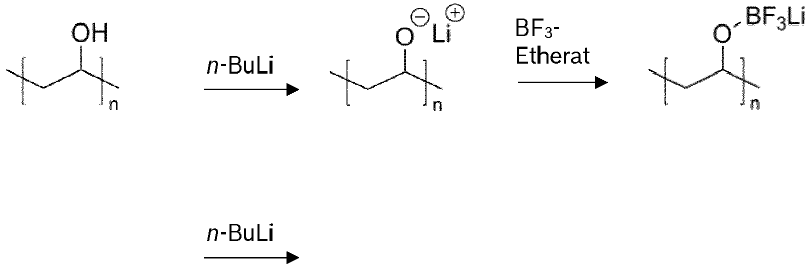

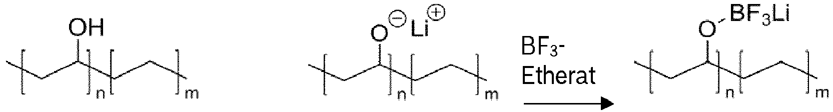

Polyvinylalkohole können vorteilhafterweise preiswert und kommerziell gut zugänglich sein.

Polybromstyrol kann zum Beispiel durch radikalische Polymerisation von Bromstyrol, insbesondere mittels eines Radikalstarters, wie Azobis(isobutyronitril) (AIBN), oder durch Bromierung von Polystyrol hergestellt werden beziehungsweise sein.

Polybromstyrol kann zum Beispiel über radikalische Polymerisation von Bromstyrol gemäß der folgenden Reaktionsgleichung hergestellt werden:

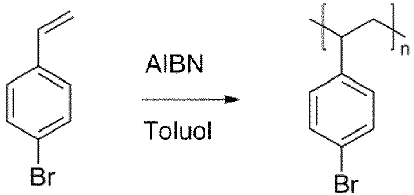

Polybromstyrol kann jedoch auch über eine nachgeschaltete, polymeranaloge Bromierung von Polystyrol gemäß der folgenden Reaktionsgleichung hergestellt werden:

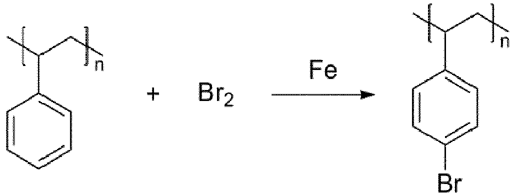

Bromphenyl-substituiertes Polyethylenoxid kann zum Beispiel durch anionische Polymerisation von Bromphenylepoxid, beispielsweise durch Umsetzung mit einer Base, wie Lithiumdiisopropylamid (LDA), gemäß der folgenden Reaktionsgleichung hergestellt werden:

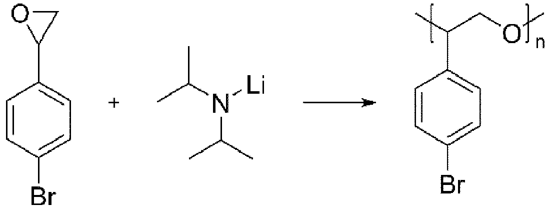

Im Rahmen einer weiteren Ausführungsform wird oder ist das Polymer mit mindestens einer Halogengruppe und/oder Hydroxygruppe und/oder das lithiierte Polymer mittels Copolymerisation von mindestens einem Monomer und/oder Oligomer und/oder Polymer mit mindestens einer Halogengruppe, insbesondere Bromgruppe, und/oder Hydroxygruppe, und/oder mindestens einem lithiierten Monomer und/oder Oligomer und/oder Polymer, und/oder mindestens einem Monomer und/oder Oligomer und/oder Polymer, welches mit mindestens einer aus einer elektrophilen Verbindung ausgebildeten Gruppe, beispielsweise mit mindestens einer Lithium-Trihalogenboratgruppe, insbesondere Lithium-Trifluorboratgruppe, und/oder mit mindestens einer Lithium-Alkanolatgruppe beziehungsweise, insbesondere substituierten oder unsubstituierten, Lithium-Methanolatgruppe und/oder mit mindestens einer Alkylenoxidgruppe, insbesondere Methylenoxidgruppe, und/oder mit mindestens einem lithiumionenleitfähigen Substituenten, substituiert ist, mit mindestens einem weiteren Monomer und/oder Oligomer und/oder Polymer hergestellt. Durch Copolymerisation können vorteilhafterweise die Eigenschaften des auszubildenden Polymerelektrolyten, insbesondere einzelionenleitenden Lithium-Polyelektrolyten, besonders gezielt optimiert werden.

Im Rahmen einer alternativen oder zusätzlichen Ausführungsform wird das mit der mindestens einen elektrophilen Verbindung zumindest teilweise umgesetzte Polymer, beispielsweise Copolymer, und/oder das lithiierte Polymer und/oder das Polymer mit mindestens einer Halogengruppe und/oder Hydroxygruppe mit mindestens einem weiteren Polymer zu einer Polymermischung (Polymerblend) gemischt. Eine Polymermischung kann vorteilhafterweise kostengünstig und beispielsweise mit einem besonders geringen Aufwand hergestellt werden.

Durch eine Modifikation mittels eines Copolymers und/oder einer Polymermischung können vorteilhafterweise Eigenschaften des Polymerelektrolyten, insbesondere des einzelionenleitenden Lithium-Polyelektrolyten, wie die ionische Leitfähigkeit, die chemische und/oder elektrochemische Stabilität und/oder mechanische Eigenschaften, wie Viskosität und/oder Elastizität weiter beeinflusst werden. Eine Copolymerisation kann sich zudem insbesondere bei einzelionenleitenden Lithium-Polyelektrolyten vorteilhaft auf die Zellfertigung auswirken, da deren Copolymere im Vergleich zu deren Homopolymeren, insbesondere aufgrund einer hohen Raumladung von reinen einzelionenleitenden Polyelektrolyten, eine höhere Löslichkeit, insbesondere in weniger polaren oder unpolaren Lösungsmitteln, aufweisen können.

Zum Beispiel kann das mindestens eine weitere Monomer und/oder Oligomer und/oder Polymer ein unterschiedlich funktionalisiertes oder unfunktionalisiertes Monomer und/oder Oligomer und/oder Polymer des gleichen Monomer-, Oligomer- beziehungsweise Polymertyps und/oder ein gleich oder unterschiedlich funktionalisiertes oder unfunktionalisiertes Monomer und/oder Oligomer und/oder Polymer eines unterschiedlichen Monomer-, Oligomerbeziehungsweise Polymertyps sein.

Im Rahmen einer Ausgestaltung umfasst oder ist das mindestens eine, insbesondere in der Copolymerisation und/oder Polymermischung eingesetzte, weitere Monomer und/oder Oligomer und/oder Polymer mindestens ein mechanisch stabilisierendes Monomer und/oder Oligomer und/oder Polymer.

Unter einem mechanisch stabilisierenden Monomer und/oder Oligomer und/oder Polymer kann insbesondere ein Monomer und/oder Oligomer und/oder Polymer verstanden werden, welches mindestens rigide Gruppen, insbesondere mindestens eine aromatische Gruppe, umfasst.

Beispielsweise kann das mindestens eine mechanisch stabilisierende Monomer und/oder Oligomer und/oder Polymer mindestens eine aromatische Gruppe aufweisen. Zum Beispiel kann das mindestens eine mechanisch stabilisierende Monomer und/oder Oligomer und/oder Polymer ein Styrol- und/oder Phenylenbasiertes Monomer und/oder Oligomer und/oder Polymer, welches nicht mit mindestens einer aus einer elektrophilen Verbindung ausgebildeten Gruppe, insbesondere nicht mit einer Lithium-Trihalogenboratgruppe und/oder Lithium-Alkanolatgruppe beziehungsweise, insbesondere substituierten oder unsubstituierten, Lithium-Methanolatgruppe und/oder Alkylenoxidgruppe, insbesondere Methylenoxidgruppe, und/oder einem lithiumionenleitfähigen Substituenten, wie Polyethylenoxid, substituiert ist, sein. Zum Beispiel kann das mindestens eine mechanisch stabilisierende Monomer und/oder Oligomer und/oder Polymer beziehungsweise das Styrol- und/oder Phenylen-basierte Monomer und/oder Oligomer und/oder Polymer Styrol und/oder ein Alkylstyrol, und/oder Oligostyrol und/oder ein Oligoalkylstyrol, und/oder Polystyrol und/oder ein Polyalkylstyrol, und/oder ein Phenylen und/oder Oligophenylen und/oder Polyphenylen, umfassen oder sein.

Durch das mindestens eine mechanisch stabilisierende Monomer und/oder Oligomer und/oder Polymer kann vorteilhafterweise die mechanische Stabilität des Polymerelektrolyten, insbesondere des einzelionenleitenden Lithium-Polyelektrolyten, erhöht werden. Dies kann insbesondere für einen Einsatz des Polymerelektrolyten, insbesondere des einzelionenleitenden Lithium-Polyelektrolyten, in einem Separator und/oder einer Schutzschicht einer Lithium-Zelle, insbesondere mit einer Lithium-Metall-Anode, vorteilhaft sein, da hierdurch eine hohe Lithium-Dendriten-Beständigkeit erzielt werden kann, was sich wiederum vorteilhaft auf die Lebensdauer der damit ausgestatteten Zelle auswirken kann. Zusätzlich zu einer Erhöhung der mechanischen Stabilität können mechanisch stabilisierende Monomere und/oder Oligomere und/oder Polymere, insbesondere Styrol-basierte Monomere und/oder Oligomere und/oder Polymere, gegebenenfalls die Löslichkeit im Vergleich zu einem reinen einzelionenleitenden Lithium-Polyelektrolyt-Homopolymer verbessern. So kann die Herstellung und Applikation dünner Film auf einer Kathode und/oder Anode vereinfacht werden. So können durch den Einsatz des Copolymers und/oder der Polymermischung beziehungsweise eines, darauf basierenden Separators und/oder einer, darauf basierenden Schutzschicht Lithium-Zellen, insbesondere auf Festelektrolyt-Basis, auf einfache Weise bereitgestellt werden, welche eine hohe Lebensdauer aufweisen und einfach hergestellt werden können und insbesondere auch in Elektrofahrzeugen eingesetzt werden können.

Im Rahmen einer alternativen oder zusätzlichen Ausgestaltung umfasst oder ist das mindestens eine, insbesondere in der Copolymerisation und/oder Polymermischung eingesetzte, weitere Monomer und/oder Oligomer und/oder Polymer mindestens ein lithiumionenleitfähiges Monomer und/oder Oligomer und/oder Polymer. So kann vorteilhafterweise die Mobilität der Lithiumionen im System und damit die Lithiumionenleitfähigkeit erhöht werden.

Das mindestens eine lithiumionenleitfähige Monomer und/oder Oligomer und/oder Polymer kann beispielsweise mindestens eine, beispielsweise eingebundene oder endständige, Carbonsäureestergruppe, zum Beispiel eine acyclische oder cyclische Carbonatgruppe und/oder Estergruppe und/oder Lactongruppe, insbesondere eine acyclische oder cyclische Carbonatgruppe, und/oder mindestens eine Alkylenoxidgruppe, beispielsweise eine Ethylenoxidgruppe, insbesondere eine Oligo- oder Polyalkylenoxidgruppe, beispielsweise eine Oligo- oder Polyethylenoxidgruppe, und/oder mindestens eine Polysiloxangruppe umfassen. So kann vorteilhafterweise die Lithiumionenmobilität und dadurch die Lithiumionenleitfähigkeit, insbesondere bei gleichbleibend hoher Überführungszahl nahe 1 von lithiumeinzelionenleitenden Komponenten, verbessert werden.

Wie bereits erläutert können Carbonsäureestergruppen, wie acyclische oder cyclische Carbonatgruppen und/oder Estergruppen und/oder Lactongruppen, vorteilhafterweise kathodisch stabiler als Alkylenoxidgruppen, wie Ethylenoxid, sein, wodurch eine höhere Hochvoltstabilität erzielt werden kann, was insbesondere im Fall einer Anwendung als Katholyt mit Kathodenaktivmaterialien, wie Nickel-Cobalt-Aluminium-Oxid (NCA), vorteilhaft sein kann. Das mindestens eine lithiumionenleitfähige Monomer und/oder Oligomer und/oder Polymer kann daher insbesondere mindestens eine, beispielsweise eingebundene oder endständige, Carbonsäureestergruppe, zum Beispiel eine acyclische oder cyclische Carbonatgruppe und/oder Estergruppe und/oder Lactongruppe, insbesondere eine acyclische oder cyclische Carbonatgruppe, umfassen. Gegebenenfalls kann das mindestens eine lithiumionenleitfähige Monomer und/oder Oligomer und/oder Polymer mindestens eine oder auch mehrere derartige Gruppen umfassen, und zum Beispiel ein Mono-, Oligo- oder Polycarbonat, beispielsweise ein lineares Polycarbonat, sein.

Das mindestens eine lithiumionenleitfähige Monomer und/oder Oligomer und/oder Polymer kann jedoch beispielsweise auch mindestens eine Carbonsäureestergruppe, zum Beispiel eine acyclische oder cyclische Carbonatgruppe und/oder Estergruppe und/oder Lactongruppe, insbesondere eine acyclische oder cyclische Carbonatgruppe, und mindestens eine Alkylenoxidgruppe, beispielsweise eine Ethylenoxidgruppe, insbesondere eine Oligo- oder Polyalkylenoxidgruppe, beispielsweise eine Oligo- oder Polyethylenoxidgruppe, umfassen. Dabei kann die mindestens eine Carbonsäureestergruppe insbesondere eine endständige cyclische Carbonatgruppe und/oder Lactongruppe und/oder eine eingebundene acyclische Carbonatgruppe und/oder Estergruppe umfassen oder sein.

Weiterhin kann das mindestens eine lithiumionenleitfähige Monomer und/oder Oligomer und/oder Polymer gegebenenfalls mindestens eine Alkylengruppe, beispielsweise eine Methylengruppe und/oder Ethylengruppe und/oder Propylengruppe, und/oder beispielsweise mindestens eine, beispielsweise endständige, Alkylgruppe, zum Beispiel Methylgruppe, umfassen.

Zum Beispiel kann das mindestens eine lithiumionenleitfähige Monomer und/oder Oligomer und/oder Polymer in einer Seitengruppe ein, insbesondere alkylterminiertes, beispielsweise methylterminiertes, Poly(alkylencarbonat), beispielsweise der allgemeinen chemischen Formel: -(O-C=O-O-CH₂-CH₂-CH₂)ₚ-CH₃, und/oder ein, insbesondere alkylterminiertes, beispielsweise methylterminiertes, Oligo- oder Polyethylenoxid, insbesondere Polyethylenglycol, beispielsweise der Formel -(CH₂-CH₂-O)ₚ-CH₃, und/oder in einer Hauptkette ein Poly(alkylencarbonat), beispielsweise der allgemeinen chemischen Formel: -(0-C=O-O-CH₂-CH₂-CH₂)ₚ-, und/oder ein Oligo- oder Polyethylenoxid, insbesondere Polyethylenglycol, beispielsweise der Formel -(CH₂-CH₂-O)ₚ-, umfassen.

In dem Verfahren können mittels polymeranaloger Umsetzung und/oder mittels Copolymerisation insbesondere einzelionenleitende Lithium-Polyelektrolyte mit mindestens einer Lithium einzelionenleitenden Wiederholungseinheit und mit mindestens einer lithiumionenleitfähigen Wiederholungseinheit ausgebildet werden. Ein exemplarisches Beispiel hierfür kann beispielsweise ein Polymer der allgemeinen chemischen Formel: 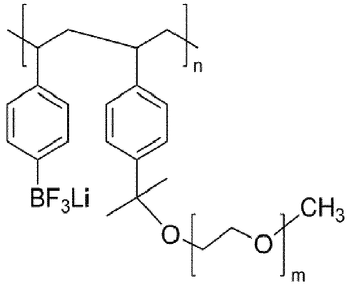 sein. Mittels der erfindungsgemäßen polymeranalogen Umsetzung kann dabei vorteilhafterweise eine Seitengruppenfunktionalisierung mit einer Lithium einzelionenleitenden Gruppe und/oder mit einem lithiumionenleitfähigen Substituenten auf besonders einfache Weise erfolgen.

In dem Verfahren können mittels polymeranaloger Umsetzung und/oder mittels Copolymerisation insbesondere auch einzelionenleitende Lithium-Polyelektrolyte mit mindestens einer Lithium einzelionenleitenden Wiederholungseinheit, mit mindestens einer lithiumionenleitfähigen Wiederholungseinheit und mit mindestens einer mechanisch stabilisierenden Wiederholungseinheit ausgebildet werden. Exemplarische Beispiele hierfür können beispielsweise Polymere der allgemeinen chemischen Formeln: 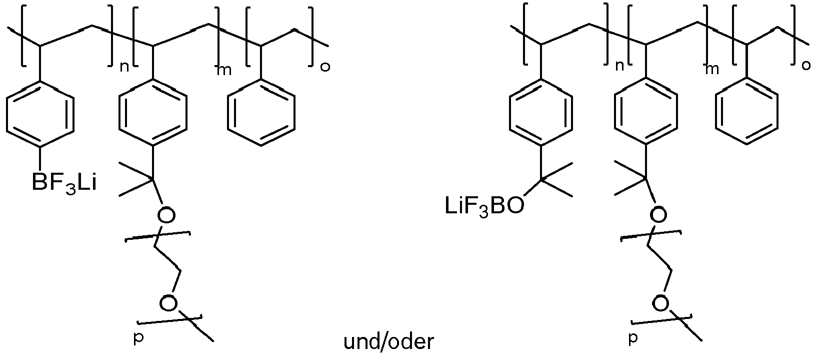 und/oder 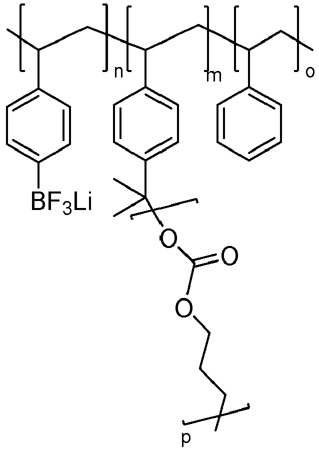 und/oder 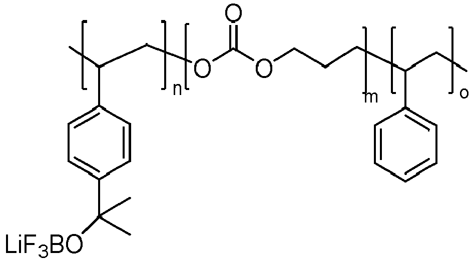 sein. Mittels Copolymerisation kann dabei vorteilhafterweise eine Funktionalisierung der Hauptkette mit einer lithiumionenleitfähigen Einheit und/oder einer mechanisch stabilisierenden Einheit auf besonders einfache Weise erfolgen.

Die Copolymerisation kann eine Block-Copolymerisation und/oder Copolymerisation zur Ausbildung eines alternierenden Copolymers und/oder eine Copolymerisation zur Ausbildung eines statistischen Copolymers und/oder eine Copolymerisation zur Ausbildung eines Gradienten-Copolymers sein.

Zum Beispiel kann die Copolymerisation derart durchgeführt werden, dass ein Tri-Block-Copolymer, insbesondere mit einem Schema I:
AAAAAAAABBBBBBBBCCCCCCCC, oder
ein Di-Block-Copolymer, insbesondere mit dem Schema II:
   ABABABABABABABABCCCCCCCC, oder
ein alternierendes Copolymer, insbesondere mit dem Schema III:
   ABCABCABCABCABCABCABCABC, oder
ein statistisches Copolymer, insbesondere mit dem Schema IV:
   ABBCABCCABCABCAACBACBACB, oder
ein Gradienten-Copolymer, insbesondere mit dem Schema V:
   ABAABBAAABBBAAAABBBB...,
ausgebildet wird.

Dabei steht A für eine Einheit, welche aus einem Monomer und/oder Oligomer mit mindestens einer Halogengruppe und/oder Hydroxygruppe, und/oder aus einem lithiierten Monomer und/oder Oligomer, und/oder aus einem Monomer und/oder Oligomer, welches mit mindestens einer aus einer elektrophilen Verbindung ausgebildeten Gruppe substituiert ist, ausgebildet ist.

B steht dabei für eine aus einem lithiumionenleitfähigen Monomer und/oder Oligomer ausgebildete Einheit.

C steht dabei für eine aus einem mechanisch stabilisierenden Monomer und/oder Oligomer ausgebildete Einheit.

So kann vorteilhafterweise eine erhöhte mechanische Stabilität bei gleichzeitig guten Transporteigenschaften, insbesondere auf Basis einer hohen Lithium-Überführungszahl der lithiumeinzelionenleitenden Einheiten und einer hohen Lithiumionenmobilität der lithiumionenleitfähigen Einheiten, erzielt werden, was sich beispielsweise bei einer Verwendung in einem Separator und/oder einer Schutzschicht vorteilhaft auf die Dendritenstabilität und damit die Lebensdauer einer damit ausgestatteten Zelle auswirken kann. Zudem können Block-Copolymere, insbesondere gemäß Schema I und II, gegebenenfalls mittels Selbstassemblierung lamellare Strukturen bilden, welche sich vorteilhaft auf die mechanische Stabilität bei gleichzeitig hoher Lithiumionenleitfähigkeit auswirken können.

Die Polymermischung kann zum Beispiel eine Mischung aus mindestens einem mit der mindestens einen elektrophilen Verbindung zumindest teilweise umgesetzten Copolymer, insbesondere mit lithiumeinzelionenleitenden Gruppen (A) und lithiumionenleitfähigen Substituenten (A') (AA'AA'AA'AA'A), und mindestens einem mechanisch stabilisierenden Polymer (CCCCCCC), oder eine Mischung aus mindestens einem mit der mindestens einen elektrophilen Verbindung zumindest teilweise umgesetzten Polymer, beispielsweise Homopolymer, insbesondere mit lithiumeinzelionenleitenden Gruppen (AAAAAAAAA) und mindestens einem lithiumionenleitfähigen Polymer (BBBBBBB) und mindestens einem mechanisch stabilisierenden Polymer (CCCCCCC) sein. Auch so kann vorteilhafterweise eine erhöhte mechanische Stabilität bei gleichzeitig guten Transporteigenschaften, insbesondere auf Basis einer hohen Lithium-Überführungszahl der lithiumeinzelionenleitenden Einheiten und einer hohen Lithiumionenmobilität der lithiumionenleitfähigen Einheiten, erzielt werden, was sich beispielsweise bei einer Verwendung in einem Separator und/oder einer Schutzschicht vorteilhaft auf die Dendritenstabilität und damit die Lebensdauer einer damit ausgestatteten Zelle auswirken kann.

Im Rahmen einer Ausgestaltung ist die Copolymerisation eine Block-Copolymerisation. Dabei kann das Polymer mit mindestens einer Halogengruppe udn/oder Hydroxygruppe und/oder das lithiierte Polymer insbesondere mittels Block-Copolymerisation von mindestens einem, insbesondere zur Ausbildung eines einzelionenleitenden Lithium-Polyelektrolyten ausgelegten, Block (A,AA'), welcher aus mindestens einem Monomer und/oder Oligomer und/oder Polymer mit mindestens einer Halogengruppe, insbesondere Bromgruppe, und/oder Hydroxygruppe, und/oder mindestens einem lithiierten Monomer und/oder Oligomer und/oder Polymer, und/oder mindestens einem Monomer und/oder Oligomer und/oder Polymer, welches mit mindestens einer aus einer elektrophilen Verbindung ausgebildeten Gruppe, beispielsweise mit mindestens einer Lithium-Trihalogenboratgruppe, insbesondere Lithium-Trifluorboratgruppe, und/oder mit mindestens einer Lithium-Alkanolatgruppe beziehungsweise, insbesondere substituierten oder unsubstituierten, Lithium-Methanolatgruppe und/oder mit mindestens einer Alkylenoxidgruppe, insbesondere Methylenoxidgruppe, und/oder mit mindestens einem lithiumionenleitfähigen Substituenten substituiert ist, ausgebildet ist und mindestens einem weiteren Block (B,C), welcher aus dem mindestens einen weiteren Monomer und/oder Oligomer und/oder Polymer ausgebildet ist, hergestellt werden beziehungsweise sein.

Der mindestens eine weitere Block (B,C) kann dabei beispielsweise ein, insbesondere mechanisch stabilisierender, Block (C), welcher aus dem mindestens einen mechanisch stabilisierendes Monomer und/oder Oligomer und/oder Polymer, beispielsweise Styrol oder einem Alkylstyrol, ausgebildet ist, und/oder ein, insbesondere lithiumionenleitfähiger, Block (B), welcher aus dem mindestens einen lithiumionenleitfähigen Monomer und/oder Oligomer und/oder Polymer ausgebildet ist, sein.

Da durch die polymeranaloge Umsetzung des lithiierten Polymers mit der mindestens einen elektrophilen Verbindung vorteilhafterweise der, insbesondere zur Ausbildung eines einzelionenleitenden Lithium-Polyelektrolyten ausgelegte, Block (A,AA') selbst sowohl mit lithiumeinzelionenleitenden Gruppen (A), wie Lithium-Trihalogenboratgruppen, insbesondere Lithium-Trifluorboratgruppen, und/oder Lithium-Alkanolatgruppen beziehungsweise, insbesondere substituierte oder unsubstituierte, Lithium-Methanolatgruppen und/oder Lithium-Trihalogenborat-Alkylenoxidgruppen, insbesondere Lithium-Trihalogenborat-Methylenoxidgruppen, zum Beispiel Lithium-Trifluorborat-Alkylenoxidgruppen, insbesondere Lithium-Trifluorborat-Methylenoxidgruppen, als auch mit lithiumionenleitfähigen Substituenten (A') ausgestattet werden kann, kann gegebenenfalls auf einen, insbesondere lithiumionenleitfähigen, Block (B) verzichtet werden und der mindestens eine weitere Block lediglich ein, insbesondere mechanisch stabilisierender, Block (C) sein.

Insbesondere kann daher der mindestens eine weitere Block ein, insbesondere mechanisch stabilisierender, Block (C) sein, welcher aus dem mindestens einen mechanisch stabilisierendes Monomer und/oder Oligomer und/oder Polymer, beispielsweise Styrol oder einem Alkylstyrol, ausgebildet ist.

Zum Beispiel kann die Block-Copolymerisation derart durchgeführt werden, dass ein Tri-Block-Copolymer, insbesondere mit einem Schema:
AAAAAAAAA'A'A'A'A'A'A'A'CCCCCCCC, oder
ein Di-Block-Copolymer, insbesondere mit einem Schema:
   AA'AA'AA'AA'AA'AA'AA'AA'CCCCCCCC
ausgebildet wird. Bei der zweiten Variante können die lithiumeinzelionenleitenden Gruppen (A), wie Lithium-Trihalogenboratgruppen, insbesondere Lithium-Trifluorboratgruppen, und/oder Lithium-Alkanolatgruppen beziehungsweise, insbesondere substituierten oder unsubstituierten, Lithium-Methanolatgruppen und/oder Lithium-Trihalogenborat-Alkylenoxidgruppen, insbesondere Lithium-Trihalogenborat-Methylenoxidgruppen, zum Beispiel Lithium-Trifluorborat-Alkylenoxidgruppen, insbesondere Lithium-Trifluorborat-Methylenoxidgruppen, und die lithiumionenleitfähigen Substituenten (A') in dem, insbesondere zur Ausbildung eines einzelionenleitenden Lithium-Polyelektrolyten ausgelegten, Block (AA') statistisch verteilt oder alternierend sein. Auch so kann vorteilhafterweise eine erhöhte mechanische Stabilität bei gleichzeitig guten Transporteigenschaften, insbesondere auf Basis einer hohen Lithium-Überführungszahl der lithiumeinzelionenleitenden Einheiten und einer hohen Lithiumionenmobilität der lithiumionenleitfähigen Einheiten, erzielt werden, was sich beispielsweise bei einer Verwendung in einem Separator und/oder einer Schutzschicht vorteilhaft auf die Dendritenstabilität und damit die Lebensdauer einer damit ausgestatteten Zelle auswirken kann. Zudem können auch derartige Block-Copolymere gegebenenfalls mittels Selbstassemblierung lamellare Strukturen bilden, welche sich vorteilhaft auf die mechanische Stabilität bei gleichzeitig hoher Lithiumionenleitfähigkeit auswirken können.

Insbesondere kann daher die Block-Copolymerisation derart durchgeführt werden, dass ein Tri-Block-Copolymer oder Di-Block-Copolymer ausgebildet wird, welches mindestens einen, insbesondere zur Ausbildung eines einzelionenleitenden Lithium-Polyelektrolyten mit lithiumionenleitfähigen Substituenten ausgelegten, Block (AA') und mindestens einen, insbesondere mechanisch stabilisierenden, Block (C), beispielsweise auf Basis von beispielsweise Styrol oder einem Alkylstyrol, umfasst. Dabei kann der mindestens eine, insbesondere zur Ausbildung eines einzelionenleitenden Lithium-Polyelektrolyten mit lithiumionenleitfähigen Substituenten ausgelegte, Block (AA') mittels der zumindest teilweisen Umsetzung mit der mindestens einen elektrophilen Verbindung mit lithiumeinzelionenleitenden Gruppen (A), wie Lithium-Trihalogenboratgruppen, insbesondere Lithium-Trifluorboratgruppen, und/oder Lithium-Alkanolatgruppen beziehungsweise, insbesondere substituierten oder unsubstituierten, Lithium-Methanolatgruppen und/oder Lithium-Trihalogenborat-Alkylenoxidgruppen, insbesondere Lithium-Trihalogenborat-Methylenoxidgruppen, zum Beispiel Lithium-Trifluorborat-Alkylenoxidgruppen, insbesondere Lithium-Trifluorborat-Methylenoxidgruppen, und mit lithiumionenleitfähigen Substituenten (A') ausgestattet werden.

Als erklärende Beispiele sind im Folgenden exemplarisch vier mögliche Di-Block-Copolymere (AA'C) beziehungsweise Tri-Block-Copolymer (ABC) explizit gezeigt:

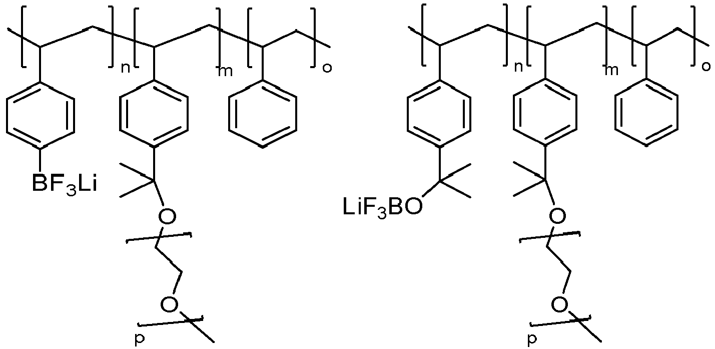

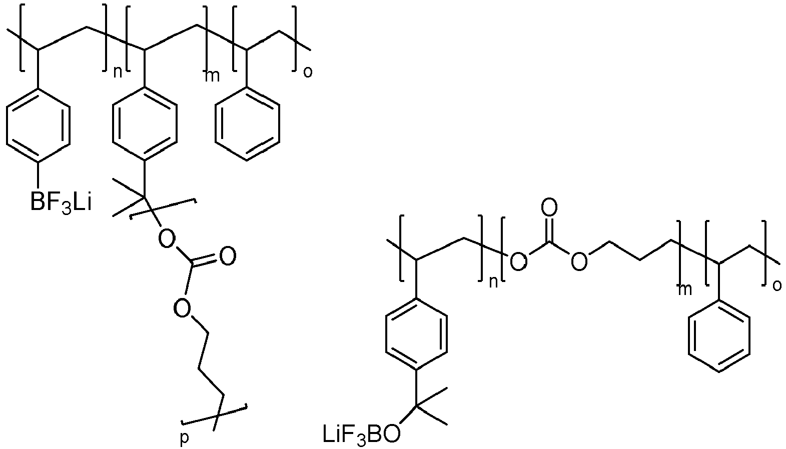

Das Polymer mit mindestens einer Halogengruppe und/oder Hydroxygruppe und/oder das lithiierte Polymer kann beispielsweise mittels Copolymerisation, zum Beispiel Block-Copolymerisation, von mindestens einem Monomer und/oder Oligomer und/oder Polymer mit mindestens einer Halogengruppe, insbesondere Bromgruppe, und/oder Hydroxygruppe sowie mit mindestens einer Doppelbindung, insbesondere Vinylgruppe, und/oder mindestens einer Epoxidgruppe, und/oder mindestens einem lithiierten Monomer und/oder Oligomer und/oder Polymer mit mindestens einer Doppelbindung, insbesondere Vinylgruppe, und/oder mindestens einer Epoxidgruppe und/oder mindestens einem Monomer und/oder Oligomer und/oder Polymer, welches mit mindestens einer aus einer elektrophilen Verbindung ausgebildeten Gruppe, beispielsweise mit mindestens einer Lithium-Trihalogenboratgruppe, insbesondere Lithium-Trifluorboratgruppe, und/oder mit mindestens einer Lithium-Alkanolatgruppe beziehungsweise, insbesondere substituierten oder unsubstituierten, Lithium-Methanolatgruppe und/oder mit mindestens einer Alkylenoxidgruppe, insbesondere Methylenoxidgruppe, und/oder mit mindestens einem lithiumionenleitfähigen Substituenten substituiert ist und mindestens eine Doppelbindung, insbesondere Vinylgruppe, und/oder mindestens eine Epoxidgruppe aufweist, mit mindestens einem weiteren Monomer und/oder Oligomer und/oder Polymer mit mindestens einer Doppelbindung, insbesondere Vinylgruppe, und/oder mindestens einer Epoxidgruppe hergestellt werden beziehungsweise sein. Dementsprechend kann das mindestens eine mechanisch stabilisierende Monomer und/oder Oligomer und/oder Polymer und/oder das mindestens eine lithiumionenleitfähige Monomer und/oder Oligomer und/oder Polymer zum Beispiel mindestens eine Doppelbindung, insbesondere Vinylgruppe, und/oder mindestens eine Epoxidgruppe aufweisen.

Zum Beispiel kann das Polymer mit mindestens einer Halogengruppe und/oder Hydroxygruppe und/oder das lithiierte Polymer mittels Copolymerisation, beispielsweise Block-Copolymerisation, eines Halogenstyrols, beispielsweise eines Bromstyrols, wie p-Bromstyrol, und/oder eines Hydroxystyrols, wie p-Hydroxystyrol, mit Styrol und/oder einem Alkylstyrol hergestellt werden. So kann das auszubildende Polymer vorteilhafterweise mechanisch stabilisiert werden.

Alternativ oder zusätzlich dazu kann das Polymer mit mindestens einer Halogengruppe und/oder Hydroxygruppe und/oder das lithiierte Polymer mittels Copolymerisation, beispielsweise Block-Copolymerisation, eines Halogenstyrols, beispielsweise eines Bromstyrols, wie p-Bromstyrol, und/oder eines Hydroxystyrols, wie p-Hydroxystyrol, mit einem Vinyl hergestellt werden, welches mindestens eine, beispielsweise eingebundene oder endständige, Carbonsäureestergruppe, zum Beispiel eine acyclische oder cyclische Carbonatgruppe und/oder Estergruppe und/oder Lactongruppe, insbesondere eine acyclische oder cyclische Carbonatgruppe, und/oder mindestens eine Alkylenoxidgruppe, beispielsweise eine Ethylenoxidgruppe, insbesondere eine Oligo- oder Polyalkylenoxidgruppe, beispielsweise eine Oligo- oder Polyethylenoxidgruppe, und/oder mindestens eine Polysiloxangruppe umfasst. So kann die Lithiumionenleitfähigkeit, insbesondere die Lithiumionenmobilität, des auszubildenden Polymers vorteilhafterweise erhöht werden.

Zum Beispiel kann Bromstyrol mit einem Oligo- oder Polyalkylenoxidgruppenfunktionalisierten Vinyl gemäß der folgenden Reaktionsgleichung copolymerisiert werden:

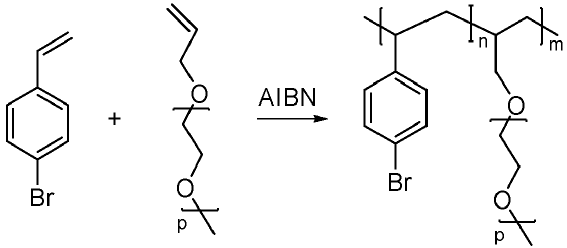

Alternativ oder zusätzlich dazu kann das Polymer mit mindestens einer Halogengruppe und/oder Hydroxygruppe und/oder das lithiierte Polymer mittels Copolymerisation, beispielsweise Block-Copolymerisation, eines Halogenfunktionalisierten, beispielsweise Brom-funktionalisierten, oder Hydroxyfunktionalisierten Vinyls, wie Vinylalkohol, mit einem Vinyl hergestellt werden, welches mindestens eine, beispielsweise eingebundene oder endständige, Carbonsäureestergruppe, zum Beispiel eine acyclische oder cyclische Carbonatgruppe und/oder Estergruppe und/oder Lactongruppe, insbesondere eine acyclische oder cyclische Carbonatgruppe, und/oder mindestens eine Alkylenoxidgruppe, beispielsweise eine Ethylenoxidgruppe, insbesondere eine Oligo- oder Polyalkylenoxidgruppe, beispielsweise eine Oligo- oder Polyethylenoxidgruppe, und/oder mindestens eine Polysiloxangruppe umfasst. Vinyle, wie Vinylalkohole, können vorteilhafterweise preiswert und kommerziell gut zugänglich sein.

Alternativ oder zusätzlich dazu kann das Polymer mit mindestens einer Halogengruppe und/oder Hydroxygruppe und/oder das lithiierte Polymer mittels Copolymerisation, beispielsweise Block-Copolymerisation, eines Halogenfunktionalisierten, beispielsweise Brom-funktionalisierten, und/oder Hydroxyfunktionalisierten Epoxids, wie p-Bromphenylepoxid oder p-Hydroxyphenylepoxid, mit einem Epoxid hergestellt werden, welches mindestens eine, beispielsweise eingebundene oder endständige, Carbonsäureestergruppe, zum Beispiel eine acyclische oder cyclische Carbonatgruppe und/oder Estergruppe und/oder Lactongruppe, insbesondere eine acyclische oder cyclische Carbonatgruppe, und/oder mindestens eine Alkylenoxidgruppe, beispielsweise eine Ethylenoxidgruppe, insbesondere eine Oligo- oder Polyalkylenoxidgruppe, beispielsweise eine Oligo- oder Polyethylenoxidgruppe, und/oder mindestens eine Polysiloxangruppe umfasst. So kann vorteilhafterweise ebenfalls die Lithiumionenleitfähigkeit, insbesondere die Lithiumionenmobilität, des auszubildenden Polymers erhöht werden.

Zum Beispiel kann eine "lebende Polymerisation" von Bromphenylepoxid, beispielsweise in Gegenwart einer Base, wie Lithiumdiisopropylamid (LDA), durch Zugabe eines entsprechend funktionalisierten Epoxids, zum Beispiel eines Polysiloxan-funktionalisierten Epoxids, beispielsweise gemäß der folgenden Reaktionsgleichung, fortgesetzt werden:

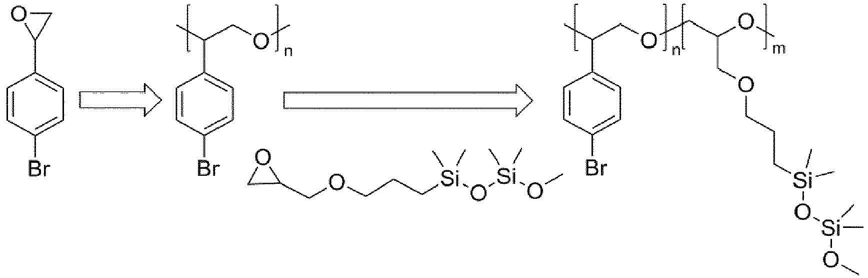

Auf diese Weise kann zum Beispiel ein Block-Copolymer hergestellt werden. Zum Beispiel kann dabei das Block-Copolymer einen ersten Block, welcher aus Bromphenylepoxid als Monomer ausgebildet ist, und einem zweiten Block, welcher aus einem Polysiloxan-funktionalisierten Epoxid als Monomer ausgebildet ist, umfassen.

Hinsichtlich weiterer technischer Merkmale und Vorteile des erfindungsgemäßen Verfahrens wird hiermit explizit auf die Erläuterungen im Zusammenhang mit den erfindungsgemäßen Polymerelektrolyten, insbesondere einzelionenleitenden Polyelektrolyten, der erfindungsgemäßen Zelle, Kathode, Anode und Schutzschicht und dem erfindungsgemäßen Separator sowie auf die Figuren, die Figurenbeschreibung und die Ausführungsbeispiele verwiesen.

Ein weiterer Gegenstand der Erfindung ist ein Polymerelektrolyt, welcher durch ein erfindungsgemäßes Verfahren hergestellt beziehungsweise erhältlich ist. Der Polymerelektrolyt kann insbesondere ein einzelionenleitender Lithium-Polyelektrolyt sein. Insbesondere kann der Polymerelektrolyt, insbesondere der einzelionenleitende Lithium-Polymerelektrolyt, für eine Lithium-Zelle, beispielsweise für eine Lithium-Ionen-Zelle und/oder Lithium-Metall-Zelle und/oder Lithium-Schwefel-Zelle, insbesondere für eine Feststoffzelle, ausgelegt sein.

Hinsichtlich weiterer technischer Merkmale und Vorteile eines derartigen erfindungsgemäßen Polymerelektrolyten, insbesondere einzelionenleitenden Lithium-Polyelektrolyten, wird hiermit explizit auf die Erläuterungen im Zusammenhang mit dem erfindungsgemäßen Verfahren und dem im Folgenden beschriebenen erfindungsgemäßen Polymerelektrolyten, insbesondere einzelionenleitenden Lithium-Polyelektrolyten, sowie auf die Erläuterungen im Zusammenhang mit der erfindungsgemäßen Zelle, Kathode, Anode und Schutzschicht und dem erfindungsgemäßen Separator sowie auf die Figuren, die Figurenbeschreibung und die Ausführungsbeispiele verwiesen.

Ein weiterer Gegenstand der Erfindung ist ein Polymerelektrolyt, welcher mindestens eine Lithium-Trihalogenboratgruppe und/oder mindestens eine Lithium-Alkanolatgruppe beziehungsweise, insbesondere substituierte oder unsubstituierte, Lithium-Methanolatgruppe und/oder mindestens eine Alkylenoxidgruppe, insbesondere Methylenoxidgruppe, umfasst. Der Polymerelektrolyt kann insbesondere ein einzelionenleitender Lithium-Polyelektrolyt sein. Dabei kann der einzelionenleitende Lithium-Polyelektrolyt insbesondere mindestens eine Lithium-Trihalogenboratgruppe und/oder mindestens eine Lithium-Alkanolatgruppe beziehungsweise, insbesondere substituierte oder unsubstituierte, Lithium-Methanolatgruppe umfassen.

Insbesondere kann der Polymerelektrolyt, insbesondere der einzelionenleitende Lithium-Polymerelektrolyt, für eine Lithium-Zelle, beispielsweise für eine LithiumIonen-Zelle und/oder Lithium-Metall-Zelle und/oder Lithium-Schwefel-Zelle, insbesondere für eine Feststoffzelle, ausgelegt sein. Beispielsweise kann der Polymerelektrolyt durch ein erfindungsgemäßes Verfahren hergestellt beziehungsweise erhältlich sein.

Ein einzelionenleitender Lithium-Polyelektrolyt mit mindestens einer Lithium-Trihalogenboratgruppe kann vorteilhafterweise durch zumindest teilweise Umsetzung eines lithiierten Polymers mit mindestens einem Bortrihalogenid hergestellt werden.

Ein einzelionenleitender Lithium-Polyelektrolyt mit mindestens einer Lithium-Alkanolatgruppe beziehungsweise, insbesondere substituierten oder unsubstituierten, Lithium-Methanolatgruppe kann vorteilhafterweise durch zumindest teilweise Umsetzung eines lithiierten Polymers mit mindestens einer Carbonylverbindung hergestellt werden.

Ein Polymerelektrolyt, insbesondere ein einzelionenleitender Lithium-Polyelektrolyt, mit mindestens einer Alkylenoxidgruppe, insbesondere Methylenoxidgruppe, kann vorteilhafterweise ebenfalls durch zumindest teilweise Umsetzung eines lithiierten Polymers mit mindestens einer Carbonylverbindung hergestellt werden. Beispielsweise kann dabei das lithiierte Polymer, insbesondere eine durch die Umsetzung mit der mindestens einen Carbonylverbindung ausgebildete Lithium-Alkanolatgruppe beziehungsweise, insbesondere substituierte oder unsubstituierte Lithium-Methanolatgruppe weiterhin mit mindestens einer weiteren elektrophilen Verbindung, beispielsweise mit mindestens einem Bortrihalogenid und/oder mit mindestens einem lithiumionenleitenden Substituenten mit mindestens einer nukleofugen Abgangsgruppe, umgesetzt werden.

Im Rahmen einer Ausführungsform umfasst oder ist die mindestens eine Lithium-Trihalogenboratgruppe mindestens eine, insbesondere einfache, Lithium-Trihalogenboratgruppe, insbesondere der allgemeinen Formel: -BY₃⁻Li⁺, und/oder mindestens eine Lithium-Trihalogenborat-Alkylenoxidgruppe, insbesondere Lithium-Trihalogenborat-Methylenoxidgruppe, insbesondere der allgemeinen Formel: -CR1R2-O-BY₃⁻Li⁺, und/oder mindestens eine Lithium-Trihalogenborat-Oxid-Gruppe, insbesondere der allgemeinen Formel: -O-BY₃⁻Li⁺.

Y kann insbesondere für Fluor und/oder Chlor und/oder Brom und/oder lod, beispielsweise Fluor, stehen.

Die Alkylenoxidgruppe, insbesondere Methylenoxidgruppe, kann insbesondere alkylsubstituiert, beispielsweise methylsubstituiert, sein. Beispielsweise kann die Alkylenoxidgruppe, insbesondere Methylenoxidgruppe, dabei zweifach alkylsubstituiert, beispielsweise zweifach methylsubstituiert, sein. R1 und R2 können zum Beispiel gleich oder unterschiedlich voneinander, insbesondere gleich, sein und beispielsweise für Wasserstoff oder eine Alkylgruppe, insbesondere für eine Alkylgruppe, beispielsweise eine Methylgruppe oder Ethylgruppe oder Propylgruppe, insbesondere eine Methylgruppe, stehen.

Ein einzelionenleitender Lithium-Polyelektrolyt mit mindestens einer, insbesondere einfachen, Lithium-Trihalogenboratgruppe kann vorteilhafterweise durch zumindest teilweise Umsetzung eines lithiierten Polymers mit mindestens einem Bortrihalogenid hergestellt werden.

Ein einzelionenleitender Lithium-Polyelektrolyt mit mindestens einer Lithium-Trihalogenborat-Alkylenoxidgruppe, insbesondere Lithium-Trihalogenborat-Methylenoxidgruppe, kann vorteilhafterweise durch zumindest teilweise Umsetzung eines lithiierten Polymers mit mindestens einer Carbonylverbindung und mit mindestens einem Bortrihalogenid hergestellt werden.

Ein einzelionenleitender Lithium-Polyelektrolyt mit mindestens einer Lithium-Trihalogenborat-Oxid-Gruppe kann vorteilhafterweise durch zumindest teilweise Umsetzung eines lithiierten Polymers auf der Basis eines Lithium-Alkoholats, wie eines lithiierten Polyvinylalkohols und/oder eines Polymers mit mindestens einer Lithium-Alkanolatgruppe beziehungsweise, insbesondere substituierten oder unsubstituierten, Lithium-Methanolatgruppe, mit mindestens einem Bortrihalogenid hergestellt werden.

Im Rahmen einer Ausgestaltung dieser Ausführungsform umfasst oder ist die mindestens eine Lithium-Trihalogenboratgruppe mindestens eine Lithium-Trifluorboratgruppe. Beispielsweise kann dabei die mindestens eine Lithium-Trihalogenboratgruppe beziehungsweise Lithium-Trifluorboratgruppe mindestens eine, insbesondere einfache, Lithium-Trifluorboratgruppe, insbesondere der Formel: -BF₃⁻Li⁺, und/oder mindestens eine Lithium-Trifluorborat-Alkylenoxidgruppe, insbesondere Lithium-Trifluorborat-Methylenoxidgruppe, insbesondere der allgemeinen Formel: -CR1 R2-O-BF₃⁻Li⁺, und/oder mindestens eine Lithium-Trifluorborat-Oxid-Gruppe, insbesondere der Formel:-O-BF₃⁻Li⁺. Die Alkylenoxidgruppe, insbesondere Methylenoxidgruppe, kann dabei insbesondere alkylsubstituiert, beispielsweise methylsubstituiert, sein. Beispielsweise kann die Alkylenoxidgruppe, insbesondere Methylenoxidgruppe, dabei zweifach alkylsubstituiert, beispielsweise zweifach methylsubstituiert, sein. R1 und R2 können zum Beispiel gleich oder unterschiedlich voneinander, insbesondere gleich, sein und zum Beispiel für Wasserstoff oder eine Alkylgruppe, insbesondere für eine Alkylgruppe, beispielsweise eine Methylgruppe oder Ethylgruppe oder Propylgruppe, insbesondere eine Methylgruppe, stehen.

Ein einzelionenleitender Lithium-Polyelektrolyt mit mindestens einer, insbesondere einfachen, Lithium-Trifluorboratgruppe kann vorteilhafterweise durch zumindest teilweise Umsetzung eines lithiierten Polymers mit Bortrifluorid hergestellt werden.

Ein einzelionenleitender Lithium-Polyelektrolyt mit mindestens einer Lithium-Trifluorborat-Alkylenoxidgruppe, insbesondere Lithium-Trifluorborat-Methylenoxidgruppe, kann vorteilhafterweise durch zumindest teilweise Umsetzung eines lithiierten Polymers mit mindestens einer Carbonylverbindung und mit mindestens einem Bortrifluorid hergestellt werden.

Ein einzelionenleitender Lithium-Polyelektrolyt mit mindestens einer Lithium-Trifluorborat-Oxid-Gruppe kann vorteilhafterweise durch zumindest teilweise Umsetzung eines lithiierten Polymers auf der Basis eines Lithium-Alkoholats, wie eines lithiierten Polyvinylalkohols und/oder eines Polymers mit mindestens einer Lithium-Alkanolatgruppe beziehungsweise, insbesondere substituierten oder unsubstituierten, Lithium-Methanolatgruppe, mit Bortrifluorid hergestellt werden.

Im Rahmen einer weiteren alternativen oder zusätzlichen Ausführungsform ist die mindestens eine Lithium-Alkanolatgruppe beziehungsweise, insbesondere substituierte oder unsubstituierte, Lithium-Methanolatgruppe alkylsubstituiert, beispielsweise methylsubstituiert. Insbesondere kann die mindestens eine Lithium-Alkanolatgruppe beziehungsweise, insbesondere substituierte oder unsubstituierte, Lithium-Methanolatgruppe zweifach alkylsubstituiert, beispielsweise zweifach methylsubstituiert, sein. Die mindestens eine Lithium-Alkanolatgruppe beziehungsweise, insbesondere substituierte oder unsubstituierte, Lithium-Methanolatgruppe kann beispielsweise die allgemeine Formel: -CR1R2-O-Li⁺ aufweisen. Dabei können die Alkylsubstituenten, insbesondere R1 und R2, beispielsweise gleich oder unterschiedlich sein und/oder für Wasserstoff oder eine Methylgruppe oder Ethylgruppe oder Propylgruppe stehen. Zum Beispiel können die Alkylsubstituenten, insbesondere R1 und R2, gleich sein und/oder für eine Methylgruppe stehen. Zum Beispiel kann die mindestens eine Lithium-Alkanolatgruppe beziehungsweise Lithium-Methanolatgruppe mindestens eine Lithium-1,1-Methylmethanolatgruppe (Lithium-1,1-Dimethylmethanolatgruppe) umfassen oder sein.

Ein einzelionenleitender Lithium-Polyelektrolyt mit mindestens einer alkylsubstituierten Lithium-Alkanolatgruppe beziehungsweise Lithium-Methanolatgruppe kann vorteilhafterweise durch zumindest teilweise Umsetzung eines lithiierten Polymers mit einem Keton oder Aldehyd hergestellt werden. Beispielsweise kann ein einzelionenleitender Lithium-Polyelektrolyt mit mindestens einer, mindestens zweifach alkylsubstituierten, beispielsweise methylsubstituierten, Lithium-Alkanolatgruppe beziehungsweise Lithium-Methanolatgruppe durch zumindest teilweise Umsetzung eines lithiierten Polymers mit einem Keton, beispielsweise Aceton, hergestellt werden.

Im Rahmen einer weiteren alternativen oder zusätzlichen Ausführungsform umfasst oder ist die mindestens eine Alkylenoxidgruppe, insbesondere Methylenoxidgruppe, alkylsubstituiert, beispielsweise methylsubstituiert. Insbesondere kann die mindestens eine Alkylenoxidgruppe, insbesondere Methylenoxidgruppe, zweifach alkylsubstituiert, beispielsweise zweifach methylsubstituiert, sein. Die mindestens eine Alkylenoxidgruppe, insbesondere Methylenoxidgruppe, kann insbesondere die allgemeine Formel: -CR1R2-O-aufweisen. Dabei können die Alkylsubstituenten, insbesondere R1 und R2, beispielsweise gleich oder unterschiedlich sein und/oder für Wasserstoff oder eine Methylgruppe oder Ethylgruppe oder Propylgruppe stehen. Zum Beispiel können die Alkylsubstituenten, insbesondere R1 und R2, gleich sein und/oder für eine Methylgruppe stehen. Zum Beispiel kann die mindestens eine Alkylenoxidgruppe, insbesondere Methylenoxidgruppe, mindestens eine 1,1-Methylmethylenoxidgruppe (1,1-Dimethylmethylenoxidgruppe) umfassen oder sein.

Ein Polymerelektrolyt, gegebenenfalls ein einzelionenleitender Lithium-Polyelektrolyt, mit mindestens einer alkylsubstituierten Alkylenoxidgruppe, insbesondere Methylenoxidgruppe, kann vorteilhafterweise durch zumindest teilweise Umsetzung eines lithiierten Polymers mit einem Keton oder Aldehyd hergestellt werden. Beispielsweise kann ein Polymerelektrolyt mit mindestens einer, mindestens zweifach alkylsubstituierten, beispielsweise methylsubstituierten, Alkylenoxidgruppe, insbesondere Methylenoxidgruppe, durch zumindest teilweise Umsetzung eines lithiierten Polymers mit einem Keton, beispielsweise Aceton, hergestellt werden.

Im Rahmen einer Ausgestaltung dieser Ausführungsform umfasst oder ist die mindestens eine Alkylenoxidgruppe, insbesondere Methylenoxidgruppe, mindestens eine, mit einem lithiumionenleitfähigen Substituenten substituierte Alkylenoxidgruppe, insbesondere Methylenoxidgruppe. Insbesondere kann dabei das Sauerstoffatom der mindestens einen, mit einem lithiumionenleitfähigen Substituenten substituierten Alkylenoxidgruppe, insbesondere Methylenoxidgruppe, mit dem lithiumionenleitfähigen Substituenten substituiert sein.

Ein Polymerelektrolyt, gegebenenfalls ein einzelionenleitender Lithium-Polyelektrolyt, mit mindestens einer, mit einem lithiumionenleitfähigen Substituenten substituierten Alkylenoxidgruppe, insbesondere Methylenoxidgruppe, kann vorteilhafterweise durch zumindest teilweise Umsetzung eines lithiierten Polymers mit mindestens einer Carbonylverbindung und mit mindestens einem lithiumionenleitenden Substituenten mit mindestens einer nukleofugen Abgangsgruppe hergestellt werden.

Die mindestens eine, mit einem lithiumionenleitfähigen Substituenten substituierte Alkylenoxidgruppe, insbesondere Methylenoxidgruppe, kann insbesondere mindestens eine, mit einem lithiumionenleitfähigen Substituenten substituierte Alkylenoxidgruppe, insbesondere Methylenoxidgruppe, umfassen oder sein, deren lithiumionenleitfähiger Substituent mindestens eine, beispielsweise eingebundene oder endständige, Carbonsäureestergruppe, zum Beispiel eine acyclische oder cyclische Carbonatgruppe und/oder Estergruppe und/oder Lactongruppe, insbesondere eine acyclische oder cyclische Carbonatgruppe, und/oder mindestens eine Alkylenoxidgruppe, beispielsweise eine Ethylenoxidgruppe, insbesondere eine Oligo- oder Polyalkylenoxidgruppe, beispielsweise eine Oligo- oder Polyethylenoxidgruppe, und/oder mindestens eine Polysiloxangruppe umfasst. So kann vorteilhafterweise die Lithiumionenmobilität und dadurch die Lithiumionenleitfähigkeit verbessert werden.

Wie bereits erläutert können Carbonsäureestergruppen, wie acyclische oder cyclische Carbonatgruppen und/oder Estergruppen und/oder Lactongruppen, vorteilhafterweise kathodisch stabiler als Alkylenoxidgruppen, wie Ethylenoxid, sein, wodurch eine höhere Hochvoltstabilität erzielt werden kann, was insbesondere im Fall einer Anwendung als Katholyt mit Kathodenaktivmaterialien, wie Nickel-Cobalt-Aluminium-Oxid (NCA), vorteilhaft sein kann. Die mindestens eine, mit einem lithiumionenleitfähigen Substituenten substituierte Alkylenoxidgruppe, insbesondere Methylenoxidgruppe, kann daher insbesondere mindestens eine, mit einem lithiumionenleitfähigen Substituenten substituierte Alkylenoxidgruppe, insbesondere Methylenoxidgruppe, umfassen oder sein, deren lithiumionenleitfähiger Substituent mindestens eine, beispielsweise eingebundene oder endständige, Carbonsäureestergruppe, zum Beispiel eine acyclische oder cyclische Carbonatgruppe und/oder Estergruppe und/oder Lactongruppe, insbesondere eine acyclische oder cyclische Carbonatgruppe, umfasst. Gegebenenfalls kann die mindestens eine, mit einem lithiumionenleitfähigen Substituenten substituierte Alkylenoxidgruppe, insbesondere Methylenoxidgruppe, auch mindestens eine, mit einem lithiumionenleitfähigen Substituenten substituierte Alkylenoxidgruppe, insbesondere Methylenoxidgruppe, umfassen oder sein, deren lithiumionenleitfähiger Substituent mindestens eine oder auch mehrere derartige Gruppen umfasst, und zum Beispiel ein Mono-, Oligo- oder Polycarbonat ist.

Die mindestens eine, mit einem lithiumionenleitfähigen Substituenten substituierte Alkylenoxidgruppe, insbesondere Methylenoxidgruppe, kann jedoch beispielsweise auch mindestens eine, mit einem lithiumionenleitfähigen Substituenten substituierte Alkylenoxidgruppe, insbesondere Methylenoxidgruppe, umfassen oder sein, deren lithiumionenleitfähiger Substituent mindestens eine Carbonsäureestergruppe, zum Beispiel eine acyclische oder cyclische Carbonatgruppe und/oder Estergruppe und/oder Lactongruppe, insbesondere eine acyclische oder cyclische Carbonatgruppe, und mindestens eine Alkylenoxidgruppe, beispielsweise eine Ethylenoxidgruppe, insbesondere eine Oligo- oder Polyalkylenoxidgruppe, beispielsweise eine Oligo-oder Polyethylenoxidgruppe, umfasst. Dabei kann die mindestens eine Carbonsäureestergruppe insbesondere eine endständige cyclische Carbonatgruppe und/oder Estergruppe und/oder Lactongruppe und/oder eine eingebundene acyclische Carbonatgruppe umfassen oder sein.

Weiterhin kann der lithiumionenleitfähige Substituent der mindestens einen, mit einem lithiumionenleitfähigen Substituenten substituierten Alkylenoxidgruppe, insbesondere Methylenoxidgruppe, gegebenenfalls mindestens eine Alkylengruppe, beispielsweise eine Methylengruppe und/oder Ethylengruppe und/oder Propylengruppe, und/oder beispielsweise mindestens eine, beispielsweise endständige, Alkylgruppe, zum Beispiel Methylgruppe, umfassen.

Zum Beispiel kann der mindestens eine lithiumionenleitfähige Substituent der mindestens einen, mit einem lithiumionenleitfähigen Substituenten substituierten Alkylenoxidgruppe, insbesondere Methylenoxidgruppe, ein, insbesondere alkylterminiertes, beispielsweise methylterminiertes, Poly(alkylencarbonat), beispielsweise der allgemeinen chemischen Formel: -(O-C=O-O-CH₂-CH₂-CH₂)ₚ-CH₃, und/oder ein, insbesondere alkylterminiertes, beispielsweise methylterminiertes, Oligo- oder Polyethylenoxid, insbesondere Polyethylenglycol, beispielsweise der Formel -(CH₂-CH₂-O)ₚ-CH₃, umfassen.

Die mindestens eine, mit einem lithiumionenleitfähigen Substituenten substituierte Alkylenoxidgruppe, insbesondere Methylenoxidgruppe, kann beispielsweise mindestens eine Alkylenoxidgruppe, insbesondere Methylenoxidgruppe, umfassen oder sein, welche alkylsubstituiert, beispielsweise methylsubstituiert, zum Beispiel zweifach alkylsubstituiert, beispielsweise zweifach methylsubstituiert, ist und einen lithiumionenleitfähigen Substituenten umfasst. Beispielsweise kann die mindestens eine, mit einem lithiumionenleitfähigen Substituenten substituierte Alkylenoxidgruppe, insbesondere Methylenoxidgruppe, die allgemeine Formel: -CR1R2-O-R3 aufweisen. Dabei können die Alkylsubstituenten, insbesondere R1 und R2, beispielsweise gleich oder unterschiedlich sein und/oder für Wasserstoff oder eine Methylgruppe oder Ethylgruppe oder Propylgruppe stehen. Zum Beispiel können die Alkylsubstituenten, insbesondere R1 und R2, gleich sein und/oder für eine Methylgruppe stehen.

R3 kann dabei insbesondere mindestens eine, beispielsweise eingebundene oder endständige, Carbonsäureestergruppe, zum Beispiel eine acyclische oder cyclische Carbonatgruppe und/oder Estergruppe und/oder Lactongruppe, insbesondere eine acyclische oder cyclische Carbonatgruppe, und/oder mindestens eine Alkylenoxidgruppe, beispielsweise eine Ethylenoxidgruppe, insbesondere eine Oligo- oder Polyalkylenoxidgruppe, beispielsweise eine Oligo-oder Polyethylenoxidgruppe, und/oder mindestens eine Polysiloxangruppe umfassen oder sein. Insbesondere kann R3 zumindest mindestens eine, beispielsweise eingebundene oder endständige, Carbonsäureestergruppe, zum Beispiel eine acyclische oder cyclische Carbonatgruppe und/oder Estergruppe und/oder Lactongruppe, insbesondere eine acyclische oder cyclische Carbonatgruppe, umfassen oder sein. Zum Beispiel kann R3 mindestens eine oder auch mehrere derartige Gruppen umfasst, und zum Beispiel ein Mono-, Oligo- oder Polycarbonat umfassen oder sein. Beispielsweise kann R3 jedoch auch mindestens eine Carbonsäureestergruppe, zum Beispiel eine acyclische oder cyclische Carbonatgruppe und/oder Estergruppe und/oder Lactongruppe, insbesondere eine acyclische oder cyclische Carbonatgruppe, und mindestens eine Alkylenoxidgruppe, beispielsweise eine Ethylenoxidgruppe, insbesondere eine Oligo- oder Polyalkylenoxidgruppe, beispielsweise eine Oligo- oder Polyethylenoxidgruppe, umfassen oder sein. Dabei kann die mindestens eine Carbonsäureestergruppe insbesondere eine endständige cyclische Carbonatgruppe und/oder Estergruppe und/oder Lactongruppe und/oder eine eingebundene acyclische Carbonatgruppe umfassen oder sein. Weiterhin kann R3 mindestens eine Alkylengruppe, beispielsweise eine Methylengruppe und/oder Ethylengruppe und/oder Propylengruppe, und/oder beispielsweise mindestens eine, beispielsweise endständige, Alkylgruppe, zum Beispiel Methylgruppe, umfassen. Zum Beispiel kann R3 ein, insbesondere alkylterminiertes, beispielsweise methylterminiertes, Poly(alkylencarbonat), beispielsweise der allgemeinen chemischen Formel: -(O-C=O-O-CH₂-CH₂-CH₂)ₚ-CH₃, und/oder ein, insbesondere alkylterminiertes, beispielsweise methylterminiertes, Oligo- oder Polyethylenoxid, insbesondere Polyethylenglycol, beispielsweise der Formel -(CH₂-CH₂-O)ₚ-CH₃, umfassen oder sein.

Im Rahmen einer weiteren Ausführungsform umfasst der Polymerelektrolyt beziehungsweise der einzelionenleitende Lithium-Polyelektrolyt mindestens eine Lithium-Trihalogenborat-Phenylen-Gruppe, insbesondere der allgemeinen Formel: -C₆R₄-BY₃⁻Li⁺, beispielsweise mindestes eine Lithium-Trifluorborat-Phenylen-Gruppe, insbesondere der allgemeinen Formel: -C₆R₄-BF₃⁻Li⁺, und/oder mindestens eine Lithium-Trihalogenborat-Alkylenoxid-Phenylen-Gruppe, beispielsweise Lithium-Trihalogenborat-Methylenoxid-Phenylen-Gruppe, insbesondere der allgemeinen Formel: -C₆R₄-CR1R2-O-BY₃⁻Li⁺, beispielsweise mindestes eine Lithium-Trifluorborat-Alkylenoxid-Phenylen-Gruppe, zum Beispiel Lithium-Trifluorborat-Methylenoxid-Phenylen-Gruppe, insbesondere der allgemeinen Formel: -C₆R₄-CR1R2-O-BF₃⁻Li⁺, und/oder mindestens eine Lithium-Alkanolat-Phenylen-Gruppe, beispielsweise Lithium-Methanolat-Phenylen-Gruppe, insbesondere der allgemeinen Formel: -C₆R₄-CR1R2-O⁻Li⁺, und/oder mindestens eine, mit einem lithiumionenleitfähigen Substituenten substituierte Alkylenoxid-Phenylen-Gruppe, beispielsweise Methylenoxid-Phenylen-Gruppe, insbesondere der allgemeinen Formel: -C₆R₄-CR1R2-O-R3.

Y, R1, R2 und/oder R3 können dabei insbesondere wie vorstehend erläutert ausgestaltet sein. Die R können beispielsweise jeweils unabhängig voneinander für Wasserstoff oder Fluor oder einen weiteren lithiumionenleitfähigen Substituenten, insbesondere welcher wie im Zusammenhang mit dem bereits beschriebenen lithiumionenleitfähigen Substituenten erläutert ausgestaltet sein kann, oder eine Alkylgruppe, beispielsweise eine Methylgruppe oder eine Ethylgruppe oder eine Propylgruppe, stehen.

Derartige Polymerelektrolyte, beispielsweise einzelionenleitende Lithium-Polyelektrolyte, können beispielsweise aus einem Polyhalogenstyrol, zum Beispiel Polybromstyrol, beispielsweise Poly(p-bromstyrol), und/oder aus einem Halogenphenyl-substituierten Polyalkylenoxid, beispielsweise einem Bromphenyl-substituierten Polyalkylenoxid, zum Beispiel p-Bromphenyl-substituiertem Polyethylenoxid, durch Umsetzung mit einem Alkyllithium und einer anschließenden zumindest teilweisen Umsetzung des jeweils resultierenden lithiierten Polymers mit mindestens einem Bortrihalogenid, beispielsweise Bortrifluorid, und/oder mit mindestens einer Carbonylverbindung, beispielsweise Aceton, sowie gegebenenfalls mit mindestens einem lithiumionenleitfähigen Substituenten mit einer nukleofugen Abgangsgruppe erhältlich sein.

Im Rahmen einer weiteren Ausführungsform umfasst der Polymerelektrolyt beziehungsweise der einzelionenleitende Lithium-Polyelektrolyt mindestens eine Lithium-Trihalogenborat-Phenylenoxid-Gruppe, insbesondere der allgemeinen Formel: -C₆R₄-O-BY₃⁻Li⁺, beispielsweise mindestes eine Lithium-Trifluorborat-Phenylenoxid-Gruppe, insbesondere der allgemeinen Formel: -C6R4-O-BF₃⁻Li⁺, und/oder mindestens eine Lithium-Trihalogenborat-Alkylenoxid-Phenylenoxid-Gruppe, beispielsweise Lithium-Trihalogenborat-Methylenoxid-Phenylenoxid-Gruppe, insbesondere der allgemeinen Formel: -C₆R₄-O-CR1R2-O-BY₃⁻Li⁺, beispielsweise mindestes eine Lithium-Trifluorborat-Alkylenoxid-Phenylenoxid-Gruppe, zum Beispiel Lithium-Trifluorborat-Methylenoxid-Phenylenoxid-Gruppe, insbesondere der allgemeinen Formel: -C₆R₄-O-CR1R2-O-BF₃⁻Li⁺, und/oder mindestens eine Lithium-Alkanolat-Phenylenoxid-Gruppe, beispielsweise Lithium-Methanolat-Phenylenoxid-Gruppe, insbesondere der allgemeinen Formel: -C₆R₄-O-CR1R2-O⁻Li⁺, und/oder mindestens eine, mit einem lithiumionenleitfähigen Substituenten substituierte Alkylenoxid-Phenylenoxid-Gruppe, beispielsweise Methylenoxid-Phenylenoxid-Gruppe, insbesondere der allgemeinen Formel: -C₆R₄-O-CR1R2-O-R3.

Y, R1, R2, R3 und/oder R können dabei insbesondere wie vorstehend erläutert ausgestaltet sein.

Derartige Polymerelektrolyte, beispielsweise einzelionenleitende Lithium-Polyelektrolyte, können beispielsweise aus einem Polyhydroxystyrol, beispielsweise Poly(p-hydroxystyrol), und/oder aus einem Hydroxyphenylsubstituierten Polyalkylenoxid, zum Beispiel p-Hydroxyphenyl-substituiertem Polyethylenoxid, durch Umsetzung mit einem Alkyllithium und einer anschließenden zumindest teilweisen Umsetzung des jeweils resultierenden lithiierten Polymers mit mindestens einem Bortrihalogenid, beispielsweise Bortrifluorid, und/oder mit mindestens einer Carbonylverbindung, beispielsweise Aceton, sowie gegebenenfalls mit mindestens einem lithiumionenleitfähigen Substituenten mit einer nukleofugen Abgangsgruppe erhältlich sein.

Im Rahmen einer weiteren Ausführungsform umfasst der Polymerelektrolyt beziehungsweise der einzelionenleitende Lithium-Polyelektrolyt mindestens eine Lithium-Trihalogenborat-Oxid-Gruppe, insbesondere der allgemeinen Formel: -0-BY₃⁻Li⁺, beispielsweise mindestes eine Lithium-Trifluorborat-Oxid-Gruppe, insbesondere der allgemeinen Formel: -O-BF₃⁻Li⁺, und/oder mindestens eine Lithium-Trihalogenborat-Alkylenoxid-Oxid-Gruppe, beispielsweise Lithium-Trihalogenborat-Methylenoxid-Oxid-Gruppe, insbesondere der allgemeinen Formel: -O-CR1R2-O-BY₃⁻Li⁺, beispielsweise mindestes eine Lithium-Trifluorborat-Alkylenoxid-Oxid-Gruppe, zum Beispiel Lithium-Trifluorborat-Methylenoxid-Oxid-Gruppe, insbesondere der allgemeinen Formel: -O-CR1R2-O-BF₃⁻Li⁺, und/oder mindestens eine Lithium-Alkanolat-Oxid-Gruppe, beispielsweise Lithium-Methanolat-Oxid-Gruppe, insbesondere der allgemeinen Formel: -O-CR1R2-O⁻Li⁺, und/oder mindestens eine, mit einem lithiumionenleitfähigen Substituenten substituierte Alkylenoxid-Oxid-Gruppe, beispielsweise Methylenoxid-Oxid-Gruppe, insbesondere der allgemeinen Formel: -O-CR1R2-O-R3. Y, R1, R2 und/oder R3 können dabei insbesondere wie vorstehend erläutert ausgestaltet sein.

Derartige Polymerelektrolyte, beispielsweise einzelionenleitende Lithium-Polyelektrolyte, können beispielsweise aus einem Polyvinylalkohol durch Umsetzung mit einem Alkyllithium und einer anschließenden zumindest teilweisen Umsetzung des jeweils resultierenden lithiierten Polymers mit mindestens einem Bortrihalogenid, beispielsweise Bortrifluorid, und/oder mit mindestens einer Carbonylverbindung, beispielsweise Aceton, sowie gegebenenfalls mit mindestens einem lithiumionenleitfähigen Substituenten mit einer nukleofugen Abgangsgruppe erhältlich sein.

Der Polymerelektrolyt beziehungsweise der einzelionenleitende Lithium-Polyelektrolyt kann insbesondere mindestens eine Seitengruppe aufweisen, welche mindestens eine, wie vorstehend erläutert ausgestaltete Lithium-Trihalogenboratgruppe und/oder mindestens eine, wie vorstehend erläutert ausgestaltete Lithium-Alkanolatgruppe beziehungsweise, insbesondere substituierte oder unsubstituierte, Lithium-Methanolatgruppe und/oder mindestens eine, wie vorstehend erläutert ausgestaltete Alkylenoxidgruppe, insbesondere Methylenoxidgruppe, umfasst.

Im Rahmen einer weiteren Ausführungsform umfasst der Polymerelektrolyt, insbesondere der einzelionenleitende Lithium-Polyelektrolyt, mindestens eine Wiederholungseinheit der allgemeinen chemischen Formel:

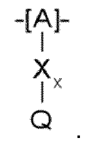

Dabei steht -[A]- für eine Polymerrücken bildende Einheit. X steht dabei für einen, insbesondere kovalent, an den Polymerrücken -[A]- gebundenen Spacer. x steht dabei für die Anzahl, insbesondere das Vorhandensein beziehungsweise die Abwesenheit, des Spacers X. x kann insbesondere 1 oder 0, insbesondere 1, sein. Dabei kann im Fall x = 1 insbesondere ein Spacer X vorhanden sein. Im Fall x = 0 kann insbesondere kein Spacer vorhanden sein. Q steht dabei für eine Gruppe, welche, insbesondere kovalent, an den Spacer X (im Fall x = 1) oder an den Polymerrücken -[A]- (im Fall x = 0) angebunden ist. Insbesondere kann die Gruppe Q über den Spacer X an die Polymerrücken bildende Einheit -[A]-angebunden sein.

Q steht dabei insbesondere für mindestens eine Lithium-Trihalogenboratgruppe, insbesondere Lithium-Trifluorboratgruppe, und/oder mindestens eine Lithium-Trihalogenborat-Alkylenoxidgruppe, insbesondere Lithium-Trihalogenborat-Methylenoxidgruppe, zum Beispiel Lithium-Trifluorborat-Alkylenoxidgruppe, insbesondere Lithium-Trifluorborat-Methylenoxidgruppe, und/oder mindestens eine Lithium-Alkanolatgruppe beziehungsweise, insbesondere substituierte oder unsubstituierte, Lithium-Methanolatgruppe und/oder mindestens eine, mit einem lithiumionenleitfähigen Substituenten substituierte Alkylenoxidgruppe, insbesondere Methylenoxidgruppe. Die Gruppen Q können insbesondere wie vorstehend erläutert ausgestaltet sein.

Im Rahmen einer weiteren Ausführungsform umfasst der Polymerelektrolyt, insbesondere der einzelionenleitende Lithium-Polyelektrolyt, mindestens eine Wiederholungseinheit der allgemeinen chemischen Formel: 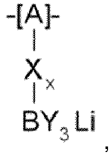 insbesondere 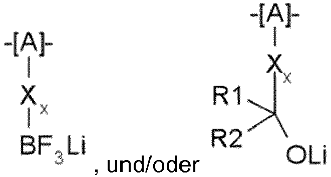 und/oder 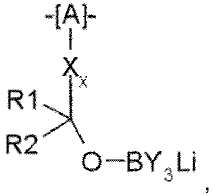 insbesondere 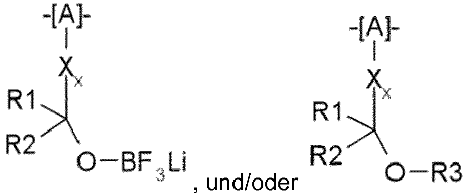 umfassen.

Y, R1, R2 und/oder R3 können hierbei sowie im Folgenden insbesondere wie vorstehend erläutert ausgestaltet sein.

Im Rahmen einer Ausgestaltung dieser Ausführungsform umfasst der Polymerelektrolyt, insbesondere der einzelionenleitende Lithium-Polyelektrolyt, mindestens eine derartige Wiederholungseinheit, wobei Q für mindestens eine Lithium-Trihalogenboratgruppe, insbesondere Lithium-Trifluorboratgruppe, und/oder mindestens eine Lithium-Trihalogenborat-Alkylenoxidgruppe, insbesondere Lithium-Trihalogenborat-Methylenoxidgruppe, zum Beispiel Lithium-Trifluorborat-Alkylenoxidgruppe, insbesondere Lithium-Trifluorborat-Methylenoxidgruppe, und/oder mindestens eine Lithium-Alkanolatgruppe beziehungsweise, insbesondere substituierte oder unsubstituierte, Lithium-Methanolatgruppe steht. Derartige Polymerelektrolyte sind vorteilhafterweise einzelionenleitende Lithium-Polyelektrolyte. Zum Beispiel kann der einzelionenleitende Lithium-Polyelektrolyt, mindestens eine Wiederholungseinheit der allgemeinen chemischen Formel: 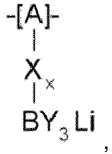 insbesondere 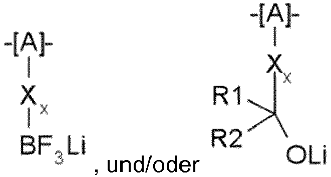 und/oder 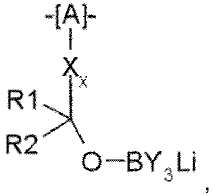 insbesondere 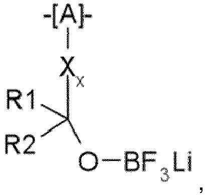 umfassen.

Im Rahmen einer anderen, zusätzlichen oder alternativen Ausgestaltung dieser Ausführungsform umfasst Polymerelektrolyt mindestens eine derartige Wiederholungseinheit, wobei Q für mindestens eine, mit einem lithiumionenleitfähigen Substituenten substituierte Alkylenoxidgruppe, insbesondere Methylenoxidgruppe, steht. Insbesondere kann dabei Q für mindestens eine, mit einem lithiumionenleitfähigen Substituenten substituierte Alkylenoxidgruppe, insbesondere Methylenoxidgruppe, stehen, deren lithiumionenleitfähiger Substituent mindestens eine Carbonsäureestergruppe, insbesondere eine acyclische oder cyclische Carbonatgruppe und/oder Estergruppe und/oder Lactongruppe, und/oder mindestens eine Alkylenoxidgruppe, insbesondere eine Oligo- oder Polyalkylenoxidgruppe und/oder mindestens eine Polysiloxangruppe umfasst. Der lithiumionenleitfähige Substituent kann dabei wie vorstehend erläutert ausgestaltet sein. Zum Beispiel kann der Polymerelektrolyt dabei mindestens eine Wiederholungseinheit der allgemeinen chemischen Formel: 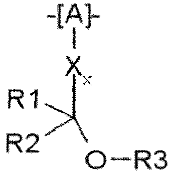 umfassen.

Im Rahmen einer weiteren Ausführungsform steht die Polymerrücken bildende Einheit -[A]- für 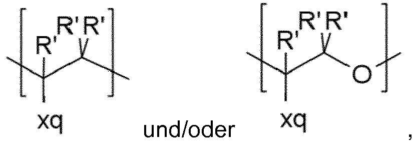 insbesondere 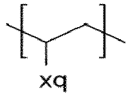 und/oder 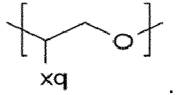 Dabei steht xq für die Anbindungsstelle des Spacers X und/oder der Gruppe Q.

Im Rahmen einer weiteren alternativen oder zusätzlichen Ausführungsform steht der Spacer X für eine Phenylengruppe, insbesondere eine p-Phenylengruppe, und/oder ein Sauerstoffatom, insbesondere einen Ethersauerstoff, wobei x gleich 1 ist.

Beispielsweise kann der Polymerelektrolyt, insbesondere Polyelektrolyt, mindestens eine Wiederholungseinheit der allgemeinen chemischen Formel: 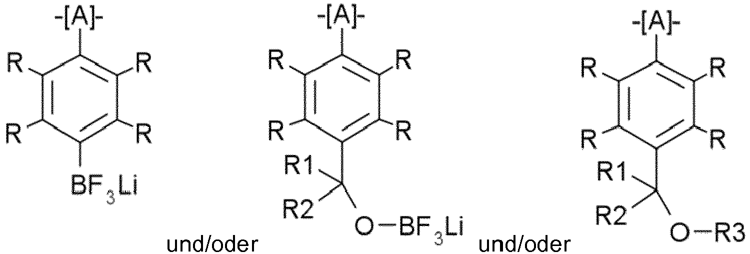 und/oder 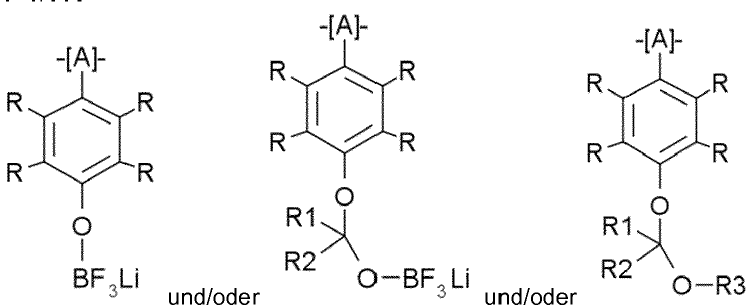 und/oder 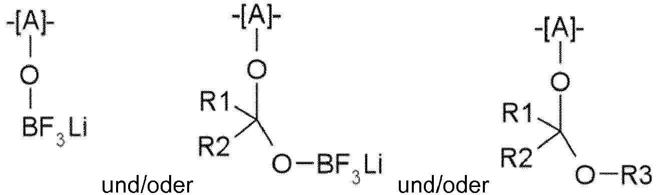 umfassen.

Im Rahmen einer weiteren Ausführungsform umfasst der Polymerelektrolyt, insbesondere der einzelionenleitende Lithium-Polyelektrolyt, mindestens eine Wiederholungseinheit der allgemeinen chemischen Formel: 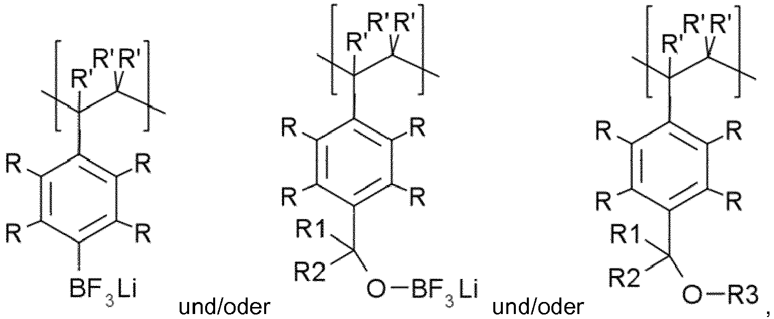 und/oder 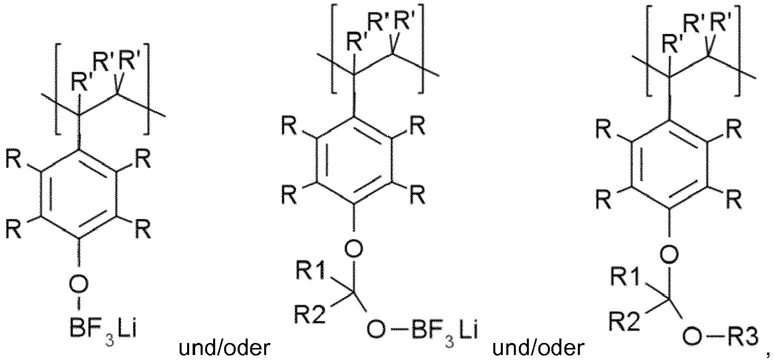 und/oder 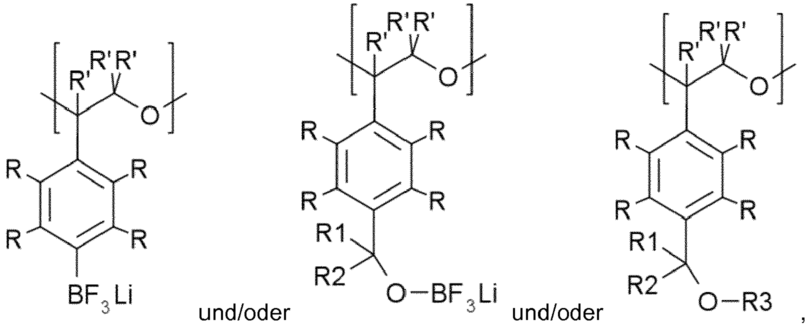 und/oder 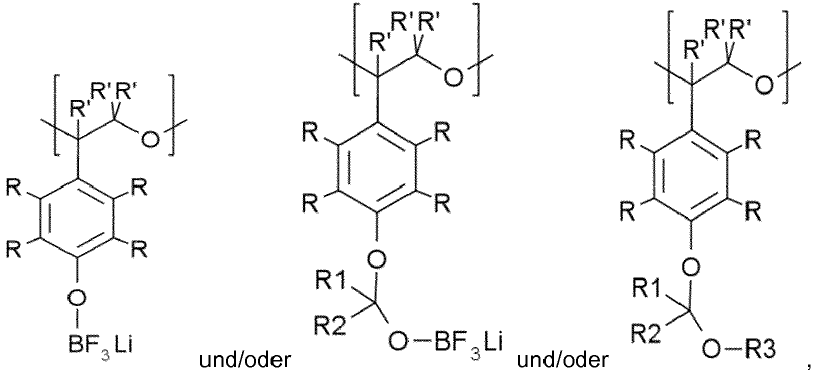 und/oder

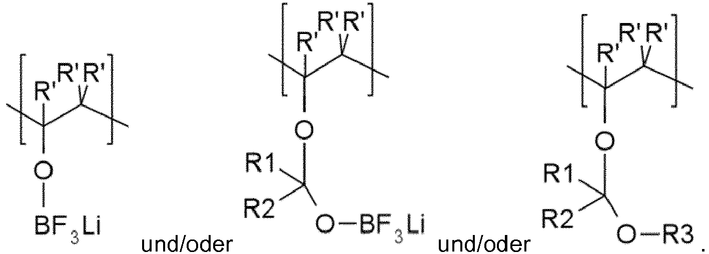

Die R können beispielsweise jeweils unabhängig voneinander für Wasserstoff oder Fluor oder einen weiteren lithiumionenleitfähigen Substituenten, insbesondere welcher wie im Zusammenhang mit dem bereits beschriebenen lithiumionenleitfähigen Substituenten erläutert ausgestaltet sein kann, oder eine Alkylgruppe, beispielsweise eine Methylgruppe oder eine Ethylgruppe oder eine Propylgruppe, stehen.

Die R' können beispielsweise jeweils unabhängig voneinander für Wasserstoff oder Fluor oder einen weiteren lithiumionenleitfähigen Substituenten, insbesondere welcher wie im Zusammenhang mit dem bereits beschriebenen lithiumionenleitfähigen Substituenten erläutert ausgestaltet sein kann, oder eine Alkylgruppe, beispielsweise eine Methylgruppe oder eine Ethylgruppe oder eine Propylgruppe, stehen.

Beispielsweise können die R und/oder R' für Fluor und/oder einen weiteren lithiumionenleitfähigen Substituenten stehen. So kann vorteilhafterweise die Lithiumionenmobilität erhöht werden. Oder R' und/oder R können für Wasserstoff stehen. So kann vorteilhafterweise die Herstellung vereinfacht werden.

Die R und/oder R' können im Folgenden insbesondere wie vorstehend erläutert ausgestaltet sein.

Im Rahmen einer Ausgestaltung dieser Ausführungsform umfasst der Polymerelektrolyt, insbesondere der einzelionenleitende Polyelektrolyt, mindestens eine Wiederholungseinheit der allgemeinen chemischen Formel 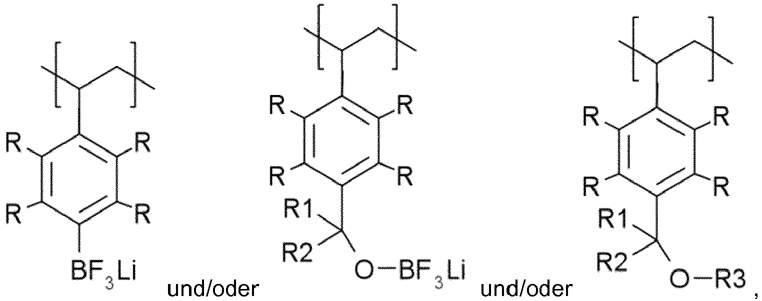 und/oder 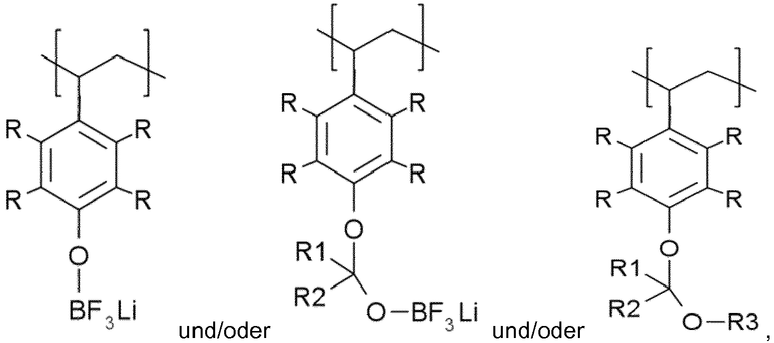 und/oder 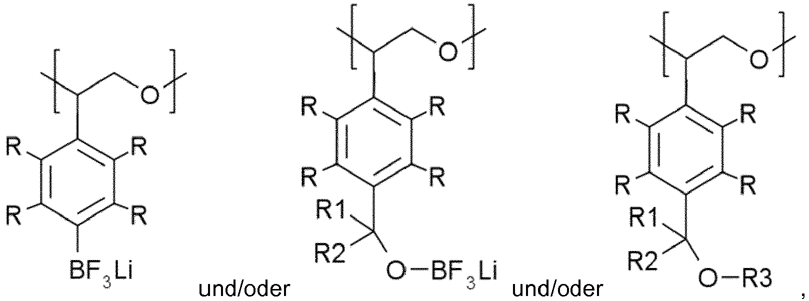 und/oder 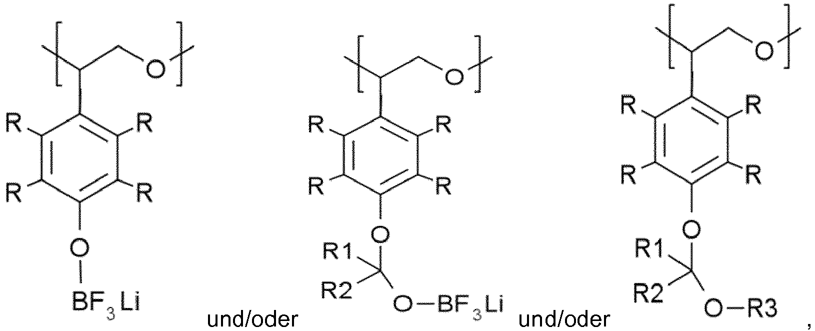 und/oder

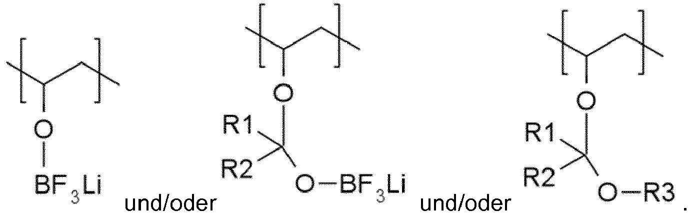

Polymerelektrolyte mit derartigen Wiederholungseinheiten können vorteilhafterweise aus besonders kostengünstigen, gut erhältlichen und/oder umweltfreundlichen Ausgangsmaterialien hergestellt werden.

Exemplarische Beispiele für Wiederholungseinheiten der allgemeinen chemischen Formel: 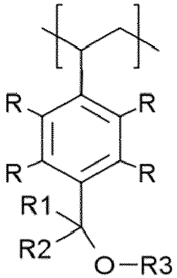 können beispielsweise Wiederholungseinheiten der Formeln: 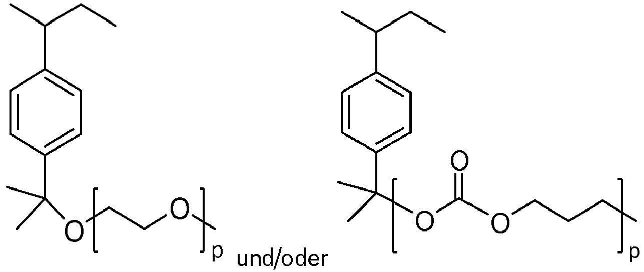 sein.

Im Rahmen einer weiteren Ausführungsform ist der Polymerelektrolyt ein einzelionenleitender Lithium-Polyelektrolyt.

Dabei kann der einzelionenleitende Lithium-Polyelektrolyt insbesondere mindestens eine Lithium einzelionenleitende Wiederholungseinheit der allgemeinen chemischen Formel: 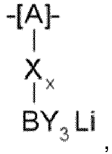 insbesondere 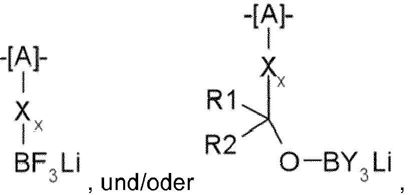 insbesondere 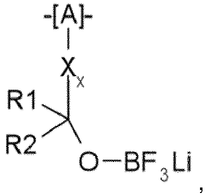 umfassen.

Beispielsweise kann der einzelionenleitende Lithium-Polyelektrolyt mindestens eine Lithium einzelionenleitende Wiederholungseinheit der allgemeinen chemischen Formel: 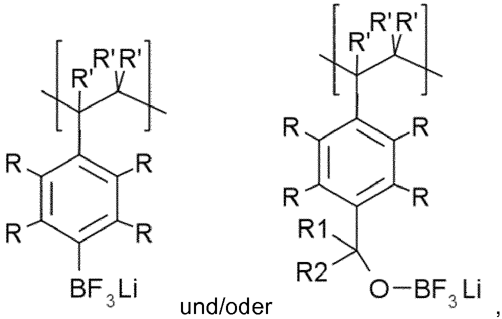 und/oder 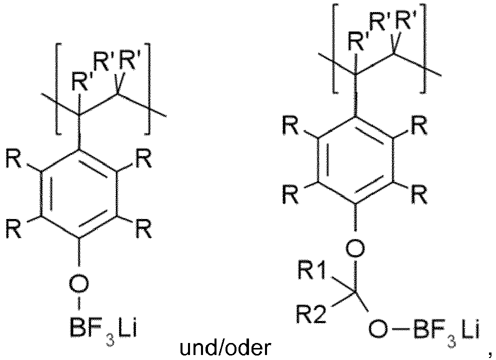 und/oder 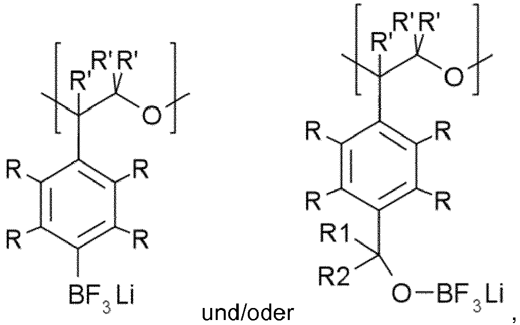 und/oder 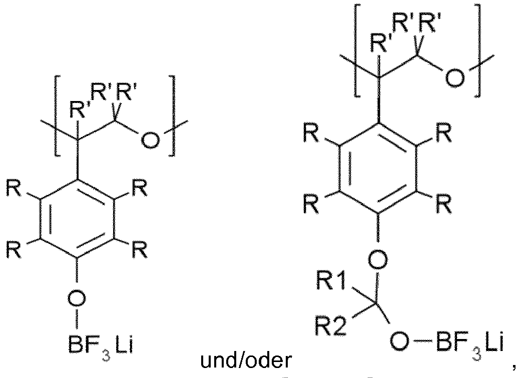 und/oder 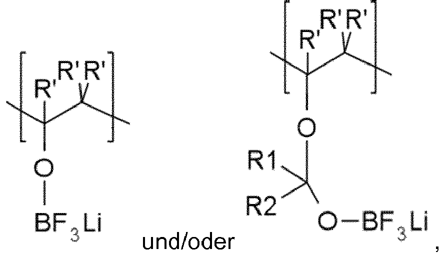 umfassen.

Zum Beispiel der einzelionenleitende Lithium-Polyelektrolyt mindestens eine Lithium einzelionenleitende Wiederholungseinheit der allgemeinen chemischen Formel: 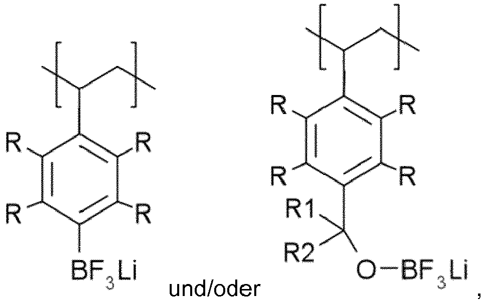 und/oder 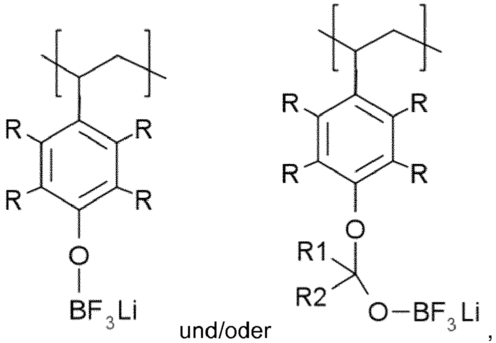 und/oder 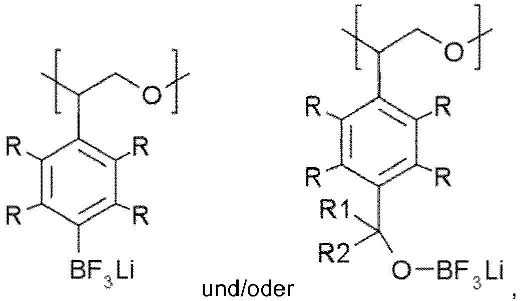 und/oder 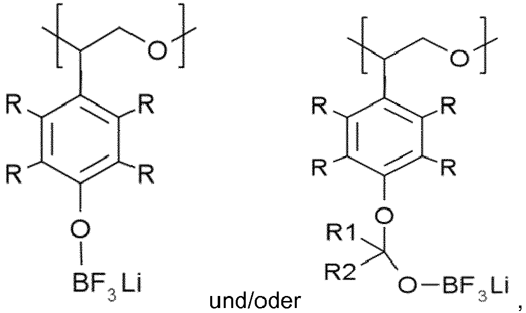 und/oder 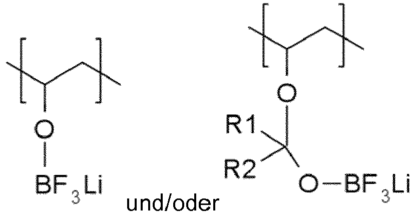 umfassen.

Im Rahmen einer weiteren Ausführungsform umfasst der Polymerelektrolyt beziehungsweise der einzelionenleitende Lithium-Polyelektrolyt, insbesondere weiterhin, mindestens eine lithiumionenleitfähige Wiederholungseinheit.

Zum Beispiel kann der Polymerelektrolyt beziehungsweise der einzelionenleitende Lithium-Polyelektrolyt mindestens eine lithiumionenleitfähige Wiederholungseinheit der allgemeinen chemischen Formel: 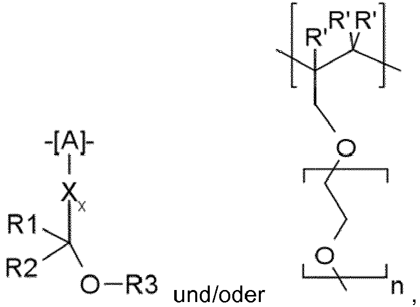 beispielsweise 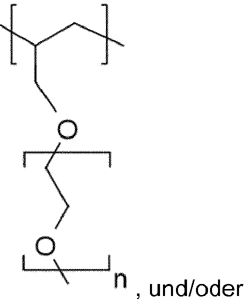 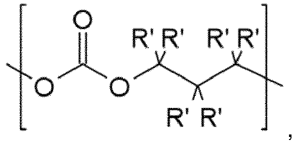 beispielsweise 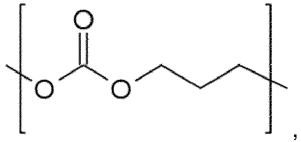 umfassen.

Beispielsweise kann der Polymerelektrolyt beziehungsweise der einzelionenleitende Lithium-Polyelektrolyt mindestens eine lithiumionenleitfähige Wiederholungseinheit der allgemeinen chemischen Formel: 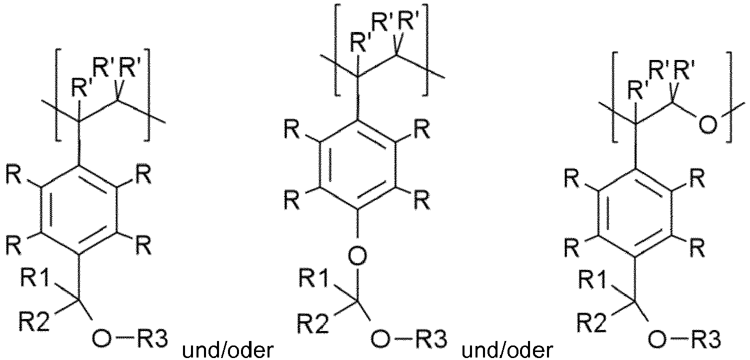 und/oder 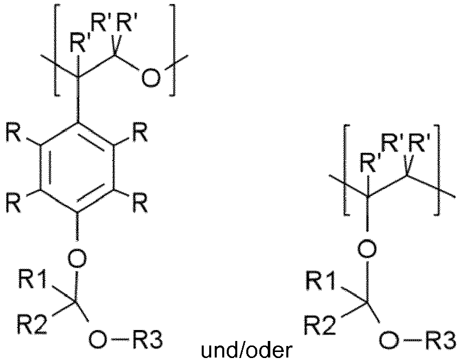 umfassen.

Zum Beispiel kann der einzelionenleitende Lithium-Polyelektrolyt mindestens eine lithiumionenleitfähige Wiederholungseinheit der allgemeinen chemischen Formel: 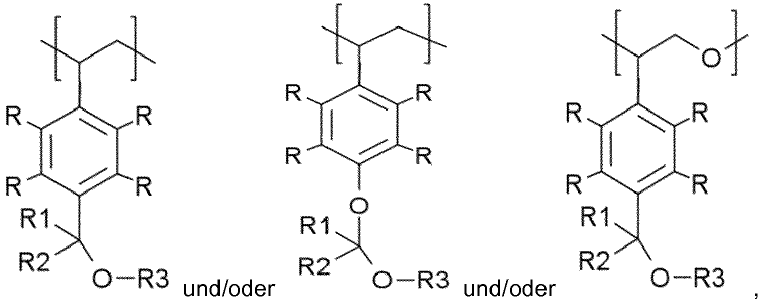 und/oder 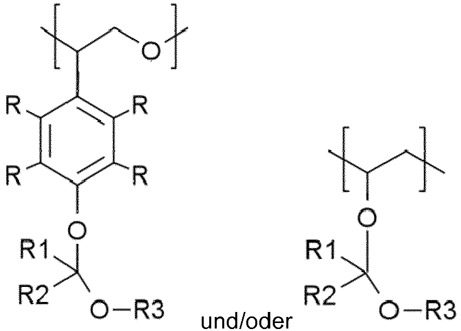 umfassen.

Im Rahmen einer weiteren Ausführungsform umfasst der Polymerelektrolyt beziehungsweise der einzelionenleitende Lithium-Polyelektrolyt weiterhin mindestens eine mechanisch stabilisierende Wiederholungseinheit.

Unter einer mechanisch stabilisierenden Wiederholungseinheit kann insbesondere eine Wiederholungseinheit verstanden werden, welche rigide Gruppen, insbesondere aromatische Gruppen, umfasst. Beispielsweise kann die mechanisch stabilisierende Wiederholungseinheit eine aromatische Gruppe umfassen. Zum Beispiel kann die mechanisch stabilisierende Wiederholungseinheit eine Styrol- und/oder Phenylen-basierte Einheit sein. Die mindestens eine mechanisch stabilisierende Wiederholungseinheit kann insbesondere zur Ausbildung eines mechanisch stabilisierenden Polymers ausgelegt sein.

Beispielsweise kann die mindestens eine mechanisch stabilisierende Wiederholungseinheit eine Styrol- und/oder Alkylstyrol-basierte Wiederholungseinheit umfassen oder sein.

Unter einer Styrol-basierten Wiederholungseinheit kann insbesondere eine durch Polymerisation von Styrol erhältliche Wiederholungseinheit verstanden werden.

Unter einer Alkylstyrol-basierten Wiederholungseinheit kann insbesondere eine durch Polymerisation eines Alkylstyrols erhältliche Wiederholungseinheit verstanden werden.

Insbesondere kann die mindestens eine mechanisch stabilisierende Wiederholungseinheit eine Styrol-basierte Wiederholungseinheit umfassen oder sein.

Im Rahmen einer weiteren Ausführungsform umfasst oder ist der Polymerelektrolyt beziehungsweise der einzelionenleitende Lithium-Polyelektrolyt ein Copolymer, welches mindestens eine Lithium einzelionenleitende Wiederholungseinheit, insbesondere mindestens eine erfindungsgemäße Lithium einzelionenleitende Wiederholungseinheit, und mindestens eine lithiumionenleitfähige Wiederholungseinheit, beispielsweise mindestens eine vorstehend beschriebene lithiumionenleitfähige Wiederholungseinheit, insbesondere mindestens eine erfindungsgemäße lithiumionenleitfähige Wiederholungseinheit, und/oder mindestens eine mechanisch stabilisierende Wiederholungseinheit, beispielsweise mindestens eine Styrol- und/oder Alkylstyrol-basierte, insbesondere Styrol-basierte, Wiederholungseinheit, umfasst.

Im Rahmen einer weiteren Ausführungsform ist das Copolymer ein Block-Copolymer, beispielsweise ein Di-Block-Copolymer oder ein Tri-Block-Copolymer, welches mindestens einen, insbesondere Lithium einzelionenleitenden, Block aus mindestens einer erfindungsgemäßen Lithium einzelionenleitenden Wiederholungseinheit und mindestens einen, insbesondere mechanisch stabilisierenden, Block aus mindestens einer mechanisch stabilisierenden Wiederholungseinheit, beispielsweise aus mindestens einer Styrol- und/oder Alkylstyrol-basierten, insbesondere Styrol-basierten, Wiederholungseinheit, umfasst.

Im Rahmen einer Ausgestaltung dieser Ausführungsform umfasst der, insbesondere Lithium einzelionenleitende, Block weiterhin mindestens eine lithiumionenleitfähige Wiederholungseinheit, beispielsweise mindestens eine vorstehend beschriebene lithiumionenleitfähige Wiederholungseinheit, insbesondere mindestens eine erfindungsgemäße lithiumionenleitfähige Wiederholungseinheit.

Im Rahmen einer weiteren, alternativen oder zusätzlichen Ausgestaltung dieser Ausführungsform umfasst das Copolymer weiterhin einen, insbesondere lithiumionenleitfähigen, Block aus mindestens einer lithiumionenleitfähigen Wiederholungseinheit, beispielsweise aus mindestens einer vorstehend beschriebenen lithiumionenleitfähigen Wiederholungseinheit, insbesondere aus mindestens einer erfindungsgemäßen lithiumionenleitfähigen Wiederholungseinheit.

Im Rahmen einer weiteren Ausführungsform umfasst oder ist der Polymerelektrolyt beziehungsweise der einzelionenleitende Lithium-Polyelektrolyt eine Polymermischung, welche mindestens einen erfindungsgemäßen einzelionenleitenden Lithium-Polyelektrolyten und mindestens ein lithiumionenleitfähiges Polymer, beispielsweise mit mindestens einer vorstehend beschriebenen lithiumionenleitfähigen Wiederholungseinheit, insbesondere mit mindestens einer erfindungsgemäßen lithiumionenleitfähigen Wiederholungseinheit, und/oder mindestens ein mechanisch stabilisierendes Polymer, beispielsweise mindestens ein Styrol- und/oder Alkylstyrol-basiertes Polymer, insbesondere mindestens ein Styrol-basiertes Polymer.

Hinsichtlich weiterer technischer Merkmale und Vorteile der erfindungsgemäßen Polymerelektrolyte, insbesondere einzelionenleitenden Polyelektrolyte, wird hiermit explizit auf die Erläuterungen im Zusammenhang mit dem erfindungsgemäßen Verfahren, der erfindungsgemäßen Zelle, Kathode, Anode und Schutzschicht und dem erfindungsgemäßen Separator sowie auf die Figuren, die Figurenbeschreibung und die Ausführungsbeispiele verwiesen.

Ferner betrifft die Erfindung eine Lithium-Zelle und/oder eine Kathode und/oder einen Separator und/oder eine Schutzschicht und/oder eine Anode für eine Lithium-Zelle, welche mindestens einen erfindungsgemäß hergestellten Polymerelektrolyten, insbesondere einzelionenleitenden Lithium-Polyelektrolyten, und/oder mindestens einen erfindungsgemäßen Polymerelektrolyten, insbesondere einzelionenleitenden Lithium-Polyelektrolyten, umfasst.

Die Lithium-Zelle kann dabei insbesondere eine Lithium-Ionen-Zelle und/oder Lithium-Metall-Zelle und/oder Lithium-Schwefel-Zelle, insbesondere eine Feststoffzelle, sein.

Zum Beispiel kann die Lithium-Zelle eine Kathode und eine Anode umfassen, wobei zwischen der Kathode und der Anode ein Separator und/oder eine Schutzschicht angeordnet ist, wobei die Kathode und/oder der Separator und/oder die Schutzschicht und/oder die Anode mindestens einen erfindungsgemäß hergestellten Polymerelektrolyten, insbesondere einzelionenleitenden Lithium-Polyelektrolyten, und/oder mindestens einen erfindungsgemäßen Polymerelektrolyten, insbesondere einzelionenleitenden Lithium-Polyelektrolyten, umfasst.

Bei einer Anwendung im Separator und/oder in der Schutzschicht kann ein erfindungsgemäß hergestellter, einzelionenleitender Lithium-Polyelektrolyt und/oder ein erfindungsgemäßer einzelionenleitender Lithium-Polyelektrolyt insbesondere selektiv leitend für Kationen, insbesondere Lithiumionen, sein. Dabei kann der erfindungsgemäß hergestellte und/oder erfindungsgemäße, einzelionenleitende Lithium-Polyelektrolyt - verglichen mit Polymerelektrolyten auf Salt-In-Polymer-Basis, zum Beispiel aus Polyethylenoxid (PEO) und Leitsalz - verbesserte Kationentransporteigenschaften und verringerte Konzentrationsüberspannungen sowie einen Sperreffekt für Anionen aufweisen, was vorteilhafterweise eine Realisierung einer hochratenfähigen Zellen ermöglicht. Im Fall eine Lithium-Schwefel-Zelle kann durch einen derartigen Separator und/oder eine derartige Schutzschicht zudem vorteilhafterweise ein Sulfid-Anionen-Shuttle-Mechanismus unterbunden werden.

Der Separator und/oder die Schutzschicht kann insbesondere mindestens einen erfindungsgemäß hergestellten Polymerelektrolyten, insbesondere einzelionenleitenden Lithium-Polyelektrolyten, und/oder mindestens einen erfindungsgemäßen Polymerelektrolyten, insbesondere einzelionenleitenden Lithium-Polyelektrolyten, mit mindestens einer mechanisch stabilisierenden Wiederholungseinheit und/oder auf der Basis eines Copolymeres mit mindestens einer mechanisch stabilisierenden Wiederholungseinheit, insbesondere auf der Basis eines Block-Copolymers mit einem, insbesondere mechanisch stabilisierenden, Block aus mindestens einer mechanisch stabilisierenden Wiederholungseinheit, und/oder einer Polymermischung, welche mindestens ein mechanisch stabilisierendes Polymer umfasst, umfassen. Der Separator und/oder die Schutzschicht kann dabei insbesondere fest sein und vorteilhafterweise eine hohe Lithium-Dendritenbeständigkeit aufweisen. Dies kann insbesondere bei der Verwendung einer Lithium-Metall-Anode vorteilhaft sein.

Die Kathode kann dabei insbesondere eine Feststoffkathode beziehungsweise Festkörperkathode sein.

Die Kathode kann insbesondere mindestens ein Kathodenaktivmaterial, beispielsweise Nickel-Cobalt-Aluminium-Oxid (NCA) und/oder Nickel-Cobalt-Mangan-Oxid (NCM) und/oder Hochenergie-Nickel-Cobalt-Mangan-Oxid (HE-NCM) und/oder Lithium-Mangan-Oxid (LMO) und/oder ein Hochvoltspinell (HV-LMO), insbesondere Nickel-Cobalt-Aluminium-Oxid (NCA), umfassen.

Darüber hinaus kann die Kathode mindestens einen erfindungsgemäß hergestellten Polymerelektrolyten, insbesondere einzelionenleitenden Lithium-Polyelektrolyten, und/oder mindestens einen erfindungsgemäßen Polymerelektrolyten, insbesondere einzelionenleitenden Lithium-Polyelektrolyten, beispielsweise als Katholyt, also als Elektrolyt der Kathode, umfassen.

Weiterhin kann die Kathode mindestens einen elektrischen Leitzusatz, beispielsweise mindestens ein Leitadditiv, wie Ruß und/oder Graphit und/oder Kohlenstoffnanoröhrchen und/oder Nanodrähte, beispielsweise aus Lithium-Lanthan-Titan-Oxid, umfassen.

Die Anode kann dabei insbesondere eine metallische Lithium-Anode beziehungsweise eine Lithium-Metall-Anode sein. So kann vorteilhafterweise eine besonders hohe spezifische Energiedichte erzielt werden.

Es ist jedoch auch möglich eine Anode auf der Basis eines partikulären Anodenaktivmaterials zu verwenden. So kann vorteilhafterweise eine besonders hohe Ratenfähigkeit erzielt werden. Zum Beispiel kann das partikuläre Anodenaktivmaterial ein Lithium-Interkalationsmaterial, zum Beispiel Graphit und/oder amorphen Kohlenstoff und/oder Lithium-Titanat, und/oder ein Lithium-Legierungsmaterial, zum Beispiel Silicium und/oder Zinn, umfassen oder daraus ausgebildet sein. Dabei kann das Anodenaktivmaterial insbesondere in Form von, beispielsweise kugelförmigen und/oder länglichen und/oder flockenartigen und/oder faserförmig, Partikeln ausgebildet und von mindestens einem erfindungsgemäß, hergestellten Polymerelektrolyten, insbesondere einzelionenleitenden Lithium-Polyelektrolyten, und/oder mindestens einem erfindungsgemäßen Polymerelektrolyten, insbesondere einzelionenleitenden Lithium-Polyelektrolyten, beispielsweise als Anolyt, also als Elektrolyt der Anode, umgeben sein.

Weiterhin kann die Zelle und/oder die Kathode und/oder der Separator und/oder die Schutzschicht und/oder die Anode und/oder der erfindungsgemäß hergestellte Polymerelektrolyt, insbesondere einzelionenleitende Lithium-Polyelektrolyt, und/oder der mindestens eine erfindungsgemäße Polymerelektrolyt, insbesondere einzelionenleitende Lithium-Polyelektrolyt, anorganische, insbesondere keramische und/oder glasartige Partikel, beispielsweise oxidische und/oder sulfidische Keramikpartikel und/oder ionenleitende Gläser, umfassen. Diese können gegebenenfalls zur mechanischen Stabilisierung und/oder zur Verbesserung der Leitfähigkeit und/oder zur Verminderung von Grenzflächenwiderständen und/oder zur Verbesserung der Langzeitstabilität, beispielsweise von Grenzflächen zur Anode und/oder zu einem Aktivmaterial, dienen.

Insbesondere kann die Zelle und/oder die Kathode und/oder der Separator und/oder die Schutzschicht und/oder die Anode und/oder der erfindungsgemäß hergestellte Polymerelektrolyt, insbesondere einzelionenleitende Lithium-Polyelektrolyt, und/oder der mindestens eine erfindungsgemäße Polymerelektrolyt, insbesondere einzelionenleitende Lithium-Polyelektrolyt, weiterhin mindestens einen, insbesondere keramischen und/oder glasartigen, anorganischen Lithium-Einzelionenleiter umfassen. Zum Beispiel kann der mindestens eine anorganische Lithium-Einzelionenleiter ein oxidischer und/oder sulfidischer, keramischer und/oder glasartiger, anorganischer Lithium-Einzelionenleiter sein.

Vorteilhafterweise können die erfindungsgemäß hergestellten einzelionenleitenden Lithium-Polyelektrolyte und/oder erfindungsgemäßen einzelionenleitenden Lithium-Polyelektrolyte ohne weitere Zusätze zum Elektrolyten eingesetzt werden beziehungsweise auf weitere Zusätze zum Elektrolyten verzichtet werden. Abhängig von den gewünschten Anforderungen, können aber auch die erfindungsgemäß hergestellten einzelionenleitenden Lithium-Polyelektrolyte und/oder erfindungsgemäßen einzelionenleitenden Lithium-Polyelektrolyte zum Beispiel in Kombination mit mindestens einem anorganischen Lithium-Einzelionenleiter und/oder mit mindestens einer gelbildenden und/oder lithiumionenleitfähigen Flüssigkeit beziehungsweise Lösungsmittel, beispielsweise mindestens einem niedermolekularen Carbonat, wie Propylencarbonat und/oder Dimethylcarbonat, beispielsweise zur Erhöhung der Lithiumionenmobilität im System und damit der Lithiumionenleitfähigkeit, und/oder mit mindestens einem Lithium-Leitsalz, beispielsweise Lithiumbis¬(trifluormethan¬sulfonyl)imid (LiTFSI), eingesetzt werden beziehungsweise diese umfassen. Durch ein Lithium-Leitsalz kann zwar die Überführungszahl des Systems sinken, durch lediglich eine geringe Zugaben von Lithium-Leitsalz kann jedoch die Überführungszahl bei > 0,7 gehalten werden, wobei jedoch gleichzeitig - zum Beispiel aufgrund von weichmachenden Eigenschaften - die Grund-Mobilität aller Kationen erhöht und insbesondere auch Anzahl der Lithiumionen pro Volumen erhöht werden kann, wodurch je nach Polymer die Gesamttransporteigenschaften verbessert und damit die Leistungsfähigkeit einer damit ausgestatteten Zelle verbessert werden kann.

Die erfindungsgemäß hergestellten nicht Lithium einzelionenleitenden Polymerelektrolyte und/oder die erfindungsgemäßen nicht Lithium einzelionenleitenden Polymerelektrolyte können insbesondere in Kombination mit mindestens einem einzelionenleitenden Lithium-Polyelektrolyten und/oder mit mindestens einem Lithium-Leitsalz, wie Lithiumbis¬(trifluormethan¬sulfonyl)imid (LiTFSI), und/oder mit mindestens einem anorganischen Lithium-Einzelionenleiter eingesetzt werden beziehungsweise diese umfassen. Abhängig von den gewünschten Anforderungen, können auch zu diesen zum Beispiel mindestens eine gelbildende und/oder lithiumionenleitfähige Flüssigkeit beziehungsweise Lösungsmittel, beispielsweise mindestens ein niedermolekulares Carbonat, wie Propylencarbonat und/oder Dimethylcarbonat, beispielsweise zur Erhöhung der Lithiumionenmobilität im System und damit der Lithiumionenleitfähigkeit, zugegeben werden.

Die erfindungsgemäße Lithium-Zelle und/oder Kathode und/oder Schutzschicht und/oder Anode und/oder der erfindungsgemäße Separator kann insbesondere in einer Lithium-Batterie, beispielsweise einer Lithium-Ionen-Batterie und/oder Lithium-Metall-Batterie, beispielsweise für ein Fahrzeug, zum Beispiel ein Elektro- und/oder Hybridfahrzeug, eingesetzt werden.

Hinsichtlich weiterer technischer Merkmale und Vorteile der erfindungsgemäßen Zelle, Kathode, Anode und Schutzschicht und des erfindungsgemäßen Separators wird hiermit explizit auf die Erläuterungen im Zusammenhang mit dem erfindungsgemäßen Verfahren und den erfindungsgemäßen Polymerelektrolyten, insbesondere einzelionenleitenden Polyelektrolyten, sowie auf die Figuren, die Figurenbeschreibung und die Ausführungsbeispiele verwiesen.

### Zeichnungen und Ausführungsbeispiele

Weitere Vorteile und vorteilhafte Ausgestaltungen der erfindungsgemäßen Gegenstände werden durch die Zeichnungen und Ausführungsbeispiele veranschaulicht und in der nachfolgenden Beschreibung erläutert. Dabei ist zu beachten, dass die Zeichnungen und Ausführungsbeispiele nur beschreibenden Charakter haben und nicht dazu gedacht sind, die Erfindung in irgendeiner Form einzuschränken. Es zeigen
- Fig. 1: einen schematischen Darstellung zur Veranschaulichung eines einzelionenleitenden Lithium-Polyelektrolyten mit kovalent gebundenen anionischen Lithium-Trifluorboratgruppen und mobilen Lithiumionen; und
- Fig. 2: ein Schema zur Veranschaulichung eines Baukastenprinzips zur Synthese unterschiedlich strukturierter Polymerelektrolyte, insbesondere einzelionenleitender Lithium-Polyelektrolyte, gemäß verschiedener Ausführungsformen des erfindungsgemäßen Verfahrens.

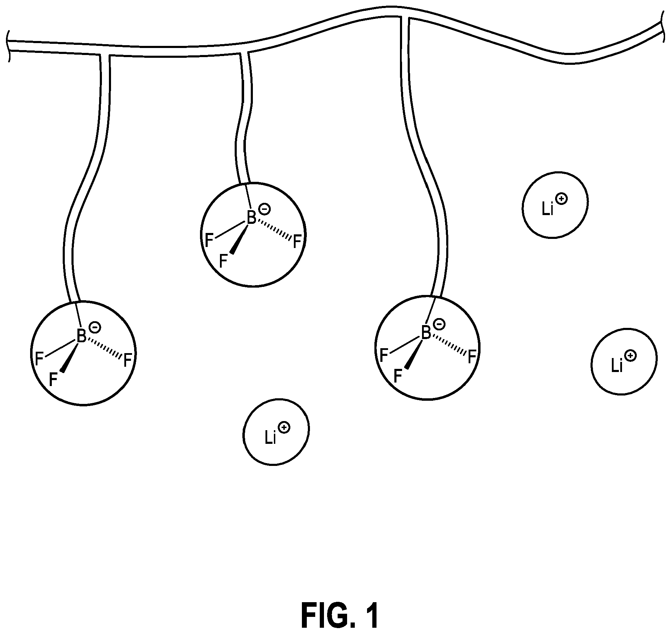

Figur 1 illustriert schematisch einen, insbesondere durch ein erfindungsgemäßes Verfahren erhältlichen, einzelionenleitenden Lithium-Polyelektrolyten mit Lithium-Trifluorboratgruppen. Figur 1 veranschaulicht, dass dabei die anionischen Trifluorboratgruppen (-BF₃⁻) fest, insbesondere kovalent, mit einem Polymerrücken des einzelionenleitenden Lithium-Polyelektrolyten verbunden und auf diese Weise immobilisiert sind. So sind lediglich die Lithiumkationen (Li⁺) mobil und statten auf diese Weise das Polymer mit Lithium einzelionenleitenden Eigenschaften aus.

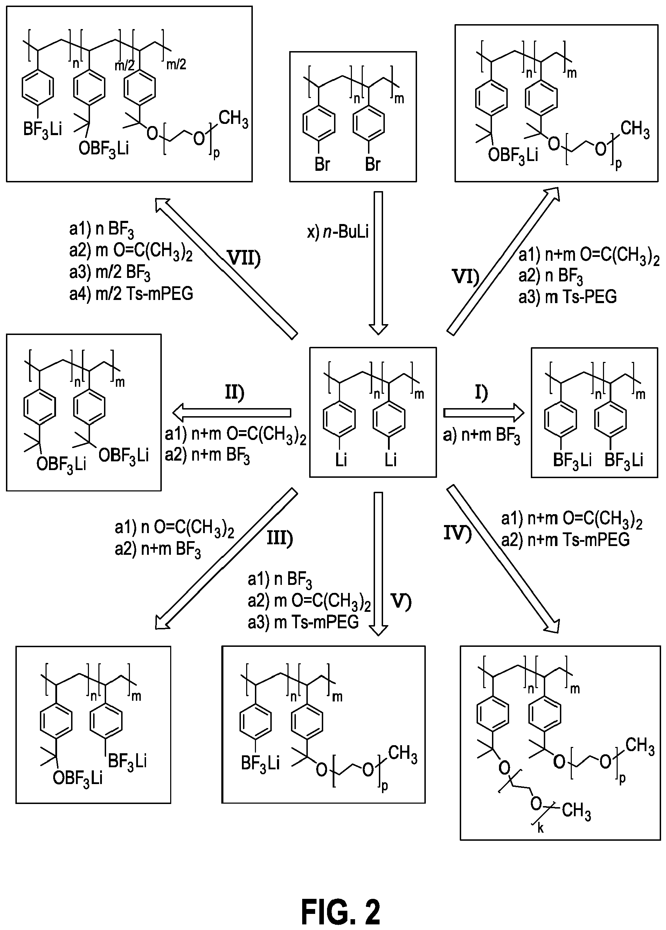

Figur 2 zeigt ein Schema zur Veranschaulichung eines Baukastenprinzips zur Synthese unterschiedlich strukturierter Polymerelektrolyte, insbesondere einzelionenleitender Lithium-Polyelektrolyte, gemäß verschiedener Ausführungsformen des erfindungsgemäßen Verfahrens.

Figur 2 veranschaulicht dabei insbesondere, dass das Grundkonzept des erfindungsgemäßen Herstellungsverfahrens so konzipiert ist, dass durch simple Variationen von Reihenfolge und Verhältnissen gleicher Reaktionskomponenten beispielsweise der Gehalt an einzelionenleitenden Lithiumionen und/oder sonstige physikalische Eigenschaften eingestellt und insbesondere auf einfache und schnelle Weise eine Reihe von verschiedenen Polymeren zugänglich gemacht werden kann. In Figur 2 werden insbesondere Strukturierungsmöglichkeit und/oder Modifizierungsvarianten anhand von Polystyrol-Polymersystemen erläutert.

Im Rahmen der in Figur 2 veranschaulichten Ausführungsformen des erfindungsgemäßen Verfahrens wird ein lithiiertes Polymer, insbesondere lithiiertes Polystyrol, in einem oder mehreren Verfahrensschritten zumindest teilweise mit Bortrifluorid (BF₃) und/oder mit Aceton (O=C(CH₃)₂) und/oder mit methylterminiertem Polyethylenglycol-Tosylat (Ts-PEG) der chemischen Formel: 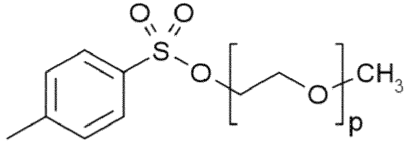 umgesetzt. Das Bortrifluorid (BF₃) kann dabei insbesondere als Bortrifluorid-Etherat eingesetzt werden.

Figur 1 veranschaulicht, dass das lithiierte Polystyrol zunächst in einem Verfahrensschritt x) durch Umsetzung eines Polybromstyrols, insbesondere von p-Bromstryrol, mit *n*-Butyllithium hergestellt werden kann.

Das lithiierte Polystyrol kann dann in verschiedenen Varianten mit Bortrifluorid (BF₃) und/oder Aceton (O=C(CH₃)₂) und/oder methylterminiertem Polyethylenglycol-Tosylat (Ts-PEG) umgesetzt werden.

In der Verfahrensvariante I) wird das lithiierte Polystyrol in einem Verfahrensschritt a) vollständig (n+m) mit Bortrifluorid (BF₃) umgesetzt. Dabei wird ein einzelionenleitender Lithium-Polyelektrolyt mit, insbesondere einfachen, Lithium-Trifluorboratgruppen ausgebildet.

In der Verfahrensvariante II) wird das lithiierte Polystyrol zunächst in einem Verfahrensschritt a₁) vollständig (n+m) mit Aceton (O=C(CH₃)₂) und dann in einem Verfahrensschritt a₂) vollständig (n+m) mit Bortrifluorid (BF₃) umgesetzt. Dabei wird ein einzelionenleitender Lithium-Polyelektrolyt mit Lithium-Trifluorborat-Alkylenoxidgruppen, insbesondere Lithium-Trifluorborat-Methylenoxidgruppen, ausgebildet.

In der Verfahrensvariante III) wird das lithiierte Polystyrol zunächst in einem Verfahrensschritt a₁) teilweise (n) mit Aceton (O=C(CH₃)₂) und dann in einem Verfahrensschritt a₂) vollständig (n+m) mit Bortrifluorid (BF₃) umgesetzt. Dabei wird ein einzelionenleitender Lithium-Polyelektrolyt ausgebildet, welcher sowohl Lithium-Trifluorborat-Alkylenoxidgruppen, insbesondere Lithium-Trifluorborat-Methylenoxidgruppen, als auch, insbesondere einfache, Lithium-Trifluorboratgruppen aufweist.

In der Verfahrensvariante IV) wird das lithiierte Polystyrol zunächst in einem Verfahrensschritt a₁) vollständig (n+m) mit Aceton (O=C(CH₃)₂) und dann in einem Verfahrensschritt a₂) vollständig (n+m) mit methylterminiertem Polyethylenglycol-Tosylat (Ts-PEG) umgesetzt. Dabei wird ein, insbesondere einfacher beziehungsweise nicht Lithium einzelionenleitender, Polymerelektrolyt ausgebildet, welcher mit methylterminiertem Polyethylenglycol-substituierte Alkylenoxidgruppen, insbesondere Methylenoxidgruppen, aufweist.

In der Verfahrensvariante V) wird das lithiierte Polystyrol zunächst in einem Verfahrensschritt a₁) teilweise (n) mit Bortrifluorid (BF₃), dann in einem Verfahrensschritt a₂) teilweise (m) mit Aceton (O=C(CH₃)₂) und dann in einem Verfahrensschritt a₃) teilweise (m) mit methylterminiertem Polyethylenglycol-Tosylat (Ts-PEG) umgesetzt. Dabei wird ein einzelionenleitender Lithium-Polyelektrolyt ausgebildet, welcher, insbesondere einfache, Lithium-Trifluorboratgruppen und mit methylterminiertem Polyethylenglycol-substituierte Alkylenoxidgruppen, insbesondere Methylenoxidgruppen, aufweist.

In der Verfahrensvariante VI) wird das lithiierte Polystyrol zunächst in einem Verfahrensschritt a₁) vollständig (n+,m) mit Aceton (O=C(CH₃)₂), dann in einem Verfahrensschritt a₂) teilweise (n) mit Bortrifluorid (BF₃) und dann in einem Verfahrensschritt a₃) teilweise (m) mit methylterminiertem Polyethylenglycol-Tosylat (Ts-PEG) umgesetzt. Dabei wird ein einzelionenleitender Lithium-Polyelektrolyt ausgebildet, welcher Lithium-Trifluorborat-Alkylenoxidgruppen, insbesondere Lithium-Trifluorborat-Methylenoxidgruppen, und mit methylterminiertem Polyethylenglycol-substituierte Alkylenoxidgruppen, insbesondere Methylenoxidgruppen, aufweist.

In der Verfahrensvariante VII) wird das lithiierte Polystyrol zunächst in einem Verfahrensschritt a₁) teilweise (n) mit Bortrifluorid (BF₃) und dann in einem Verfahrensschritt a₂) teilweise (m) mit Aceton (O=C(CH₃)₂) umgesetzt. Dann wird ein Teil der in Verfahrenschritt a₂) bereits mit Aceton umgesetzten Komponente (m/2) in einem Verfahrensschritt a₃) mit Bortrifluorid (BF₃) umgesetzt. Der übrige Teil der in Verfahrenschritt a₂) bereits mit Aceton umgesetzten Komponente (m/2) wird dann in einem Verfahrensschritt a₄) mit methylterminiertem Polyethylenglycol-Tosylat (Ts-PEG) umgesetzt. Dabei wird ein einzelionenleitender Lithium-Polyelektrolyt ausgebildet, welcher sowohl, insbesondere einfache, Lithium-Trifluorboratgruppen als auch Lithium-Trifluorborat-Alkylenoxidgruppen, insbesondere Lithium-Trifluorborat-Methylenoxidgruppen, als auch mit methylterminiertem Polyethylenglycol-substituierte Alkylenoxidgruppen, insbesondere Methylenoxidgruppen, aufweist.

Ausführungsbeispiel: Allgemeine Synthese von Polymerelektrolyten, insbesondere einzelionenleitenden Polyelektrolyten, beispielsweise auf Basis von Polystyrol und/oder Polyethylenoxid:
Ein Ausgangspolymer mit einer Halogengruppe und/oder Hydroxygruppe, beispielsweise Polybromstyrol und/oder Bromphenyl-substituiertes Polyethylenoxid, welches zum Beispiel durch Umsetzung von Bromphenylepoxid, insbesondere in Form einer Lösung in einem geeigneten Lösungsmittel, mit einer Base, wie Lithiumdiisopropylamid (LDA), erhältlich ist, wird in einem geeigneten Lösungsmittel, wie Tetrahydrofuran (THF), vollständig gelöst. Dann wird die Lösung, beispielsweise auf -78 °C, gekühlt. Anschließend wird zu der Lösung ein Alkyllithium, beispielsweise *n*-Butyllithium, zugegeben, beispielsweise zugetropft. Dabei kann die Menge an dem Alkyllithium zum Beispiel zu den Halogengruppen und/oder Hydroxygruppen, beispielsweise Bromgruppen und/oder Hydroxygruppen, des Ausgangspolymers äquivalent sein. Nach Verstreichen einer gewissen Reaktionszeit, beispielsweise von etwa 10 Minuten, wird mindestens ein Bortrihalogenid, beispielsweise Bortrifluorid, insbesondere in Form eines Etherats, zum Beispiel Bortrifluorid-Etherat, und/oder mindestens eine Carbonylverbindung, beispielsweise Aceton, und/oder mindestens ein lithiumionenleitfähiger Substituent mit einer nukleofugen Abgangsgruppe, beispielsweise Polyethylenglycol-Tosylat (Ts-PEG), zugegeben. Dabei kann die Menge an dem mindestens einen Bortrihalogenid, beispielsweise Bortrifluorid, und/oder an der mindestens einen Carbonylverbindung, beispielsweise Aceton, und/oder an dem mindestens einen lithiumionenleitfähigen Substituenten mit einer nukleofugen Abgangsgruppe, beispielsweise Polyethylenglycol-Tosylat (Ts-PEG), insbesondere in Summe, einer äquivalenten Menge, insbesondere bezogen auf die ursprünglichen Halogengruppen und/oder Hydroxygruppen, entsprechen. Nach Verstreichen einer gewissen Reaktionszeit kann dann - wie im Zusammenhang mit Figur 2 erläutert - eine andere Verbindung zugegeben werden, welche zum Beispiel mindestens eine Carbonylverbindung, beispielsweise Aceton, und/oder mindestens ein Bortrihalogenid, beispielsweise Bortrifluorid, und/oder mindestens ein lithiumionenleitfähiger Substituent mit einer nukleofugen Abgangsgruppe, beispielsweise Polyethylenglycol-Tosylat (Ts-PEG), sein kann. Schließlich kann das Lösungsmittel, beispielsweise im Vakuum, entfernt werden.

## Patentansprüche

1. Verfahren zur Herstellung eines Polymerelektrolyten, insbesondere zur Herstellung eines einzelionenleitenden Lithium-Polyelektrolyten, in dem ein lithiiertes Polymer zumindest teilweise mit mindestens einer elektrophilen Verbindung umgesetzt wird.

2. Verfahren nach Anspruch 1, wobei das lithiierte Polymer zumindest teilweise mit mindestens einem Bortrihalogenid und/oder zumindest teilweise mit mindestens einer Carbonylverbindung und/oder zumindest teilweise mit mindestens einem lithiumionenleitfähigen Substituenten mit einer nukleofugen Abgangsgruppe umgesetzt wird.

3. Verfahren nach Anspruch 2,
wobei das mindestens eine Bortrihalogenid Bortrifluorid ist, und/oder wobei die mindestens eine Carbonylverbindung Aceton ist, und/oder wobei der mindestens eine lithiumionenleitfähige Substituent mit einer nukleofugen Abgangsgruppe ein Oligo- oder Polyalkylenoxid-Tosylat ist.

4. Verfahren nach Anspruch 2 oder 3, wobei das lithiierte Polymer zumindest teilweise mit der mindestens einen Carbonylverbindung und dann zumindest teilweise mit dem mindestens einen Bortrihalogenid, insbesondere Bortrifluorid, und/oder dem mindestens einen lithiumionenleitfähigen Substituenten mit einer nukleofugen Abgangsgruppe umgesetzt wird.

5. Verfahren nach einem der Ansprüche 1 bis 4, wobei das Verfahren zwei oder mehr Verfahrensschritte umfasst, in denen das lithiierte Polymer zumindest teilweise mit mindestens zwei oder mehr elektrophilen Verbindungen umgesetzt wird.

6. Verfahren nach einem der Ansprüche 1 bis 5, wobei das lithiierte Polymer in einem Verfahrensschritt a₁) zumindest teilweise mit mindestens einer ersten elektrophilen Verbindung, insbesondere mit mindestens einer Carbonylverbindung oder mit mindestens einem Bortrihalogenid oder mit mindestens einem lithiumionenleitenden Substituenten mit einer nukleofugen Abgangsgruppe, und in einem Verfahrensschritt a₂) zumindest teilweise mit mindestens einer zweiten elektrophilen Verbindung, insbesondere mit mindestens einem Bortrihalogenid beziehungsweise mit mindestens einem lithiumionenleitenden Substituenten mit einer nukleofugen Abgangsgruppe beziehungsweise mit mindestens einer Carbonylverbindung, umgesetzt wird.

7. Verfahren nach einem der Ansprüche 1 bis 6, wobei das Polymer mit mindestens einer Halogengruppe und/oder Hydroxygruppe und/oder das lithiierte Polymer ein Polystyrol und/oder ein Phenyl-substituiertes Polyalkylenoxid und/oder ein Polyvinylalkohol ist.

8. Verfahren nach einem der Ansprüche 1 bis 7,
wobei das Polymer mit mindestens einer Halogengruppe und/oder Hydroxygruppe und/oder das lithiierte Polymer mittels Copolymerisation, insbesondere Block-Copolymerisation, von mindestens einem Monomer und/oder Oligomer und/oder Polymer mit mindestens einer Halogengruppe und/oder Hydroxygruppe und/oder mindestens einem lithiiertes Monomer und/oder Oligomer und/oder Polymer und/oder mindestens einem Monomer und/oder Oligomer und/oder Polymer, welches mit mindestens einer aus einer elektrophilen Verbindung ausgebildeten Gruppe substituiert ist, mit mindestens einem weiteren Monomer und/oder Oligomer und/oder Polymer hergestellt wird, und/oder
wobei das mit der mindestens einen elektrophilen Verbindung zumindest teilweise umgesetzte Polymer und/oder das lithiierte Polymer und/oder das Polymer mit mindestens einer Halogengruppe und/oder Hydroxygruppe mit mindestens einem weiteren Polymer zu einer Polymermischung gemischt wird.

9. Polymerelektrolyt, insbesondere einzelionenleitender Lithium-Polyelektrolyt, umfassend mindestens eine Lithium-Trihalogenboratgruppe und/oder mindestens eine Lithium-Alkanolatgruppe und/oder mindestens eine Alkylenoxidgruppe, insbesondere Methylenoxidgruppe.

10. Polymerelektrolyt nach Anspruch 9, wobei der Polymerelektrolyt mindestens eine Lithium-Trifluorboratgruppe und/oder mindestens eine Lithium-Trifluorborat-Alkylenoxidgruppe, insbesondere Lithium-Trifluorborat-Methylenoxidgruppe, und/oder mindestens eine Lithium-Trifluorborat-Oxid-Gruppe und/oder mindestens eine zweifach alkylsubstituierte Lithium-Alkanolatgruppe, insbesondere Lithium-Methanolatgruppe, und/oder mindestens eine zweifach alkylsubstituierte Alkylenoxidgruppe, insbesondere Methylenoxidgruppe, umfasst.

11. Polymerelektrolyt nach Anspruch 9 oder 10, wobei der Polymerelektrolyt mindestens eine, mit einem lithiumionenleitfähigen Substituenten substituierte Alkylenoxidgruppe, insbesondere Methylenoxidgruppe, umfasst, insbesondere wobei der Polymerelektrolyt mindestens eine, mit einem lithiumionenleitfähigen Substituenten substituierte Alkylenoxidgruppe, insbesondere Methylenoxidgruppe, umfasst, deren lithiumionenleitfähiger Substituent mindestens eine Carbonsäureestergruppe, insbesondere mindestens eine acyclische oder cyclische Carbonatgruppe und/oder Estergruppe und/oder Lactongruppe, und/oder mindestens eine Alkylenoxidgruppe, insbesondere mindestens eine Oligo- oder Polyalkylenoxidgruppe und/oder mindestens eine Polysiloxangruppe umfasst.

12. Polymerelektrolyt nach einem der Ansprüche 9 bis 11, wobei der Polymerelektrolyt mindestens eine Wiederholungseinheit der allgemeinen chemischen Formel: 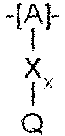 umfasst,
wobei -[A]- für eine Polymerrücken bildende Einheit steht,
wobei X für einen an den Polymerrücken -[A]- gebundenen Spacer steht,
wobei x für die Anzahl des Spacers X steht und 1 oder 0 ist,
wobei Q für mindestens eine Lithium-Trihalogenboratgruppe, insbesondere Lithium-Trifluorboratgruppe, und/oder mindestens eine Lithium-Trihalogenborat-Alkylenoxidgruppe, insbesondere Lithium-Trihalogenborat-Methylenoxidgruppe, beispielsweise Lithium-Trifluorborat-Alkylenoxidgruppe, insbesondere Lithium-Trifluorborat-Methylenoxidgruppe, und/oder mindestens eine Lithium-Alkanolatgruppe und/oder mindestens eine, mit einem lithiumionenleitfähigen Substituenten substituierte Alkylenoxidgruppe, insbesondere Methylenoxidgruppe, steht.

13. Polymerelektrolyt nach Anspruch 12, wobei die Polymerrückenbildende Einheit -[A]- für 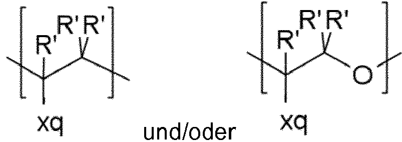 steht,
wobei xq für die Anbindungsstelle des Spacers X und/oder der Gruppe Q steht, und/oder
wobei der Spacer X für eine Phenylengruppe und/oder ein Sauerstoffatom steht und x gleich 1 ist.

14. Polymerelektrolyt nach einem der Ansprüche 9 bis 13, wobei der Polymerelektrolyt mindestens eine Wiederholungseinheit der allgemeinen chemischen Formel: 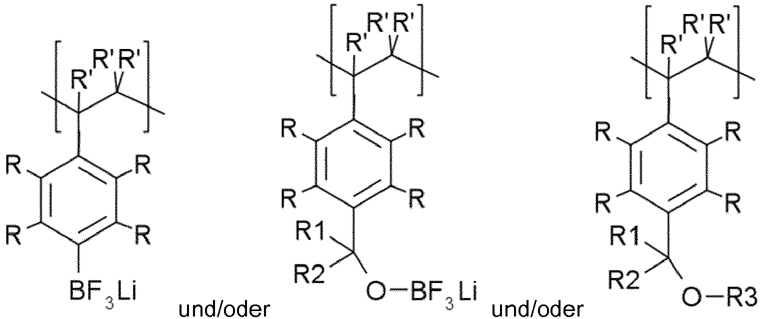 und/oder 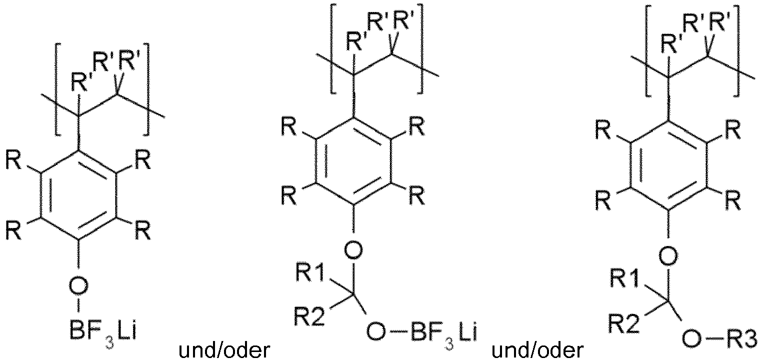 und/oder 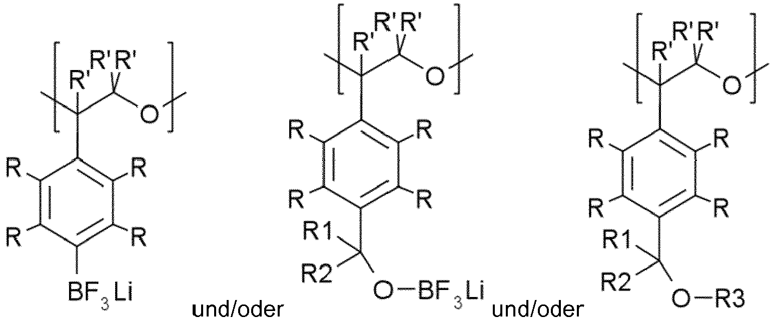 und/oder 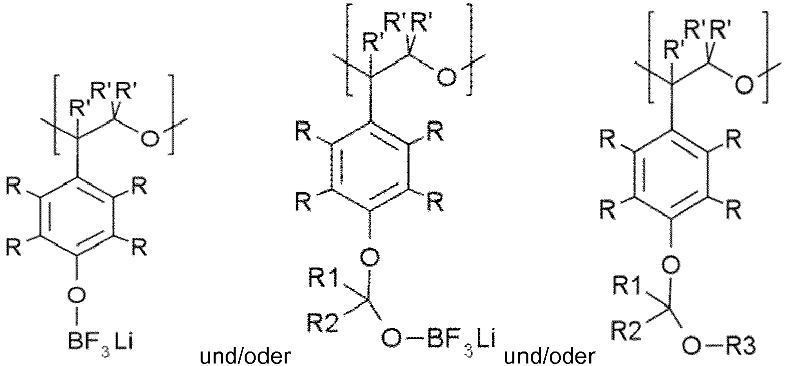 und/oder 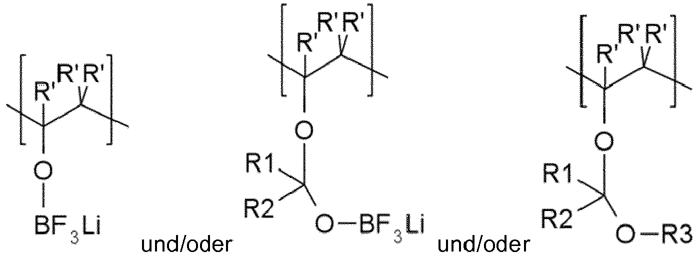 umfasst,
wobei R1 und R2 gleich oder unterschiedlich voneinander, insbesondere gleich, sind und für Wasserstoff oder eine Alkylgruppe, insbesondere für eine Methylgruppe, stehen,
wobei R3 mindestens eine Carbonsäureestergruppe, insbesondere mindestens eine acyclische oder cyclische Carbonatgruppe und/oder Estergruppe und/oder Lactongruppe, und/oder mindestens eine Alkylenoxidgruppe, insbesondere mindestens eine Oligo- oder Polyalkylenoxidgruppe, und/oder mindestens eine Polysiloxangruppe umfasst,
wobei die R' jeweils unabhängig voneinander für Wasserstoff oder Fluor oder einen weiteren lithiumionenleitfähigen Substituenten oder eine Alkylgruppe stehen, und/oder
wobei die R jeweils unabhängig voneinander für Wasserstoff oder Fluor oder einen weiteren lithiumionenleitfähigen Substituenten oder eine Alkylgruppe stehen.

15. Polymerelektrolyt nach einem der Ansprüche 9 bis 14, wobei der Polymerelektrolyt ein einzelionenleitender Lithium-Polyelektrolyt ist und mindestens eine Lithium einzelionenleitende Wiederholungseinheit der allgemeinen chemischen Formel: 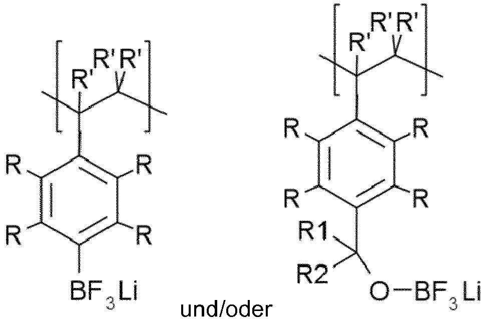 und/oder 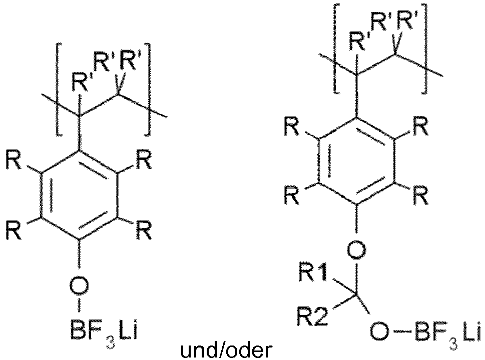 und/oder 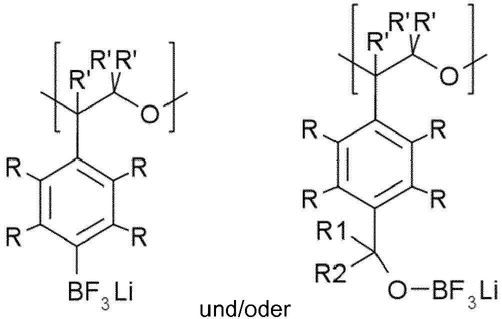 und/oder 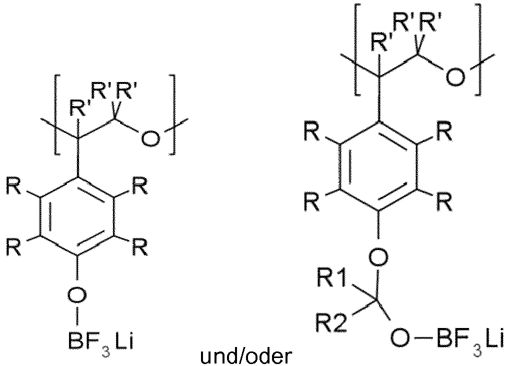 und/oder 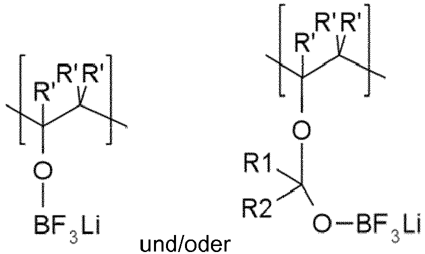 umfasst.

16. Polymerelektrolyt nach einem der Ansprüche 9 bis 15, wobei der einzelionenleitende Lithium-Polyelektrolyt mindestens eine lithiumionenleitfähige Wiederholungseinheit der allgemeinen chemischen Formel: 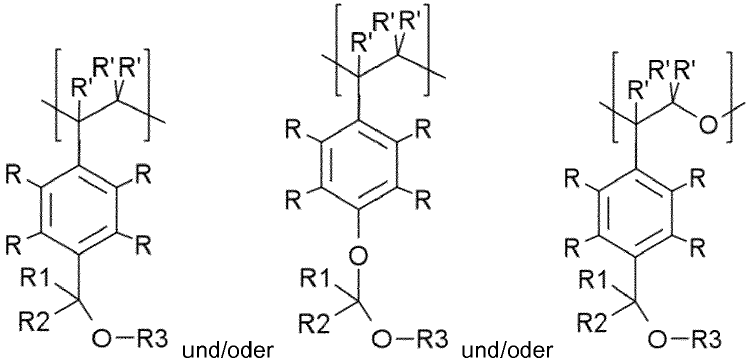 und/oder 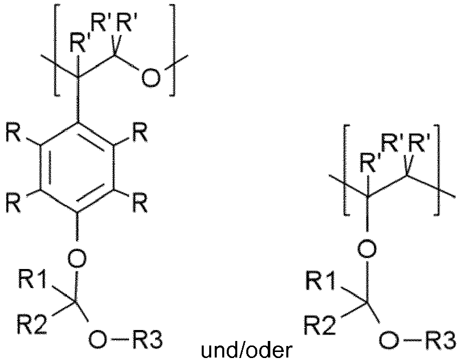 umfasst.

17. Polymerelektrolyt nach einem der Ansprüche 9 bis 16, wobei der Polymerelektrolyt beziehungsweise der einzelionenleitende Lithium-Polyelektrolyt weiterhin mindestens eine mechanisch stabilisierende Wiederholungseinheit umfasst, insbesondere wobei die mindestens eine mechanisch stabilisierende Wiederholungseinheit eine Styrol-basierte Wiederholungseinheit ist.

18. Polymerelektrolyt nach einem der Ansprüche 9 bis 17, wobei der Polymerelektrolyt beziehungsweise der einzelionenleitende Lithium-Polyelektrolyt ein Copolymer umfasst oder ist, welches mindestens eine Lithium einzelionenleitende Wiederholungseinheit, insbesondere nach einem der Ansprüche 9 bis15, und mindestens eine lithiumionenleitfähige Wiederholungseinheit, insbesondere nach einem der Ansprüche 9 bis 14 oder 16, und/oder mindestens eine mechanisch stabilisierende Wiederholungseinheit, insbesondere mindestens eine Styrol-basierte Wiederholungseinheit, umfasst.

19. Polymerelektrolyt nach Anspruch 18, wobei das Copolymer ein Block-Copolymer ist, welches mindestens einen Lithium einzelionenleitenden Block aus mindestens einer Lithium einzelionenleitenden Wiederholungseinheit, insbesondere nach einem der Ansprüche 9 bis 15, und mindestens einen mechanisch stabilisierenden Block aus mindestens einer mechanisch stabilisierenden Wiederholungseinheit, insbesondere aus mindestens einer Styrol-basierten Wiederholungseinheit, umfasst, insbesondere wobei der Lithium einzelionenleitende Block weiterhin mindestens eine lithiumionenleitfähige Wiederholungseinheit, insbesondere nach einem der Ansprüche 9 bis 14 oder 16, umfasst und/oder wobei das Copolymer weiterhin einen lithiumionenleitfähigen Block aus mindestens einer lithiumionenleitfähigen Wiederholungseinheit, insbesondere nach einem der Ansprüche 9 bis 14 oder 16, umfasst.

20. Lithium-Zelle und/oder Kathode und/oder Separator und/oder Schutzschicht und/oder Anode für eine Lithium-Zelle, umfassend mindestens einen Polymerelektrolyten, insbesondere einzelionenleitenden Lithium-Polyelektrolyten, nach einem der Ansprüche 9 bis 19.
